# EUROPEAN PATENT APPLICATION

(11) **EP 4 521 764 A1**
(43) Date of publication of application: **12.03.2025**
(21) Application number: 24745612.2
(22) Date of filing: 08.07.2024
(51) Int. Cl.: H04N 23/667, H04N 23/63, H04N 23/62, H04N 23/57, H04N 23/61, H04N 23/90

(54) **METHOD FOR SUPPORTING IMAGE CAPTURING, AND ELECTRONIC DEVICE FOR SUPPORTING SAME**

(30) Priority: 07.07.2023 KR 20230088242; 29.08.2023 KR 20230113506 U
(71) Applicant: Samsung Electronics Co., Ltd, Suwon-si, Gyeonggi-do 16677 (KR)
(72) Inventor: CHUNG, Miyeoung, Suwon-si, Gyeonggi-do 16677 (KR); KIM, Sanggeon, Suwon-si, Gyeonggi-do 16677 (KR); KIM, Sooryuh, Suwon-si, Gyeonggi-do 16677 (KR); KIM, Heewoong, Suwon-si, Gyeonggi-do 16677 (KR); PARK, Jeongmin, Suwon-si, Gyeonggi-do 16677 (KR)
(74) Representative: HGF
(86) International application number: PCT/KR2024/009708
(87) International publication number: WO 2025/014231

(57) **Abstract**

Embodiments of the disclosure provide a method for supporting image capturing and an electronic device for supporting the same. The electronic device may include a first camera, a second camera disposed on an opposite surface to the first camera, a first display, a memory, and at least one processor. The at least one processor may obtain at least one first image from at least one of the first camera and the second camera. The at least one processor may analyze the at least one first image. The at least one processor may determine a designated shooting mode, based on analyzing the at least one first image. The at least one processor may display a graphic element on the first display, based on determining the designated shooting mode. The at least one processor may capture a second image by using a designated camera, the designated camera being one of the first camera or the second camera.

## Description

### [Technical Field]

Embodiments of the disclosure relate to a method for supporting image capturing and an electronic device for supporting the same.

### [Background Art]

With the advancement of digital technology, various types of electronic devices, such as a smartphone, a digital camera, and/or a wearable device, are widely used. In order to support and improve the functions of electronic devices, hardware and/or software of electronic devices is continuously being developed.

Users may capture an image by using an electronic device. For example, an electronic device may include at least one camera device, and may support a user in capturing an image through the at least one camera device. Recently, the use of an image capturing function using an electronic device has been increasing among users. For example, a user uses an image capturing function of an electronic device by using the portable electronic device without constraints of time and/or place (or space). Therefore, research and development is currently conducted on various functions (or services) to provide users with convenience and interest in image capturing in an electronic device.

The above information may be presented as related art for the purpose of assisting in understanding the disclosure. No assertion or decision is made as to whether any of the above might be applicable as prior art with regard to the disclosure.

### [Disclosure of Invention]

### [Technical Problem]

An embodiment of the disclosure is to provide a method for supporting capturing an image including a subject projected onto a reflector by using a camera of an electronic device, and an electronic device for supporting the same.

An embodiment of the disclosure is to provide a method for supporting automatically switching to a designated shooting mode, based on detecting a reflector, displaying a designated graphic element on a display of an electronic device projected onto the reflector in the designated shooting mode, and capturing an image including the graphic element on the display projected onto the reflector, and an electronic device for supporting the same.

The technical subjects pursued in the disclosure may not be limited to the above - mentioned technical subjects, and other technical subjects which are not mentioned may be clearly understood, through the following descriptions, by those skilled in the art to which the disclosure pertains.

### [Solution to Problem]

An electronic device according to an embodiment of the disclosure may include a first camera, a second camera disposed on an opposite surface to the first camera, a first display, at least one processor including a processing circuit, and a memory storing instructions. According to an embodiment, when executed by the at least one processor, the instructions may cause the electronic device to obtain at least one first image from at least one of the first camera and the second camera. According to an embodiment, when executed by the at least one processor, the instructions may cause the electronic device to analyze the at least one first image. According to an embodiment, when executed by the at least one processor, the instructions may cause the electronic device to determine a designated shooting mode, based on analyzing the at least one first image. According to an embodiment, when executed by the at least one processor, the instructions may cause the electronic device to display a graphic element on the first display, based on determining the designated shooting mode. According to an embodiment, when executed by the at least one processor, the instructions may cause the electronic device to capture a second image by using a designated camera, the designated camera being one of the first camera or the second camera.

An operating method of an electronic device according to an embodiment of the disclosure may include an operation of obtaining at least one first image from a first camera of the electronic device and a second camera of the electronic device. The operating method may include an operation of analyzing the at least one first image. The operating method may include an operation of determining a designated shooting mode, based on analyzing the at least one first image. The operating method may include an operation of displaying a graphic element on the first display of the electronic device, based on determining the designated shooting mode. The operating method may include an operation of capturing a second image by using a designated camera, the designated camera being one of the first camera or the second camera.

To achieve the foregoing aspects, various embodiments of the disclosure may include a computer-readable recording medium recording a program to cause a processor to execute the foregoing method.

According to an embodiment, a non-transitory computer-readable recording medium (or computer program product) storing one or more programs is described. According to an embodiment, the one or more programs may include instructions, when executed by a processor of an electronic device, to perform an operation of obtaining at least one first image from a first camera of the electronic device and a second camera of the electronic device, an operation of analyzing the at least one first image, an operation of determining a designated shooting mode, based on analysis of the at least one first image, an operation of displaying a graphic element on a first display of the electronic device, based on determination of the designated shooting mode, and an operation of capturing a second image by using a designated camera, the designated camera being one of the first camera or the second camera.

The additional scope of the applicability of the disclosure will become apparent from the detailed description below. However, various changes and modifications within the spirit and scope of the disclosure may be clearly understood by those skilled in the art, and thus specific embodiments, such as the detailed description and exemplary embodiments of the disclosure, should be understood as given as examples.

### [Advantageous Effects of Invention]

According to an electronic device, an operating method thereof, and a recording medium according to an embodiment of the disclosure, it is possible to provide a user with convenience and interest in image capturing in the electronic device. According to an embodiment, it is possible to provide a signature representing a user and/or context related to the user through an electronic device when capturing an image and to support capturing an image including the signature. According to an embodiment, it is possible to provide a new function for image capturing, thereby satisfying a user's needs for image capturing using an electronic device and providing a user with new user experience (UX). According to an embodiment, a display of an electronic device is controlled according to data or an object captured through a camera of the electronic device, thereby allowing the camera to further capture an image on the controlled display.

Various other effects understood directly or indirectly through the present document may be provided. Advantageous effects obtainable from the disclosure may not be limited to the above - mentioned effects, and other effects which are not mentioned may be clearly understood, through the following descriptions, by those skilled in the art to which the disclosure pertains.

### [Brief Description of Drawings]

With regard to the description of the drawings, the same or like reference signs may be used to designate the same or like elements.
FIG. 1 is a block diagram illustrating an example electronic device in a network environment according to various embodiments.
FIG. 2A is a perspective view of an electronic device in an unfolded state according to an embodiment of the disclosure;
FIG. 2B is a plan view illustrating the front surface of an electronic device in an unfolded state according to an embodiment of the disclosure;
FIG. 2C is a plan view illustrating the rear surface of an electronic device in an unfolded state according to an embodiment of the disclosure;
FIG. 3A is a perspective view of an electronic device in a folded state according to an embodiment of the disclosure;
FIG. 3B is a perspective view of an electronic device in an intermediate state according to an embodiment of the disclosure;
FIG. 4 illustrates an example of an electronic device according to an embodiment of the disclosure;
FIG. 5 illustrates an example of an operation of capturing an image by using an electronic device according to an embodiment of the disclosure;
FIG. 6 schematically illustrates the configuration of an electronic device according to an embodiment of the disclosure;
FIG. 7 is a flowchart illustrating an operating method of an electronic device according to an embodiment of the disclosure;
FIG. 8A and FIG. 8B illustrate an example of an operation in which an electronic device supports capturing an image according to an embodiment of the disclosure;
FIG. 9A, FIG. 9B, and FIG. 9C illustrate examples of various displays corresponding to the form factor of an electronic device according to an embodiment of the disclosure;
FIG. 10A, FIG. 10B, and FIG. 10C illustrate an example of an operation in which an electronic device supports capturing an image according to an embodiment of the disclosure;
FIG. 11 is a flowchart illustrating an operating method of an electronic device according to an embodiment of the disclosure;
FIG. 12 illustrates an example of an operation in which an electronic device provides designated identification information according to an embodiment of the disclosure;
FIG. 13 is a flowchart illustrating an operating method of an electronic device according to an embodiment of the disclosure;
FIG. 14 is a flowchart illustrating an operating method of an electronic device according to an embodiment of the disclosure;
FIG. 15A, FIG. 15B, FIG. 15C, FIG. 15D, and FIG. 15E illustrate examples of an operation in which an electronic device provides a graphic element and a preview according to an embodiment of the disclosure;
FIG. 16A, FIG. 16B, and FIG. 16C illustrate examples of an operation in which an electronic device provides a graphic element according to an embodiment of the disclosure;
FIG. 17 is a flowchart illustrating an operating method of an electronic device according to an embodiment of the disclosure;
FIG. 18A, FIG. 18B, FIG. 18C, and FIG. 18D illustrate examples of an operation in which an electronic device provides a preview according to an embodiment of the disclosure;
FIG. 19 is a flowchart illustrating an operating method of an electronic device according to an embodiment of the disclosure;
FIG. 20 is a flowchart illustrating an operating method of an electronic device according to an embodiment of the disclosure; and
FIG. 21 and FIG. 22 illustrate examples of an operation in which the electronic device executes a function, based on a graphic element according to an embodiment of the disclosure.

### [Mode for the Invention]

Hereinafter, embodiments of the disclosure will be described in detail with reference to the drawings so that those skilled in the art to which the disclosure pertains can easily implement the disclosure. However, the disclosure may be implemented in various forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

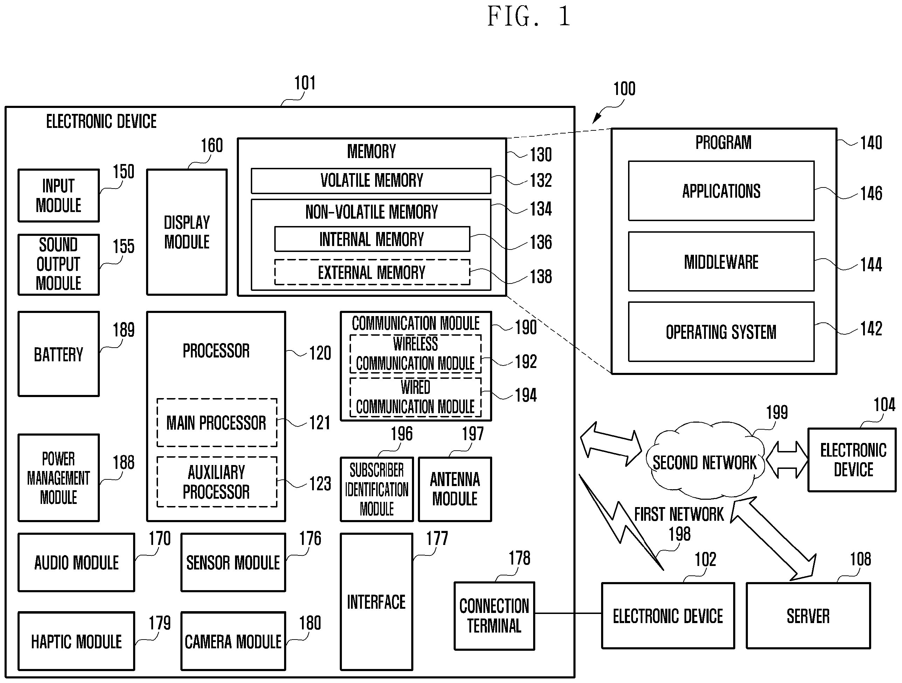

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

Before describing various embodiments of the disclosure, an electronic device 101 to which the embodiments of the disclosure are applicable is described.

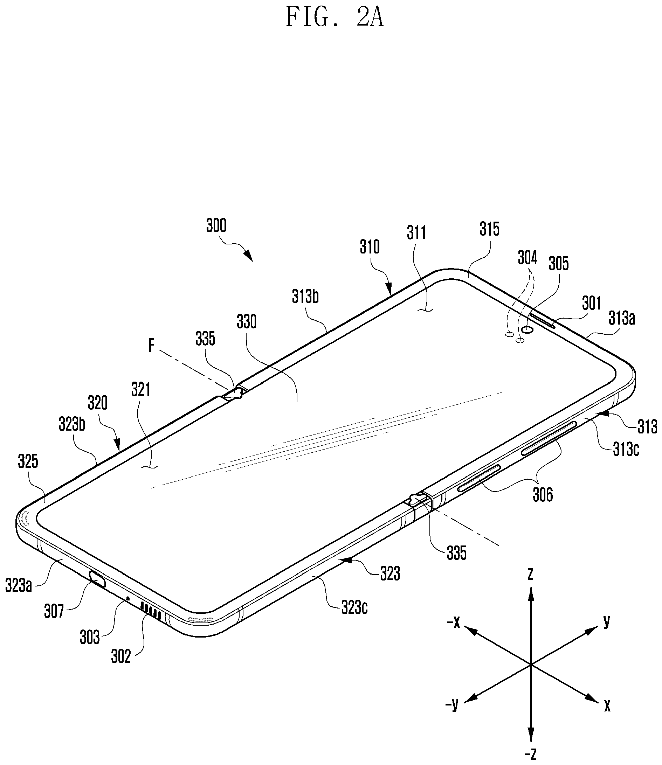

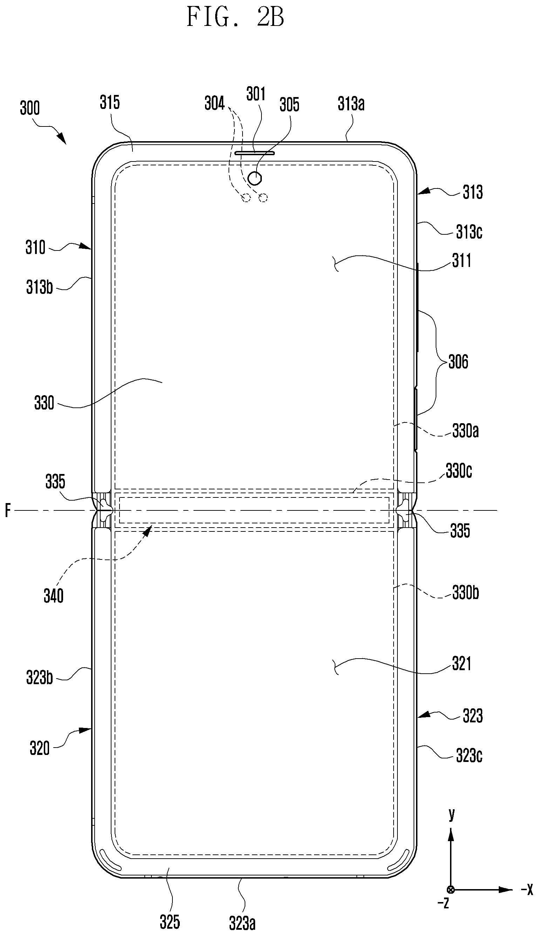

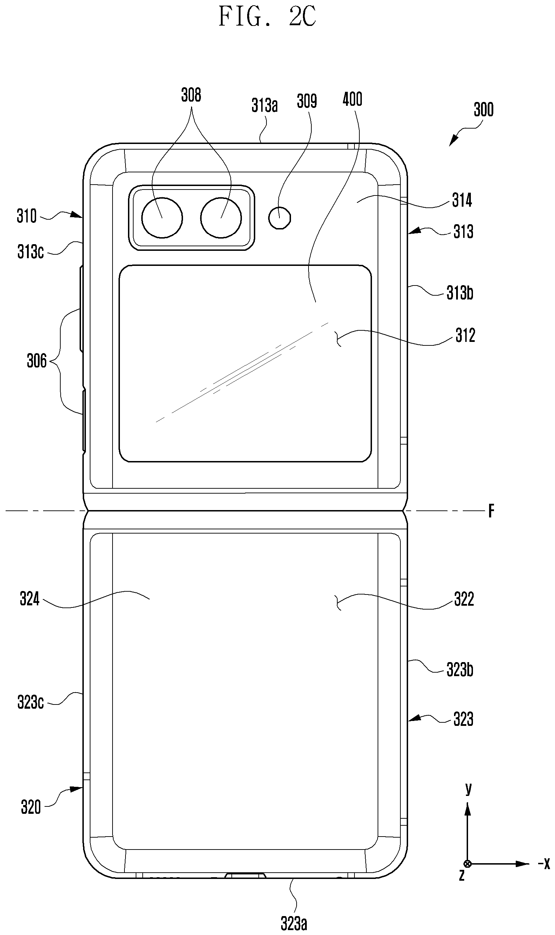

FIG. 2A is a perspective view of an electronic device in a flat state or unfolded state according to an embodiment of the disclosure. FIG. 2B is a plan view illustrating the front surface of an electronic device in the unfolded state according to an embodiment of the disclosure. FIG. 2C is a plan view illustrating the rear surface of an electronic device in the unfolded state according to an embodiment of the disclosure.

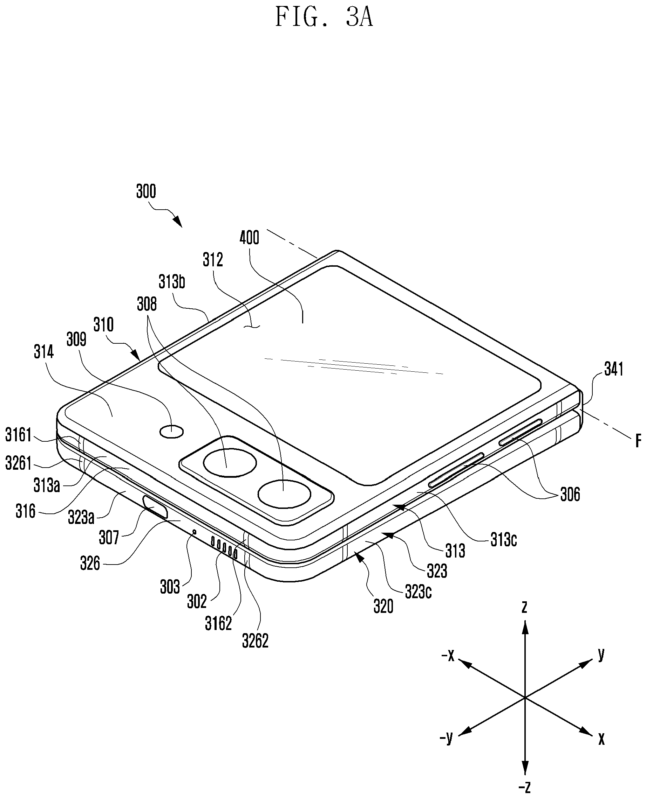

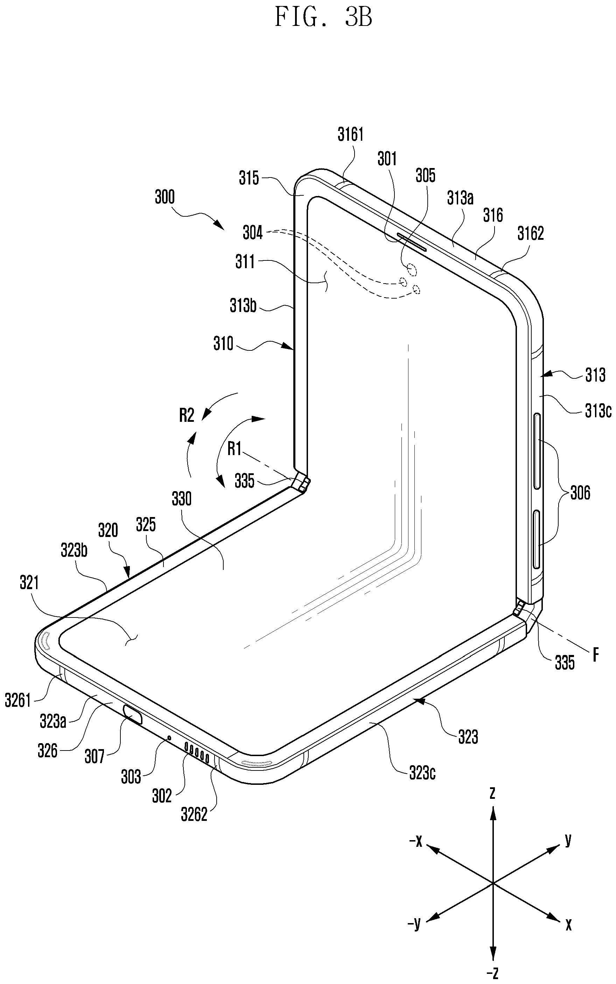

FIG. 3A is a perspective view of an electronic device in a folded state according to an embodiment of the disclosure. FIG. 3B is a perspective view of an electronic device in an intermediate state according to an embodiment of the disclosure.

Referring to FIG. 2A to FIG. 3B, the electronic device 300 (e.g., the electronic device 101 of FIG. 1) may include a pair of housings 310 and 320 (e.g., foldable housings) rotatably coupled with each other to be folded while facing each other with respect to a hinge structure (e.g., a hinge structure 340 of FIG. 2B) (e.g., a hinge device or hinge module). In an embodiment, the hinge structure 340 may be disposed in an x-axis direction or disposed in a y-axis direction. In an embodiment, at least two hinge structures 340 may be disposed to be folded in the same direction or in different directions. In an embodiment, the electronic device 300 may include a first display 330 (e.g., a main display) (e.g., a flexible display) disposed in an area formed by the pair of housings 310 and 320. In an embodiment, a first housing 310 and a second housing 320 may be disposed at both sides with respect to a folding axis (axis F), and may have shapes substantially symmetric with respect to the folding axis (axis F). In an embodiment, the angle or the distance between the first housing 310 and the second housing 320 may vary depending on whether the state of the electronic device 300 is the flat or unfolded state, the folded state, or the intermediate state.

According to an embodiment, the pair of housings 310 and 320 may include the first housing 310 (e.g., a first housing structure) coupled to the hinge structure 340 and the second housing 320 (e.g., a second housing structure) coupled to the hinge structure 340. In an embodiment, in the unfolded state, the first housing 310 may include a first surface 311 facing a first direction (e.g., a forward direction)(z-axis direction) and a second surface 312 opposite the first surface 311 and facing a second direction (e.g., a backward direction)(-z-axis direction). In an embodiment, in the unfolded state, the second housing 320 may include a third surface 321 facing the first direction (z-axis direction) and a fourth surface 322 facing the second direction (-z-axis direction). In an embodiment, the electronic device 300 may operate in a manner such that the first surface 311 of the first housing 310 and the third surface 321 of the second housing 320 face substantially the same first direction (z-axis direction) in the unfolded state and that the first surface 311 and the third surface 321 face each other in the folded state. In an embodiment, the electronic device 300 may operate in a manner such that the second surface 312 of the first housing 310 and the fourth surface 322 of the second housing 320 face substantially the same second direction (-z-axis direction) in the unfolded state and that the second surface 312 and the fourth surface 322 face opposite directions in the folded state. For example, in the folded state, the second surface 312 may face the first direction (z-axis direction), and the fourth surface 322 may face the second direction (-z-axis direction).

According to an embodiment, the first housing 310 may include a first side member 313 at least partially forming the exterior of the electronic device 300 and a first rear cover 314 coupled to the first side member 313 and forming at least part of the second surface 312 of the electronic device 300. In an embodiment, the first side member 313 may include a first side surface 313a, a second side surface 313b extending from one end of the first side surface 313a, and a third side surface 313c extending from the other end of the first side surface 313a. In an embodiment, the first side member 313 may be formed in a right-angled quadrilateral (e.g., square or rectangular) shape through the first side surface 313a, the second side surface 313b, and the third side surface 313c.

According to an embodiment, the second housing 320 may include a second side member 323 at least partially forming the exterior of the electronic device 300 and a second rear cover 324 coupled to the second side member 323 and forming at least part of the fourth surface 322 of the electronic device 300. In an embodiment, the second side member 323 may include a fourth side surface 323a, a fifth side surface 323b extending from one end of the fourth side surface 323a, and a sixth side surface 323c extending from the other end of the fourth side surface 323a. In an embodiment, the second side member 323 may be formed in a right-angled quadrilateral shape through the fourth side surface 323a, the fifth side surface 323b, and the sixth side surface 323c.

According to an embodiment, the pair of housings 310 and 320 are not limited to the illustrated form and coupling, and may be configured in other shapes or a combination and/or coupling of other components. For example, the first side member 313 may be formed integrally with the first rear cover 314, and the second side member 323 may be formed integrally with the second rear cover 324.

According to an embodiment, when the electronic device 300 is in the unfolded state, the second side surface 313b of the first side member 313 and the fifth side surface 323b of the second side member 323 may be connected to each other. In an embodiment, when the electronic device 300 is in the unfolded state, the third side surface 313c of the first side member 313 and the sixth side surface 323c of the second side member 323 may be connected to each other. In an embodiment, the electronic device 300 may be configured such that the sum of the length of the second side surface 313b and the length of the fifth side surface 323b is greater than the length of the first side surface 313a and/or the fourth side surface 323a in the unfolded state. Further, the electronic device 300 may be configured such that the sum of the length of the third side surface 313c and the length of the sixth side surface 323c is greater than the length of the first side surface 313a and/or the fourth side surface 323a.

According to an embodiment, the first side member 313 and/or the second side member 323 may be formed of metal, or may further include a polymer injected into a metal. In an embodiment, the first side member 313 and/or the second side member 323 may include at least one conductive portion 316 and/or 326 electrically segmented through at least one segment 3161 and 3162 and/or 3261 and 3262 formed of a polymer. In this case, the at least one conductive portion 316 and/or 326 may be electrically connected to a wireless communication circuit (e.g., the wireless communication module 192 of FIG. 1) included in the electronic device 300, thereby being used as an antenna operating in at least one designated band (e.g., about 400 MHz to about 6000 MHz).

According to an embodiment, the first rear cover 314 and/or the second rear cover 324 may be formed of at least one or a combination of at least two among, for example, coated or colored glass, ceramic, a polymer, or metal (e.g., aluminum, stainless steel (STS), or magnesium).

According to an embodiment, the first display 330 (e.g., the main display) may be disposed to extend from the first surface 311 of the first housing 310 to at least part of the third surface 321 of the second housing 320 via the hinge structure 340. For example, the first display 330 may include a first part 330a substantially corresponding to the first surface 311, a second part 330b corresponding to the third surface 321, and a third part 330c (e.g., a bendable area) connecting the first part 330a to the second part 330b and corresponding to the hinge structure 340.

In an embodiment, the electronic device 300 may include a first protective cover 315 (e.g., a first protective frame or a first decoration member) coupled along the edge of the first housing 310. In an embodiment, the electronic device 300 may include a second protective cover 325 (e.g., a second protective frame or a second decoration member) coupled along the edge of the second housing 320. In an embodiment, the first protective cover 315 and/or the second protective cover 325 may be formed of a metal or polymer material. In an embodiment, the first protective cover 315 and/or the second protective cover 325 may be used as decoration members.

In an embodiment, the first display 330 may be positioned such that the edge of the first part 330a is interposed between the first housing 310 and the first protective cover 315. In an embodiment, the first display 330 may be positioned such that the edge of the second part 330b is interposed between the second housing 320 and the second protective cover 325. In an embodiment, the first display 330 may be positioned such that the edge of the first display 330 corresponding to a protective cap 335, disposed in an area corresponding to the hinge structure 340, is protected through the protective cap. Accordingly, the edge of the first display 330 may be substantially protected from the outside.

In an embodiment, the electronic device 300 may include a hinge housing 341 (e.g., a hinge cover) disposed to support the hinge structure 340, be exposed outside when the electronic device 300 is in the folded state, and be moved into a first space (e.g., in the inner space of the first housing 310) and a second space (e.g., the inner space of the second housing 320) and thus be not seen from outside when the electronic device 300 is in the unfolded state. In an embodiment, the first display 330 may be disposed to extend from at least part of the second surface 312 to at least part of the fourth surface 322. In this case, the electronic device 300 may be folded such that the first display 330 is exposed outside (an out-folding method).

According to an embodiment, the electronic device 300 may include a second display 400 (e.g., a sub-display) disposed separately from the first display 330. In an embodiment, the second display 400 may be disposed to be at least partially exposed on the second surface 312 of the first housing 310, thereby displaying state information about the electronic device 300 in place of a display function of the first display 330 in the folded state. In an embodiment, the second display 400 may be disposed to be seen from outside through at least a partial area of the first rear cover 314. In an embodiment, the second display 400 may be disposed on the fourth surface 322 of the second housing 320. In this case, the second display 400 may be disposed to be seen from outside through at least a partial area of the second rear cover 324.

According to an embodiment, the electronic device 300 may include at least one of an input device 303 (e.g., a microphone) (e.g., the input module 150 of FIG. 1), sound output devices 301 and 302 (e.g., the sound output module 155 of FIG. 1), sensor modules 304 (e.g., the sensor module 176 of FIG. 1), camera devices 305 and 308 (e.g., the camera module 180 of FIG. 1), key input devices 306 (e.g., the input module 150 of FIG. 1), or a connector port 307 (e.g., the connection terminal 178 of FIG. 1). In the illustrated embodiment, the input device 303 (e.g., the microphone), the sound output devices 301 and 302, the sensor modules 304, the camera devices 305 and 308, the key input devices 306, or the connector port 307 may indicate a hole or a shape formed in the first housing 310 or the second housing 320, but may include a substantial electronic component (e.g., an input device, a sound output device, a sensor module, or a camera device) that is disposed in the electronic device 300 and operates through a hole or a shape.

According to an embodiment, the input device 303 may include at least one microphone 303 disposed in the second housing 320. In an embodiment, the input device 303 may include a plurality of microphones 303 disposed to sense the direction of a sound. In an embodiment, the plurality of microphones 303 may be disposed in appropriate positions in the first housing 310 and/or the second housing 320. In an embodiment, the sound output devices 301 and 302 may include speakers 301 and 302. In an embodiment, the speakers 301 and 302 may include a call receiver 301 disposed in the first housing 310 and a speaker 302 disposed in the second housing 320. In an embodiment, the input device 303, the sound output devices 301 and 302, and the connector port 307 may be disposed in a space provided in the first housing 310 and/or the second housing 320 of the electronic device 300, and may be exposed to an external environment through at least one hole formed in the first housing 310 and/or the second housing 320.

In an embodiment, at least one connector port 307 may be used to transmit or receive power and/or data to or from an external electronic device. In an embodiment, at least one connector port (e.g., an earphone jack hole) may accommodate a connector (e.g., an earphone jack) for transmitting or receiving an audio signal to or from an external electronic device. In an embodiment, a hole formed in the first housing 310 and/or the second housing 320 may be commonly used for the input device 303 and the sound output devices 301 and 302. In an embodiment, the sound output devices 301 and 302 may include a speaker (e.g., a piezo speaker) operating without the hole formed in the first housing 310 and/or the second housing 320.

According to an embodiment, the sensor modules 304 may generate an electrical signal or a data value corresponding to an operation state inside the electronic device 300 or an environmental state outside the electronic device 300. The sensor modules 304 may detect an external environment, for example, through the first surface 311 of the first housing 310. In an embodiment, the electronic device 300 may further include at least one sensor module disposed to detect an external environment through the second surface 312 of the first housing 310. In an embodiment, the sensor modules 304 (e.g., an illuminance sensor) may be disposed under the first display 330 to detect an external environment through the first display 330.

In an embodiment, the sensor modules 304 may include at least one of a gesture sensor, a gyro sensor, a barometric pressure sensor, a magnetic sensor, an acceleration sensor, a hall sensor, a grip sensor, a color sensor (e.g., a red, green, and blue (RGB) sensor), an infrared (IR) sensor, a biometric sensor, a temperature sensor, a humidity sensor, an illuminance sensor (or an ambient light sensor (ALS)), a proximity sensor, and/or an ultrasonic sensor.

According to an embodiment, the camera devices 305 and 308 may include a first camera device 305 (e.g., a front camera device) disposed on the first surface 311 of the first housing 310 and a second camera device 308 (e.g., a rear camera device) disposed on the second surface 312 of the first housing 310. The electronic device 300 may further include a flash 309 disposed near the second camera device 308. In an embodiment, the camera devices 305 and 308 may include one lens or a plurality of lenses, an image sensor, and/or an image signal processor (ISP). The flash 309 may include a luminous element, for example, a light-emitting diode (LED), an IR LED, a laser diode (LD), and/or a xenon lamp. In an embodiment, the camera devices 305 and 308 may be disposed such that at least two lenses (a wide-angle lens, an ultra-wide-angle lens, and/or a telephoto lens) and image sensors are positioned on one surface(e.g., the first surface 311, the second surface 312, the third surface 321, or the fourth surface 322) of the electronic device 300. In an embodiment, the camera devices 305 and 308 may also include time-of-flight (TOF) lenses and/or an image sensor.

According to an embodiment, the key input devices 306 (e.g., a key button) may be disposed on the third side surface 313c of the first side member 313 of the first housing 310. In an embodiment, the key input devices 306 may also be disposed on at least one side surface among the other side surfaces 313a and/or 313b of the first housing 310 and/or the side surfaces 323a, 323b, and 323c of the second housing 320. In an embodiment, the electronic device 300 may not include some or all of the key input devices 306, and a key input device 306 that is not included may be configured in a different form, such as a soft key, on the first display 330. In an embodiment, the key input devices 306 may also be configured using a pressure sensor included in the first display 330.

According to an embodiment, some camera devices (e.g., the first camera device 305) of the camera devices 305 and 308 and/or the sensor modules 304 may be disposed to be exposed through the first display 330. For example, the first camera device 305 and/or the sensor modules 304 may be disposed in the inner space of the electronic device 300 to be exposed to an external environment through an opening (e.g., a through-hole) at least partially formed in the first display 330. For example, some sensor modules 304 may also be disposed in the inner space of the electronic device300 to perform a function thereof without being visually exposed through the first display 330. For example, in this case, an area of the first display 330 facing the sensor modules 304 may omit an opening.

Referring to FIG. 3B, the electronic device 300 may operate to maintain the intermediate state through the hinge structure 340. In this case, the electronic device 300 may control the first display 330 to display different pieces of content in a display area corresponding to the first surface 311 and a display area corresponding to the third surface 321. In an embodiment, the electronic device 300 may operate substantially in the unfolded state (e.g., the unfolded state of FIG. 2A) and/or substantially in the folded state (e.g., the folded state of FIG. 3A) based on a variation angle (e.g., the angle between the first housing 310 and the second housing 320 in the intermediate state) through the hinge structure 340. For example, when provided with pressing force in an unfolding direction (R1 direction) in the intermediate state in which the electronic device 300 is unfolded at the variation angle, the electronic device 300 may operate to transition to the unfolded state (e.g., the unfolded state of FIG. 2A) through the hinge structure 340. For example, when provided with pressing force in a folding direction (R2 direction) in the intermediate state in which the electronic device 300 is unfolded at the variation angle, the electronic device 300 may operate to transition to the folded state (e.g., the folded state of FIG. 3A) through the hinge structure 340. In an embodiment, the electronic device 300 may operate to maintain the unfolded state (not shown) at various angles through the hinge structure 340.

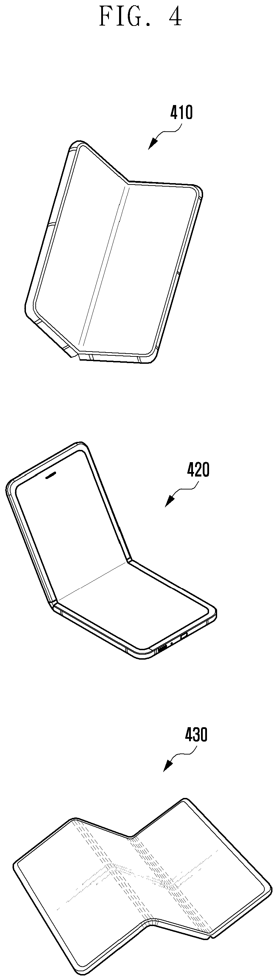

FIG. 4 illustrates an example of an electronic device according to an embodiment of the disclosure.

According to an embodiment, FIG. 4 may show various examples of form factors of the electronic device (e.g., the electronic device 101 of FIG. 1) according to various display types. According to an embodiment, as illustrated in FIG. 4, the electronic device 101 may be configured in various forms, and, various types of displays (e.g., the display module 160 of FIG. 1) may be provided depending on the configuration form of the electronic device 101.

Although the electronic device 101 according to an embodiment disclosed herein is described as an electronic device 101 having a foldable form factor (e.g., a foldable device 410, 420, or 430), the electronic device 101 and an operation thereof according to the embodiment are not limited thereto. For example, the electronic device 101 may have various form factors, such as a foldable type, a bar type, a plate type, a slidable type, and/or a foldable-slidable hybrid, and may operate thereby. For example, the illustrated electronic device 101 may be part of a foldable device, a bar-type or flat-type device, or a slidable device. In an embodiment, the electronic device 101 is capable of a folding and an unfolding operation, may have a folded state, an unfolded state, or an intermediate state, and may include various form factors in which cameras (e.g., at least two cameras (e.g., a first camera device 305 and a second camera device 308) disposed on different surfaces) and displays (e.g., at least two displays (e.g., a first display 330 and a second display 400) disposed on the different surfaces) are respectively disposed on different surfaces. In an embodiment, the electronic device 101 may include various form factors in which cameras (e.g., at least two cameras (e.g., a first camera device 305 and a second camera device 308) disposed on different surfaces) are respectively disposed on different surfaces and a display is disposed on one surface, such as a bar type (or plate type) and/or a slidable type.

In an embodiment, the unfolded state may refer to an opened state, an open state, or a flat (or even) state. In an embodiment, the unfolded state may refer to a state in which a first housing and a second housing are disposed side by side, and may refer to a state in which the electronic device 101 is completely unfolded. In an embodiment, in the unfolded state, the angle between the first housing and the second housing is about 180 degrees, and a first surface of the first housing and a second surface of the second housing may be disposed in the same direction (e.g., a first direction).

In an embodiment, the folded state may refer to a closed state or a close state. In an embodiment, the folded state may refer to a state in which the first housing and the second housing are disposed to face each other, and may refer to a state in which the electronic device 101 is completely folded. In an embodiment, in the folded state, the angle between the first housing and the second housing is a narrow angle (e.g., about 0 degrees to about 5 degrees), and the first surface of the first housing and the second surface of the second housing may face each other.

In an embodiment, the intermediate state may refer to a state in which the first housing and the second housing are disposed at a certain angle, in which the electronic device 101 may not be in the unfolded state or the folded state. In an embodiment, the intermediate state may refer to a state in which the first surface of the first housing and the second surface of the second housing form a certain angle (e.g., about 6 degrees to about 179 degrees).

According to an embodiment, the electronic device 101 (e.g., the foldable device 410, 420, or 430) may refer to an electronic device that is foldable such that two different areas of a display (e.g., the display module 160 of FIG. 1) substantially face each other or opposite directions. Generally, a user may fold the display (e.g., the display module 160 of FIG. 1) of the electronic device 101 (e.g., the foldable device 410, 420, or 430) such that the two different areas face each other or opposite directions when carrying the electronic device 101, and may unfold the display such that the two different areas form substantially a flat plate shape when actually using the electronic device 101.

According to an embodiment, the electronic device 101 (e.g., the foldable device 410, 420, or 430) may include a form factor (e.g., 410 or 420) including two display surfaces (e.g., a first display surface and a second display surface) based on one folding axis and a form factor (e.g., 430) including at least three display surfaces (e.g., a first display surface, a second display surface, and a third display surface) based on at least two folding axes. Various embodiments are not limited to these examples, which are for illustration, and the number of folding axes included in the electronic device 101 is not limited. According to an embodiment, in the electronic device 101, the display (e.g., the display module 160 of FIG. 1) may be folded or unfolded in various manners (e.g., in-folding, out-folding, or in/out-folding) depending on the configuration form. According to an embodiment, the electronic device 101 may include various foldable types, such as a vertically foldable type, a horizontally foldable type, a G foldable type, a Z foldable type, or a foldable-slidable hybrid.

According to an embodiment, the electronic device 101 may include a first display (e.g., a main display) (e.g., the display module 160 of FIG. 1) disposed on first and second surfaces, which are the front surface of the electronic device 101. The first display may be disposed entirely on the front surface (e.g., in the first direction of the electronic device 101). The first display may include a flexible display in which at least a partial area is transformable into a flat or curved surface. The first display may be folded left and right or up and down, based on a folding axis. The first display may include a first display area corresponding to the first surface or a second display area corresponding to the second surface.

According to an embodiment, the electronic device 101 may include a second display (e.g., a cover display or a sub-display) (e.g., the display module 160 of FIG. 1) disposed on at least part of the rear surface of the electronic device 101. The second display may be disposed on at least part of a third surface of the electronic device 101.

According to an embodiment, when the electronic device 101 is in the unfolded state, the first display may be turned on (or activated) and the second display may be turned off (or deactivated). When a user input (e.g., a touch or selection of a button) is not detected for a certain time (e.g., about 5 seconds, about 10 seconds, or about 1 minute) while the first display is turned on, the electronic device 101 may turn off the first display.

According to an embodiment, when a user input (e.g., a touch or selection of a button) is detected on the second display while the second display is turned off, the electronic device 101 may turn on the second display. According to an embodiment, the second display may be turned on based on a user input or a designated operation of the electronic device 101 when the electronic device 101 is in the unfolded state or the folded state.

According to an embodiment, when the electronic device 101 is in the folded state or the intermediate state, the first display may be turned off and the second display may be turned on. When a user input is not detected for a certain time while the second display is turned on, the electronic device 101 may turn off the second display. While the electronic device 101 is in the folded state or the intermediate state and the second display is turned off, when a button disposed (or mounted) on the electronic device 101 is selected, the electronic device 101 may turn on the second display. Alternatively, while the electronic device 101 is in the folded state or the intermediate state and the second display is turned off, when a user input is detected on the second display, the electronic device 101 may turn on the second display.

Although an embodiment of the disclosure shows an example in which the electronic device 101 is a device having displays on the front surface and the rear surface (e.g., a first display on the first surface and a second display on the rear surface (or cover surface) for convenience of explanation, various embodiments according to the disclosure are not limited thereto.

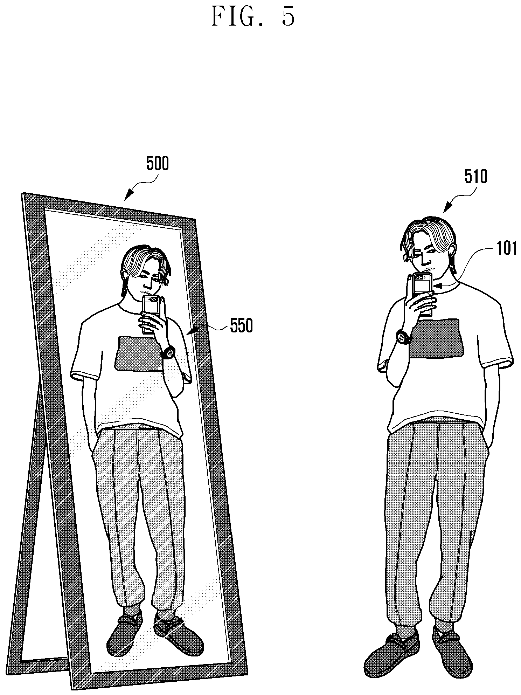

FIG. 5 illustrates an example of an operation of capturing an image by using an electronic device according to an embodiment of the disclosure.

According to an embodiment, FIG. 5 may show an example in which a user 510 captures an image including a projection 550 projected on a reflector 500 (e.g., an object of the user reflected in the reflector 500) by using an electronic device 101. For example, FIG. 5 may show an example of an operation in which the user 510 takes a mirror shot (or mirror selfie) by using the reflector 500.

In an embodiment, the reflector 500 may refer to an object that receives and reflects light. For example, the reflector 500 may include various objects capable of projecting and displaying an object, such as a mirror, a glass window, and/or a display device (or screen) (e.g., a TV or a monitor) in an off state.

In an embodiment, the projection 550 may refer to an object in which a person and/or an object is reflected (or projected) on the reflector 500. For example, in the example of FIG. 5, the projection 550 may include an object reflecting the user 510 in the real world and the electronic device 101 carried by the user 510. In an embodiment, the projection 550 may project or include both the user 510 and the electronic device 101 or only the electronic device 101 depending on composition configured by the user 510. In an embodiment, the projection 550 may further include other objects and a background. In various embodiments, the projection 550 refers to that which is reflected by the reflector; for instance, if one or more objects are reflected, then the projection 550 includes or projects the one or more objects.

According to an embodiment, the user 510 may set a camera (e.g., the camera module 180 of FIG. 1) of the electronic device 101 toward the reflector 500 and may take a mirror shot (mirror selfie) in a shooting mode. In an embodiment, taking a mirror shot may include, for example, a shooting mode in which the user takes a shot including a subject (e.g., including the user) projected on the reflector 500 (e.g., a mirror) by using the camera of the electronic device 101. According to an embodiment, when the user requests shooting, the electronic device 101 may obtain an image including the reflector 500 and the projection 550 corresponding to the user 510 and/or the electronic device 101 projected or viewable on the reflector 500 through the camera. According to an embodiment, the electronic device 101 may display (e.g., display a preview of) the obtained image on a display of the electronic device 101.

In an embodiment of the disclosure, when capturing an image including the projection 550 projected on the reflector 500 by using the camera of the electronic device 101, the electronic device 101 may detect the reflector 500, automatically switch to a designated shooting mode (e.g., a mirror shot mode) based on detection of the reflector 500, display a designated graphic element (or content) on a display of the electronic device 101 projected on the reflector 500 in the designated shooting mode, and support capturing an image including the graphic element (or content) of the display projected on the reflector 500. Hereinafter, an electronic device 101 supporting image capturing based on detection of a reflector 500 in a shooting environment illustrated in FIG. 5 and an operating method thereof will be described in detail.

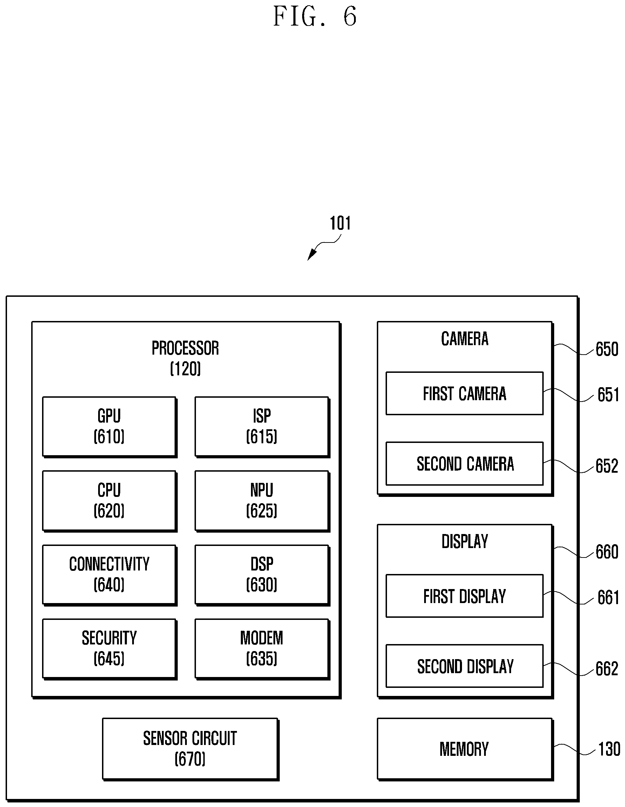

FIG. 6 schematically illustrates the configuration of an electronic device according to an embodiment of the disclosure.

Referring to FIG. 6, the electronic device 101 according to the embodiment of the disclosure may include a camera 650 (e.g., the camera module 180 of FIG. 1), a display 660 (e.g., the display module 160 of FIG. 1), a sensor circuit 670 (e.g., the sensor module 176 of FIG. 1), a memory 130 (e.g., the memory 130 of FIG. 1), and/or a processor 120 (e.g., the processor 120 of FIG. 1). According to an embodiment, the electronic device 101 may include all or at least some of the components of the electronic device 101 described with reference to FIG. 1.

According to an embodiment, the camera 650 may correspond to the camera module 180 of FIG. 1. According to an embodiment, when activated, the camera 650 may photograph a subject and transmit a related result (e.g., a captured image) to the processor 120 and/or the display 660 (e.g., the display module 160 of FIG. 1). According to an embodiment, the camera 650 may include a plurality of cameras (e.g., a first camera 651 and a second camera 652). According to an embodiment, the first camera 651 may include at least one camera device (e.g., a front camera device) disposed on a first surface of the electronic device 101. According to an embodiment, the second camera 652 may include at least one camera device (e.g., a rear camera device) matching a second surface (e.g., a surface on which a second display (or cover display) is provided) opposite to the first surface (e.g., a surface on which a first display (or main display) is provided) of the electronic device 101.

According to an embodiment, the camera 650 may operate in association with a time-of-flight (TOF) sensor (not shown), or may include a TOF camera with which a TOF sensor is integrated (or combined). For example, TOF may refer to a method for calculating distance (depth) by measuring time of flight, that is, the time taken for light (e.g., infrared rays) to be emitted and reflected back. In an embodiment, the TOF sensor may be a three-dimensional sensor that calculates the distance that light emitted to an object through infrared waves is reflected back as time and recognizes the three-dimensional effect, spatial information, and/or a movement of an object. In an embodiment, the TOF sensor may measure (or calculate) distance by detecting time of flight, that is, light that is reflected back after emitting light forward. For example, the TOF sensor may calculate distance by measuring the time taken for a designated signal (e.g., infrared rays, ultrasonic waves, or laser) to be emitted and reflected back. According to an embodiment, the TOF sensor may provide distance information for an image captured by the camera 650 when the camera 650 operates. In an embodiment, a TOF camera may refer to a camera in which a light source that emits light and a detector that detects light (e.g., a TOF sensor) may operate as a pair and which captures an image (e.g., a three-dimensional image) including distance (depth) information by using a TOF method.

According to an embodiment, the camera 650 may photograph an external subject (or object), and may generate image data. For example, the camera 650 may include an image sensor. According to an embodiment, the image sensor may include a multi-pixel sensor (MPS). According to an embodiment, the camera 650 may convert an optical signal of a subject into an electrical signal by using the image sensor.

According to an embodiment, the camera 650 may generate image data by using the image sensor. In an embodiment, the image data may be referred to variously as an image, a non-Bayer image, an image frame, and frame data. According to an embodiment, the image data may be provided as input data to the processor 120 (e.g., an image signal processor (ISP) 615 and/or a neural processing unit (NPU) 625), or may be stored in the memory 130. In an embodiment, the image data stored in the memory 130 may be provided to the processor 120.

According to an embodiment, the display 660 may include a configuration the same as or similar to that of the display module 160 of FIG. 1. According to an embodiment, the display 660 may include one or more displays (e.g., a first display 661 and/or a second display 662) depending on the form factor of the electronic device 101, and may visually provide various pieces of information to the outside (e.g., a user) of the electronic device 101 through a corresponding display. According to an embodiment, the display 660 may visually provide an executed application (e.g., the application 146 of FIG. 1) and various pieces of information related to the use thereof (e.g., content and an image (e.g., a preview image, a still image, a video, and an animation image (e.g., a graphics interchange format (GIF) image)) under control of the processor 120.

According to an embodiment, the display 660 may be combined with a touch sensor, a pressure sensor capable of measuring the intensity of a touch, and/or a touch panel (e.g., a digitizer) that detects a magnetic stylus pen. According to an embodiment, the display 660 may detect a touch input, an air gesture input, and/or a hovering input (or proximity input) by measuring a change in signal (e.g., voltage, a light amount, resistance, an electromagnetic signal, and/or a charge amount) with respect to a specific position on the display 660, based on the touch sensor, the pressure sensor, and/or the touch panel. According to an embodiment, the display 660 may include a liquid crystal display (LCD), an organic light-emitting diode (OLED), and/or an active-matrix organic light-emitting diode (AMOLED). According to an embodiment, the display 660 may include a flexible display.

According to an embodiment, the display 660 may include the first display 661 (e.g., a main display) on the front surface and a second display 662 (e.g., a cover display) on the rear surface. According to an embodiment, the first display 661 and the second display 662 may be configured in various forms depending on the form factor of the electronic device 101.

According to an embodiment, when the electronic device 101 has a form factor of a foldable device, the first display 661 may include a main display with a first display size operable when the electronic device 101 is in a first state (e.g., an unfolded state or an open state). According to an embodiment, when the electronic device 101 has the form factor of the foldable device, the second display 662 may include a cover display with a second display size, which is different from the first display size, operable when the electronic device 101 is in a second state (e.g., a folded state or a closed state) and/or the first state.

According to an embodiment, when the electronic device 101 has a form factor of a rollable/slidable device, the first display 661 may include a main display with a third display size operable when the electronic device 101 is in a third state (e.g., a closed state or a slide-in state). According to an embodiment, when the electronic device 101 has the form factor of the rollable/slidable device, the second display 662 may include an extended display with a fourth display size, which is different from the third display size, operable when the electronic device 101 is in a fourth state (e.g., an open state or a slide-out state).

In an embodiment, the type, shape, and/or size of the display 660 is not limited to the foregoing examples, and the display 660 may be configured variously depending on the form factor of the electronic device 101.

According to an embodiment, the sensor circuit 670 may correspond to the sensor module 176 of FIG. 1. According to an embodiment, the sensor module 176 may include a state detection sensor. In an embodiment, the state detection sensor may include, for example, at least one of a proximity sensor, an illuminance sensor, a magnetic sensor, a hall sensor, a gesture sensor, a bending sensor, an infrared sensor, a touch sensor, a pressure sensor, or an infrared camera, or a combination thereof.

According to an embodiment, the state detection sensor may be positioned on any side (e.g., a folding axis, the end of a housing, the bottom of the display (e.g., under the panel), and/or the bezel of the display) of the electronic device 101 to measure the folding (or unfolding) angle of the electronic device 101. According to an embodiment, the electronic device 101 may determine a designated state of the electronic device 101, based on sensor data (e.g., the folding (or unfolding) angle) by the state detection sensor of the sensor circuit 670.

According to an embodiment, the memory 130 may correspond to the memory 130 of FIG. 1. According to an embodiment, the memory 130 may store various pieces of data used by the electronic device 101. In an embodiment, the data may include, for example, an application (e.g., the program 140 of FIG. 1) and input data or output data about a command related to an application (e.g., the application 146 of FIG. 1).

In an embodiment, the data may include various types of data (e.g., content and/or an image) obtained through the camera 650 or obtained from an external device (e.g., another electronic device and/or a server). In an embodiment, the data may include a preview image, a still image, a video, and/or an animation image (e.g., a graphics interchange format (GIF) image). In an embodiment, the data may include distance information (or distance data) related to an image obtained through the camera 650. In an embodiment, the data may include information about various configurations for the electronic device 101 to support an operation according to image capturing (e.g., taking a mirror shot) using a reflector (e.g., the reflector 500 of FIG. 5).

In an embodiment, the information about the various configurations may include information (e.g., the screen resolution of each display 660) related to the display size of the display 660 (e.g., the first display 661 and/or the second display 662) of the electronic device 101 and designated identification information (e.g., face feature information about the user and an identification object (e.g., an icon, an image, and text)) for identifying a shooting mode (e.g., a normal shooting mode or a designated shooting mode (e.g., a mirror shot mode)) when capturing an image. In an embodiment, the information about various configurations may include information for analyzing and/or determining an object in an image and processing a designated function (e.g., resizing, providing a shooting composition guide, and/or providing an augmented object) for the object (e.g., a graphic element) in the image in the designated shooting mode.

In an embodiment, the data may include various pieces of sensor data (e.g., acceleration sensor data, gyro sensor data, and/or hall sensor data) obtained from the sensor circuit 670. In an embodiment, the data may include various pieces of reference data configured in the memory 130 to identify a designated state (e.g., a first state (e.g., an unfolded state), a second state (e.g., a partially folded state), and a third state (e.g., a folded state)) of the electronic device 101.

In an embodiment, the data may include various pieces of learning data and/or various parameters obtained based on the user's learning through interaction with the user. In an embodiment, the data may include various schemas (or algorithms, models, networks, or functions) for supporting an operation related to image capturing in the designated shooting mode.

For example, the schema for supporting the operation related to image capturing may include a neural network. In an embodiment, the neural network may include a neural network model based on at least one of an artificial neural network (ANN), a convolution neural network (CNN), a region with a convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a long short-term memory (LSTM) network, a classification network, a plain residual network, a dense network, a hierarchical pyramid network, and/or a fully convolutional network. According to an embodiment, the type of neural network model is not limited to the foregoing examples.

According to an embodiment, the memory 130 may store instructions that, when executed, cause the processor 120 to operate. For example, the application (e.g., the application 146 of FIG. 1) may be stored as software (e.g., the program 140 of FIG. 1) in the memory 130, and may be executable by the processor 120. According to an embodiment, the application may include various applications capable of providing various functions (or services) (e.g., an image capturing function, a call function, and a wireless communication function) in the electronic device 101.

According to an embodiment, the processor 120 may perform an application layer processing function required by the user of the electronic device 101. According to an embodiment, the processor 120 may provide a command and control of a function for various blocks of the electronic device 101. According to an embodiment, the processor 120 may perform control of each component of the electronic device 101 and/or calculation or data processing related to communication. For example, the processor 120 may include at least some of the components and/or functions of the processor 120 of FIG. 1. According to an embodiment, the processor 120 may be operatively connected to components of the electronic device 101. According to an embodiment, the processor 120 may load a command or data received from other components of the electronic device 101 into the memory 130, may process the command or data stored in the memory 130, and may store resulting data.

According to an embodiment, the processor 120 may include a processing circuit and/or an executable program element. According to an embodiment, the processor 120 may control (or process) an overall operation related to support of the electronic device 101 for image capturing, based on the processing circuit and/or the executable program element.

According to an embodiment, the processor 120 may perform an operation of obtaining a first image from the first camera 651 and/or the second camera 652, based on execution of an application. According to an embodiment, the processor 120 may perform an operation of analyzing the first image. According to an embodiment, the processor 120 may perform an operation of determining a designated shooting mode, based on analysis of the first image. According to an embodiment, the processor 120 may perform an operation of displaying a graphic element on the display 660, based on determining the designated shooting mode. According to an embodiment, the processor 120 may perform an operation of determining a designated camera to operate in the designated shooting mode, based on a user input for image capturing. According to an embodiment, the processor 120 may perform an operation of taking a second image by using the designated camera.

According to an embodiment, the first image may include a plurality of images obtained from each of the first camera 651 and the second camera 652, and may include an image that is not displayed on the display 660 but is used for the processor 120 to determine the designated shooting mode in the background.

According to an embodiment, the second image may include an image that is obtained from a camera operating as the designated camera among the first camera 651 and the second camera 652 and is displayed on a display 662 or 661 different from the display 661 or 662 on which the graphic element is displayed.

According to an embodiment, a detailed operation of the processor 120 of the electronic device 101 will be described with reference to the following drawings.

According to an embodiment, the processor 120 may operate individually and/or collectively. According to an embodiment, the processor 120 may include an application processor 410 and/or a communication processor 420. According to an embodiment, the communication processor 420 may be included and operated in the communication circuit 430.

According to an embodiment, the processor 120 may be an application processor (AP). According to an embodiment, the processor 120 may be a system semiconductor responsible for calculation and a multimedia driving function of the electronic device 101. According to an embodiment, the processor 120 may be configured in the form of a system-on-chip (SoC) to include a technology-intensive semiconductor chip in which a plurality of semiconductor technologies is integrated and system blocks are configured into a single chip.

According to an embodiment, as illustrated in FIG. 6, the system blocks of the processor 120 may include blocks of a graphics processing unit (GPU) 610, the image signal processor (ISP) 615, a central processing unit (CPU) 620, the neural processing unit (NPU) 625, a digital signal processor 630, a modem 635, a connectivity 640, and/or a security 645.

According to an embodiment, the GPU 610 may be responsible for graphic processing. According to an embodiment, the GPU 610 may receive a command from the CPU 620 and perform graphic processing to express the shape, position, color, shading, movement, and/or texture of objects (or objects) on the display.

According to an embodiment, the ISP 615 may be responsible for image processing and correction of an image and a video. According to an embodiment, the ISP 615 may correct unprocessed data (e.g., raw data) transmitted from the image sensor of the camera 650 to generate an image in a form preferred by the user. According to an embodiment, the ISP 615 may perform post-processing, such as adjusting the partial brightness of an image and emphasizing details. For example, the ISP 615 may autonomously tune and correct the image quality of an image obtained by the camera 650, thereby generating a result preferred by the user.

According to an embodiment, the ISP 615 may support artificial intelligence (AI)-based image processing technology. According to an embodiment, the ISP 615 may support scene segmentation (e.g., image segmentation) technology of recognizing and/or classifying parts of a scene being shot in conjunction with the NPU 625. For example, the ISP 615 may include a function of processing an object, such as sky, bushes, and/or skin, by applying different parameters thereto. According to an embodiment, the ISP 615 may detect and display a human face when capturing an image via an AI function, or may adjust the brightness, focus, and/or color of the image by using the coordinates and information of the face.

According to an embodiment, the CPU 620 may be responsible for a role corresponding to the processor 120. According to an embodiment, the CPU 620 may decode a user command, and may perform arithmetic and logical operations and/or data processing. For example, the CPU 620 may be responsible for the functions of memory, interpretation, calculation, and control. According to an embodiment, the CPU 620 may control an overall function of the electronic device 101. For example, the CPU 620 may execute all software (e.g., applications) of the electronic device 101 on an operating system (OS), and may control a hardware device.

According to an embodiment, the CPU 620 may include one processor core (single core), or may include a plurality of processor cores (multi-core). According to an embodiment, the CPU 620 may execute an application, and may control the overall operation of the processor 120 to perform neural network-based tasks required according to the execution of the application.

According to an embodiment, the NPU 625 may be responsible for processing optimized for a deep learning algorithm of AI. According to an embodiment, the NPU 625 is a processor optimized for deep-learning algorithm calculation (e.g., AI calculation), and may process big data quickly and efficiently like a human neural network. For example, the NPU 625 may be mainly used for AI calculation. According to an embodiment, the NPU 625 may recognize an object, an environment, and/or a person in the background to automatically adjust the focus when capturing an image through the camera 650, may automatically switch the shooting mode of the camera 650 to a designated shooting mode (e.g., a designated shooting mode (e.g., a mirror shot mode)) when capturing an image (e.g., taking a mirror shot) using a reflector, may automatically switch the shooting mode of the camera 650 to a food mode when taking a photo of food, and/or may erase only an unnecessary subject from a captured result.

According to an embodiment, the electronic device 101 may support integrated machine learning through interaction between all processors, such as the GPU 610, the ISP 615, the CPU 620, and the NPU 625.

According to an embodiment, the DSP 630 may be an integrated circuit that assists in quickly processing a digital signal. According to an embodiment, the DSP 630 may convert an analog signal into a digital signal to perform high-speed processing.

According to an embodiment, the modem 635 may perform a role that enables the electronic device 101 to use various communication functions. For example, the modem 635 may support communication, such as a call and data transmission and reception, by exchanging a signal with a base station. According to an embodiment, the modem 635 may include an integrated modem (e.g., a cellular modem, an LTE modem, a 5G modem, a 5G-Advanced modem, and a 6G modem) that supports communication technologies, such as LTE and 2G to 5G. According to an embodiment, the modem 635 may include an AI modem to which an AI algorithm is applied.

According to an embodiment, the connectivity 640 may support wireless data transmission based on IEEE 802.11. According to an embodiment, the connectivity 640 may support a communication service based on IEEE 802.11 (e.g., Wi-Fi) and/or 802.15 (e.g., Bluetooth, ZigBee, and UWB). For example, the connectivity 640 may support a communication service for a number of unspecified people in a local area, such as an indoor space, by using an unlicensed band.

According to an embodiment, the security 645 may provide an independent security execution environment between data or services stored in the electronic device 101. According to an embodiment, the security 645 may be responsible for preventing occurrence of hacking by the outside through software and hardware security during user authentication when the electronic device 101 provides a service, such as biometric recognition, a mobile ID, and/or payment. For example, the security 645 may provide independent security execution environments in a device security for enhancing the security of the very electronic device 101 and a security service based on user information, such as the mobile ID, the payment, and a car key in the electronic device 101.

According to an embodiment, operations performed by the processor 120 may be implemented by executing instructions stored in a recording medium (or computer program product or storage medium). For example, the recording medium may include a non-transitory computer-readable recording medium that records a program for executing various operations performed by the processor 120.

Embodiments described in the disclosure may be implemented in a recording medium readable by a computer or a similar device by using software, hardware, or a combination thereof. According to hardware implementation, operations described in an embodiment may be implemented by using at least one of application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or other electrical units for performing functions.

In an embodiment, a computer-readable recording medium (or computer program product) recording a program that causes the electronic device 101 to perform (or execute) various operations is provided. The operations may include an operation of obtaining a first image from a first camera and/or a second camera, based on execution of an application, an operation of analyzing the first image, an operation of determining a designated shooting mode, based on analysis of the first image, an operation of displaying a graphic element on a display, based on determination of the designated shooting mode, an operation of determining a camera designated to operate in the designated shooting mode, based on a user input for image capturing, and an operation of taking a second image by using the designated camera.

An electronic device 101 according to an embodiment of the disclosure may include a first camera (e.g., 651), a second camera (e.g., 652) disposed on an opposite surface to the first camera, a display (e.g., 660), at least one processor 120 including a processing circuit and operatively connected to the first camera, the second camera, and the display, and a memory 130 that stores instructions that, when individually and/or collectively executed by the at least one processor, cause the electronic device 101 to perform an operation.

According to an embodiment, when executed by the at least one processor 120, the instructions may cause the electronic device 101 to obtain a first image from at least one camera among the first camera and the second camera, based on executing an application. According to an embodiment, when executed by the at least one processor 120, the instructions may cause the electronic device 101 to analyze the first image. According to an embodiment, when executed by the at least one processor 120, the instructions may cause the electronic device 101 to determine a designated shooting mode, based on analyzing the first image. According to an embodiment, when executed by the at least one processor 120, the instructions may cause the electronic device 101 to display a graphic element on the display, based on determining the designated shooting mode. According to an embodiment, when executed by the at least one processor 120, the instructions may cause the electronic device 101 to determine a designated camera to operate in the designated shooting mode, based on a user input to capture an image. According to an embodiment, when executed by the at least one processor 120, the instructions may cause the electronic device 101 to capture a second image by using the designated camera.

According to an embodiment, when executed by the at least one processor 120, the instructions may cause the electronic device 101 to detect designated identification information, based on analyzing the first image. According to an embodiment, when executed by the at least one processor 120, the instructions may cause the electronic device 101 to determine the designated shooting mode, based on detecting the designated identification information.

According to an embodiment, the designated identification information may include an image object designated in advance to determine whether the designated shooting mode is executed. According to an embodiment, the designated image object may include at least one of a designated face object or a designated identifier.

According to an embodiment, the first image may include an image of the first camera and/or an image of the second camera. According to an embodiment, when executed by the at least one processor 120, the instructions may cause the electronic device 101 to compare the first image including the image of the first camera and the image of the second camera with a preset reference image. According to an embodiment, when executed by the at least one processor 120, the instructions may cause the electronic device 101 to determine the designated shooting mode, based on identifying the designated face object from the first image.

According to an embodiment, when executed by the at least one processor 120, the instructions may cause the electronic device 101 to determine the designated shooting mode, based on identifying the designated identifier from an image obtained by the designated camera positioned on the same surface as the display that displays the graphic element.

According to an embodiment, when executed by the at least one processor 120, the instructions may cause the electronic device 101 to determine the designated camera to operate in the designated shooting mode among the first camera and the second camera, based on determining the designated shooting mode.

According to an embodiment, when executed by the at least one processor 120, the instructions may cause the electronic device 101 to deactivate a camera positioned on an opposite surface to the designated camera, based on determining the designated camera to operate in the designated shooting mode.

According to an embodiment, the electronic device 101 may include a first display and a second display. According to an embodiment, when executed by the at least one processor 120, the instructions may cause the electronic device 101 to display the graphic element, based on a display positioned on the same surface as the designated camera among the first display and the second display. According to an embodiment, when executed by the at least one processor 120, the instructions may cause the electronic device 101 to display a preview of an image obtained by the designated camera, based on a display positioned on an opposite surface to the designated camera.

According to an embodiment, the preview may include a reflector and an image projected onto the reflector. According to an embodiment, the image projected onto the reflector may include an object corresponding to the electronic device including the designated camera, the display positioned on the same surface as the designated camera, and the graphic element displayed on the display.

According to an embodiment, when executed by the at least one processor 120, the instructions may cause the electronic device 101 to analyze whether the graphic element is included in a designated condition. According to an embodiment, when executed by the at least one processor 120, the instructions may cause the electronic device 101 to process a designated function related to the graphic element displayed on the display positioned on the same surface as the designated camera, based on the graphic element being included in the designated condition. According to an embodiment, when executed by the at least one processor 120, the instructions may cause the electronic device 101 to display a result of processing the function, based on the first display and/or the second display.

According to an embodiment, when executed by the at least one processor 120, the instructions may cause the electronic device 101 to detect a user input, based on an object corresponding to the graphic element in the preview. According to an embodiment, when executed by the at least one processor 120, the instructions may cause the electronic device 101 to process a designated function related to the graphic element displayed on the display positioned on the same surface as the designated camera, based on the user input. According to an embodiment, when executed by the at least one processor 120, the instructions may cause the electronic device 101 to display a result of processing the function, based on the first display and/or the second display.

According to an embodiment, when executed by the at least one processor 120, the instructions may cause the electronic device 101 to perform situation awareness, based on determining the designated shooting mode. According to an embodiment, when executed by the at least one processor 120, the instructions may cause the electronic device 101 to generate a graphic element to be displayed on the display, based on the situation awareness. According to an embodiment, when executed by the at least one processor 120, the instructions may cause the electronic device 101 to control the display to display the generated graphic element.

According to an embodiment, when executed by the at least one processor 120, the instructions may cause the electronic device 101 to activate the first camera and the second camera, based on detecting execution of the application.

According to an embodiment, when executed by the at least one processor 120, the instructions may cause the electronic device 101 to determine whether the electronic device is in a designated state, based on detecting the execution of the application. According to an embodiment, when executed by the at least one processor 120, the instructions may cause the electronic device 101 to simultaneously activate the first camera and the second camera, based on determining that the electronic device is in the designated state.

According to an embodiment, when executed by the at least one processor 120, the instructions may cause the electronic device 101 to map and store metadata related to the graphic element onto the captured second image.

According to an embodiment, when executed by the at least one processor 120, the instructions may cause the electronic device 101 to display the second image on a designated display. According to an embodiment, when executed by the at least one processor 120, the instructions may cause the electronic device 101 to detect a user input based on a designated graphic element in the image. According to an embodiment, when executed by the at least one processor 120, the instructions may cause the electronic device 101 to import metadata corresponding to the designated graphic element, based on the user input. According to an embodiment, when executed by the at least one processor 120, the instructions may cause the electronic device 101 to execute a function corresponding to the metadata. According to an embodiment, when executed by the at least one processor 120, the instructions may cause the electronic device 101 to display content corresponding to execution of the function on the display.

According to an embodiment, the first image may include a plurality of images respectively obtained from the first camera and the second camera. According to an embodiment, the first image may include an image not displayed on the display but used by the at least one processor 120 to determine the shooting mode in a background.

According to an embodiment, the second image may be obtained from a camera operating as the designated camera among the first camera and the second camera. According to an embodiment, the second image may include an image displayed on a display different from the display that displays the graphic element.

According to an embodiment, the designated camera may include a camera positioned on the same surface as the display that displays the graphic element.

Hereinafter, an operating method of an electronic device 101 according to various embodiments will be described in detail. Operations performed by the electronic device 101 according to various embodiments may be executed by a processor 120 of the electronic device 101 including various processing circuits and/or executable program elements. According to an embodiment, the operations performed by the electronic device 101 may be stored as instructions in a memory 130, and be individually and/or collectively performed by the processor 120.

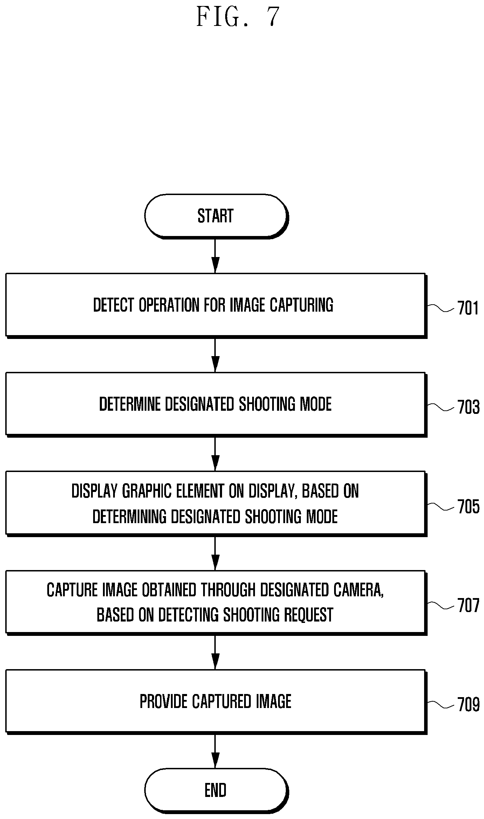

FIG. 7 is a flowchart illustrating an operating method of an electronic device according to an embodiment of the disclosure.

According to an embodiment, FIG. 7 may illustrate an example of an operation in which the electronic device (e.g., the electronic device 101 of FIG. 1) supports capturing an image (e.g., taking a mirror shot based on the reflector 500 of FIG. 5) according to an embodiment.

A method in which the electronic device 101 supports capturing an image according to an embodiment of the disclosure may be performed, for example, according to the flowchart illustrated in FIG. 7. The flowchart illustrated in FIG. 7 is an example of operations of the electronic device 101 according to an embodiment, in which at least some operations may be performed in a different order, in parallel, or independently, or at least some other operations may be performed complementarily to the at least operations. According to an embodiment of the disclosure, operation 701 to operation 709 may be performed by at least one processor (e.g., the processor 120 of FIG. 1 or FIG. 6) of the electronic device 101.

As illustrated in FIG. 7, the operating method performed by the electronic device 101 according to an embodiment may include an operation 701 of detecting an operation for image capturing, an operation 703 of determining a designated shooting mode, an operation 705 of displaying a graphic element on a display, based on determining the designated shooting mode, an operation 707 of capturing an image obtained through a designated camera, based on detecting a shooting request, and an operation 709 of providing the captured image.

Referring to FIG. 7, in operation 701, the processor 120 of the electronic device 101 may perform an operation of detecting an operation for image capturing. For example, the processor 120 may receive a user input (e.g., selection of an application execution icon) to execute an application related to image capturing (e.g., a shooting application or a camera application) from a user. According to an embodiment, the processor 120 may determine to start capturing an image, based on receiving the user input.

In operation 703, the processor 120 may perform an operation of determining a designated shooting mode (e.g. an image capture mode, or a camera operation mode of the electronic device 101), based on detecting the operation for image capturing (e.g., executing the shooting application). In an embodiment, the shooting mode supportable by the electronic device 101 may include various shooting modes, such as a general mode, a portrait mode, a food mode, a landscape mode, a video mode, a panorama mode, and/or a mirror shot mode, is not limited thereto. In an embodiment, the designated shooting mode may include the mirror shot mode among the various shooting modes. In an embodiment, the mirror shot mode may include a shooting mode in which the user captures an image including a subject (e.g., including the user) projected onto (e.g. shown on, or visible in etc.) a reflector (e.g., a mirror or other reflective surface) by using a camera of the electronic device 101.

According to an embodiment, the processor 120 may obtain an image or at least one image (e.g., a first image(s)) from a first camera and/or a second camera, based on detecting the operation; e.g. one or more images are obtained from the first camera and one or more images are obtained from the second camera, and these may collectively be referred to as first images. According to an embodiment, the processor 120 may operate to obtain the first image from the first camera (e.g., a rear camera). For example, the user may perform image capturing based on the first camera (e.g., the rear camera) while unfolding the electronic device 101, and the processor 120 may obtain the first image through the first camera. According to an embodiment, the processor 120 may operate to obtain the first image from the first camera (e.g., the rear camera) and a second camera (e.g., a front camera). For example, the user may perform image capturing based on the first camera or the second camera while unfolding the electronic device 101, and the processor 120 may obtain an image including a subject that the user wants to photograph from a camera (e.g., the first camera) designated to be executed by the user, may obtain an image from a camera (e.g., the second camera) other than the camera designated to be executed in the background, and may obtain the first image from the images of the first camera and the second camera.

According to an embodiment, the first image may include an image obtained by the first camera 651 or the second camera 652, and may include an image that is not displayed on the display 660 but is used by the processor 120 to determine the designated shooting mode in the background. According to an embodiment, the first image may include a plurality of images obtained respectively by the first camera 651 and the second camera 652, and may include an image that is not displayed on the display 660 but is used by the processor 120 to determine the designated shooting mode in the background.

According to an embodiment, the first camera and the second camera may be disposed to be opposite each other. For example, the second camera may be disposed on the opposite side of the first camera. According to an embodiment, the processor 120 may determine the designated shooting mode, based on the image obtained from the first camera and/or the second camera. According to an embodiment, the processor 120 may operate to determine the designated shooting mode, based on performing image analysis (e.g., object recognition and/or face recognition) based on the first image obtained from the first camera 651 or the second camera 652, comparing the analyzed image with a preset reference image (e.g., a user face image (or face image data) preregistered for face authentication) in a memory (e.g., the memory 130 of FIG. 1 or FIG. 6) of the electronic device 101, and determining that the image corresponds to a probabilistically similar object (or an object with a high similarity).

According to an embodiment, the processor 120 may operate to determine the designated shooting mode, based on performing image analysis (e.g., object recognition and/or face recognition) based on the image obtained from the first camera and the image obtained from the second camera, comparing the analyzed images with each other, and determining that face objects included in the images are probabilistically similar objects (or objects with a high similarity).

According to an embodiment, the processor 120 may perform image analysis (e.g., object recognition and/or face recognition) based on the first image including the image obtained from the first camera and/or the image obtained from the second camera, and may detect designated identification information, based on the result of the image analysis. For example, the processor 120 may determine whether the designated identification information is detected from the first image obtained from the first camera and/or the second camera. According to an embodiment, the processor 120 may operate to determine the designated shooting mode, based on detecting the designated identification information.

In an embodiment, the designated identification information may include an image object designated in advance for determining whether the designated shooting mode is executed. In an embodiment, the designated image object may include at least one of a designated face object or a designated identifier. According to an embodiment, the processor 120 may operate to determine the designated shooting mode, based on comparing an image of an executed camera (e.g., the first camera or the second camera) with a preregistered reference image (e.g., the designated identifier or the designated facial object) and identifying the preregistered reference image from the image of the executed camera. According to an embodiment, the processor 120 may operate to determine the designated shooting mode, based on comparing the image of the first camera and the image of the second camera and identifying the designated face object from the image of the first camera and the image of the second camera. According to an embodiment, the processor 120 may operate to determine the designated shooting mode, based on identifying the designated identifier from the image of the first camera and/or the image of the second camera. In various embodiments, the processor 120 compares the image of the first camera and the image of the second camera to identify whether a same face is included in both and, if so, determines the designated shooting mode based on the same face being included in both. For example, in such a case, one of the first camera and the second camera may be facing the face of the user who is holding the electronic device 101, while the other one of the first camera and the second camera is facing a reflective surface in which the face of the user is reflected.

According to an embodiment, the processor 120 may operate to immediately determine the designated shooting mode, based on an input (or command) to directly execute the shooting mode designated by the user (or select a function).

In operation 705, the processor 120 may perform an operation of displaying a graphic element (e.g. graphic object, text, image etc.) on a display, based on determining the designated shooting mode. According to an embodiment, the processor 120 may operate to determine a display for displaying a graphic element (e.g., determine a display positioned on the same surface (or side of the electronic deice 101) as the designated camera), based on determining the designated shooting mode, and to display the graphic element, based on the display positioned on the same surface as the designated camera. In an embodiment, the display positioned on the same surface as the designated camera may be a first display or a second display designated to display a graphical element in the designated shooting mode. According to an embodiment, the processor 120 may operate to display a graphic element appropriate for a designated situation on the display (e.g., the first display or the second display) positioned on the same surface as the designated camera, based on determining the designated shooting mode (e.g., the mirror shot mode).

According to an embodiment, the processor 120 may perform situation awareness (e.g. detecting a situation, surrounding or state of an environment around the electronic device 101), based on determining the designated shooting mode. According to an embodiment, the processor 120 may determine the current position of the user, an activity of the user, and/or a situation corresponding to a recognition object, based on the situation awareness. According to an embodiment, the processor 120 may generate a graphic element corresponding to the determined situation. According to an embodiment, generating and providing the corresponding graphic element based on the situation awareness will be described with reference to the following drawings. Herein, performing a situation awareness may also be regarded as identifying a state of the electronic device 101 and/or the user thereof, such as by determining a current position or current activity of the user of the electronic device 101.

In operation 707, the processor 120 may perform an operation of capturing an image obtained through the designated camera, based on detecting the shooting request. According to an embodiment, the processor 120 may obtain an image (e.g., a second image) from the camera designated to operate in the designated shooting mode, based on detecting a user input for image capturing. According to an embodiment, the processor 120 may perform image capturing, based on the image (e.g., the second image) obtained through the designated camera.

According to an embodiment, the second image may be obtained from the camera operating as the designated camera among the first camera 651 and the second camera 652, and may include an image displayed on a display 662 or 661 other than the display 661 or 662 on which the graphic element is displayed. According to an embodiment, the captured image (e.g., the second image) may include the reflector (e.g., the reflector 500 or reflective surface 500 in FIG. 5) and an image (e.g., the projection 550 or reflected image 550 of FIG. 5) projected onto the reflector. According to an embodiment, the image projected onto the reflector may include an object corresponding to the designated camera, the display (or an object corresponding to such) positioned on the same surface as the designated camera, and the electronic device 101 (or an object corresponding to such) including the graphic element displayed on the display.

According to an embodiment, the processor 120 may operate to determine the designated camera to operate in the designated shooting mode among the first camera and the second camera and to capture the second image by using the designated camera, based on determining the designated shooting mode. According to an embodiment, the processor 120 may determine one of the first camera and the second camera as the designated camera to operate in the designated shooting mode, based on a designated schema (or algorithm, model, network, or function) for determining the designated camera. According to an embodiment, the processor 120 may determine the designated camera, at least based on the distance to the subject analyzable, the size of the face object, whether the face object is recognized, and/or whether the designated identifier is recognized based on the first image.

According to an embodiment, when similar face objects (e.g., face objects of the user) are recognized or detected from the image of the first camera and the image of the second camera, the processor 120 may determine the designated camera, based on distance information about each face object. For example, the similar face objects may refer to probabilistically similar objects or objects with a high similarity. For example, the processor 120 may determine (e.g., estimate) the first distance from a first face object extracted from the image of the first camera, and may determine (e.g., estimate) the second distance from a second face object extracted from the image of the second camera. According to an embodiment, the processor 120 may identify the zoom levels of the first camera and the second camera, and may measure the size of each of the extracted objects (e.g., the first face object and the second face object) based on the boundary thereof, based on the zoom levels. According to an embodiment, when extracting a face from the images, the processor 120 may measure the size (e.g., pixel size) from the arrangement of the eyes, nose, and/or mouth, or may measure the size from the face line. According to an embodiment, the processor 120 may estimate the distance, based on modeling an estimated distance value that matches the measured size (e.g., pixel size).

According to an embodiment, the processor 120 may determine a camera that has captured an image including a face object having a relatively long distance among the first distance and the second distance (e.g., a face object relatively distant from the electronic device 101) as the designated camera.

According to an embodiment, when the similar face objects (e.g., the face objects of the user) are recognized from the image of the first camera and the image of the second camera, the processor 120 may determine the designated camera, based on relative size information about each face object. For example, the processor 120 may compare the first size of the first face object (e.g., a pixel size including the first face object) extracted from the image of the first camera and the second size of the second face object (e.g., a pixel size including the second face object) extracted from the image of the second camera. According to an embodiment, the processor 120 may determine or identify a camera that has captured an image including a face object having a relatively small size among the first size and the second size (e.g., a face object relatively close to the electronic device 101) as the designated camera.

According to an embodiment, when a face object (e.g., a face object of the user) is recognized from either the image of the first camera or the image of the second camera, the processor 120 may determine a camera (e.g., a camera positioned on the opposite surface to a camera facing the user) that has captured an image not including the face object as the designated camera.

According to an embodiment, when the designated identifier is recognized from either the image of the first camera or the image of the second camera, the processor 120 may determine a camera (e.g., a camera that photographs the designated identifier projected onto the reflector 500) that has captured an image including the designated identifier as the designated camera.

In operation 709, the processor 120 may perform an operation of providing the captured image (e.g., the second image). According to an embodiment, the processor 120 may display the captured image on the display. According to an embodiment, the processor 120 may store the captured image in the memory (e.g., the memory 130 of FIG. 1 or FIG. 6) of the electronic device 101. According to an embodiment, the processor 120 may share (e.g., transmit) the captured image to a designated external device (e.g., a cloud and/or another designated electronic device).

According to an embodiment, when storing the captured image, the processor 120 may perform an operation of mapping metadata related to the graphic element onto the captured image and storing the captured image. For example, the processor 120 may map metadata (e.g., a tag, a link, application information, or service information) related to the graphic element extracted from the second image captured using the designated camera onto the second image (e.g., the graphic element in the second image) and storing the second image.

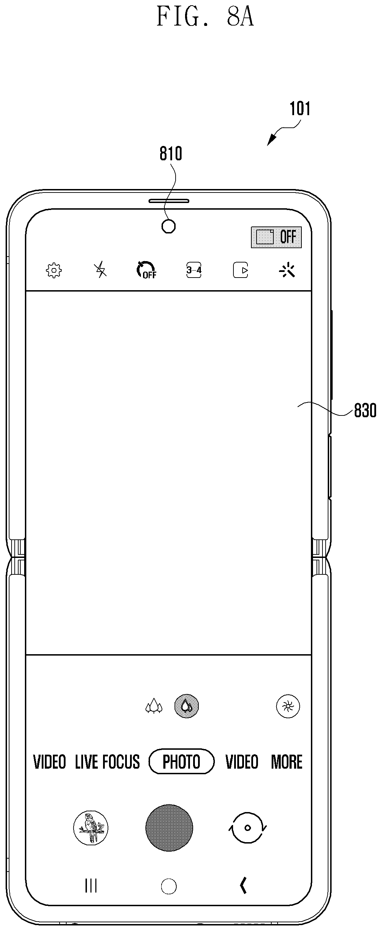

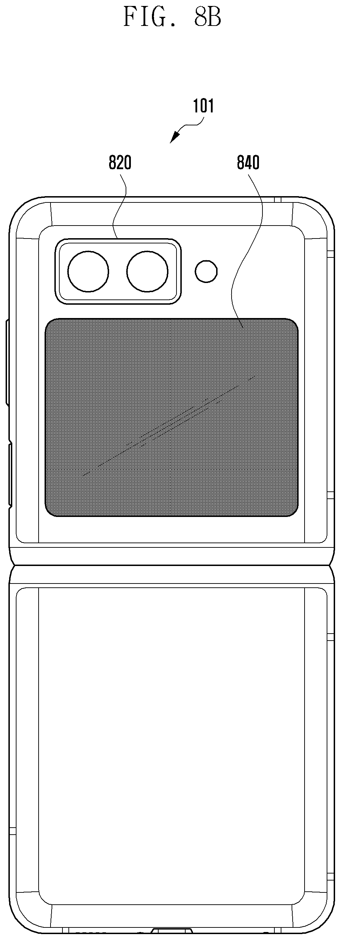

FIG. 8A and FIG. 8B illustrate an example of an operation in which an electronic device supports capturing an image according to an embodiment of the disclosure.

According to an embodiment, FIG. 8A may illustrate an example of the front surface of the electronic device 101 in an unfolded state. According to an embodiment, FIG. 8B may illustrate an example of the rear surface of the electronic device 101 in the unfolded state.

According to an embodiment, as illustrated in FIG. 8A and FIG. 8B, the electronic device 101 may include a first camera 810 (e.g., the first camera 651 of FIG. 6) and a first display 830 (e.g., the first display 661 of FIG. 6) disposed on the front surface (e.g., a first surface) in the unfolded state, and may include a second camera 820 (e.g., the second camera 652 of FIG. 6) and a second display 840 (e.g., the second display 662 of FIG. 6) disposed on the rear surface (e.g., a second surface or a cover surface) in the unfolded state.

According to an embodiment, the first camera 810 and the second camera 820 may be disposed on opposite surfaces of the electronic device 101 in the unfolded state. According to an embodiment, the first display 830 and the second display 840 may be disposed on the opposite surfaces of the electronic device 101 in the unfolded state. According to an embodiment, the first camera 810 may be disposed on the same surface (e.g., the front surface) as the first display 830, and the second camera 820 may be disposed on the same surface (e.g., the rear surface) as the second display 840.

According to an embodiment, when entering a shooting mode (e.g., executing an application) in the unfolded state, the electronic device 101 may activate the first camera 810 or the second camera 820. According to an embodiment, the activated camera may include a previously executed camera, a camera configured to be executed by a user, or a camera designated to be executed by the user when entering the shooting mode. According to an embodiment, the electronic device 101 may determine, as a designated camera, a camera (e.g., the first camera 810 or the second camera 820) activated when operating in a designated shooting mode (e.g., a mirror shot mode) after entering the shooting mode.

According to an embodiment, when entering the shooting mode (e.g., executing the application) in the unfolded state, the electronic device 101 may simultaneously activate the first camera 810 and the second camera 820. According to an embodiment, the electronic device 101 may determine either the first camera 810 or the second camera 820 as the designated camera, based on identifying a designated condition (e.g., a user face object and/or a designated identifier) when operating in the designated shooting mode (e.g., the mirror shot mode) after entering the shooting mode.

According to an embodiment, a case where the first camera 810 and the first display 830 on the front surface of the electronic device 101 face the user and the second camera 820 and the second display 840 on the rear surface of the electronic device 101 face a reflector (e.g., the reflector 500 of FIG. 5) may be assumed. In this case, the electronic device 101 may determine the second camera 820 as the designated camera. This determination of the second camera 820 as the designated camera may be performed according to one of the examples for determining a designated camera as disclosed herein. According to an embodiment, when determining the designated camera, the electronic device 101 may determine a display (e.g., the second display 840) positioned on the same surface as the designated camera (e.g., the second camera 820) as a target display for displaying a designated graphic element. According to an embodiment, when determining the second display 840 as the target display for displaying the graphic element, the electronic device 101 may operate to display the designated graphic element on the second display 840 and to display a preview of an image captured by the second camera 820 on a display (e.g., the first display 830) disposed on the opposite surface to the second display 840.

According to an embodiment, a case where the second camera 820 and the second display 840 on the rear surface of the electronic device 101 face the user and the first camera 810 and the first display 830 on the front surface of the electronic device 101 face the reflector (e.g., the reflector 500 of FIG. 5) may be assumed. In this case, the electronic device 101 may determine the first camera 810 as the designated camera. According to an embodiment, when determining the designated camera, the electronic device 101 may determine a display (e.g., the first display 830) positioned on the same surface as the designated camera (e.g., the first camera 810) as the target display for displaying the designated graphic element. According to an embodiment, when determining the first display 830 as the target display for displaying the graphic element, the electronic device 101 may operate to display the designated graphic element on the first display 830 and to display a preview of an image captured by the first camera 810 on a display (e.g., the second display 840) disposed on the opposite surface to the first display 830.

According to an embodiment, a case where the second camera 820 operates as the designated camera may be assumed.

According to an embodiment, the electronic device 101 may display the designated graphic element the second display 840 positioned on the same surface (e.g., the rear surface or the second surface) as the second camera 820 operating as the designated camera in the designated shooting mode. According to an embodiment, the electronic device 101 may deactivate (e.g., turn off) the first camera 810 on the opposite surface (e.g., the front surface or the first surface) to the second camera 820 operating as the designated camera in the designated shooting mode. According to an embodiment, the electronic device 101 may display the preview of the image obtained by the second camera 820 on the first display 830 positioned on the opposite surface to the second camera 820 in the designated shooting mode. In an embodiment, the preview may include the reflector (e.g., the reflector 500 of FIG. 5) and an image (e.g., the projection 550 of FIG. 5) projected onto the reflector. In an embodiment, the image projected onto the reflector may include an object corresponding to each of the second camera 820 operating as the designated camera, the second display 840 positioned on the same surface as the second camera 820, and the electronic device 101 including the graphic element displayed on the second display 840.

According to an embodiment, a case where the first camera 810 operates as the designated camera may be assumed.

According to an embodiment, the electronic device 101 may display the designated graphic element the first display 830 positioned on the same surface (e.g., the front surface or the first surface) as the first camera 810 operating as the designated camera in the designated shooting mode. According to an embodiment, the electronic device 101 may deactivate (e.g., turn off) the second camera 820 on the opposite surface (e.g., the rear surface or the second surface) to the first camera 810 operating as the designated camera in the designated shooting mode. According to an embodiment, the electronic device 101 may display the preview of the image obtained by the first camera 810 on the second display 840 positioned on the opposite surface to the first camera 810 in the designated shooting mode. In an embodiment, the preview may include the reflector (e.g., the reflector 500 of FIG. 5) and an image (e.g., the projection 550 of FIG. 5) projected onto the reflector. In an embodiment, the image projected onto the reflector may include an object corresponding to each of the first camera 810 operating as the designated camera, the display (e.g., the first display 830) positioned on the same surface as the first camera 810, and the electronic device 101 including the graphic element displayed on the first display 830.

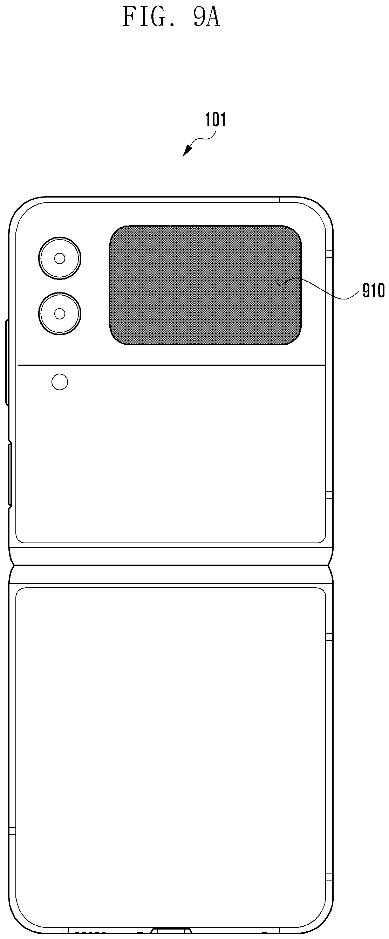

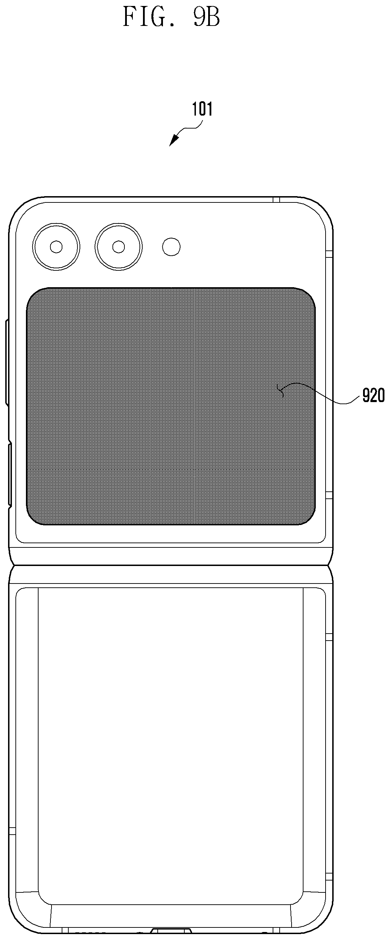

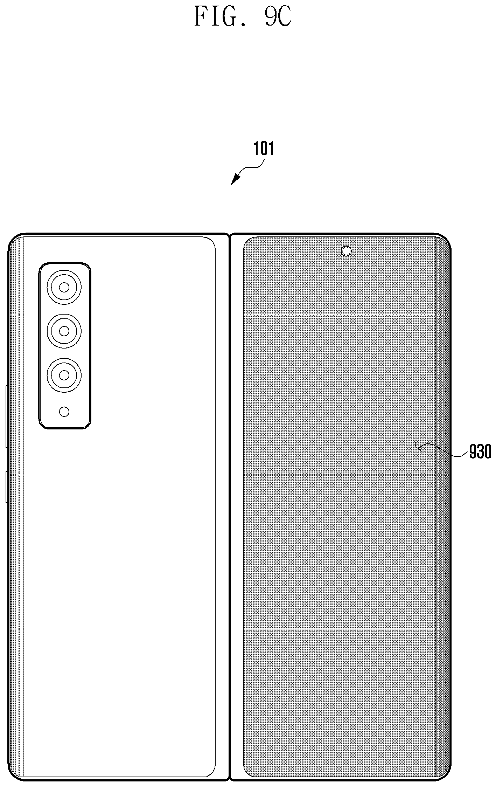

FIG. 9A, FIG. 9B, and FIG. 9C illustrate examples of various displays corresponding to the form factor of an electronic device according to an embodiment of the disclosure.

According to an embodiment, FIG. 9A, FIG. 9B, and FIG. 9C may illustrate examples of various form factors of the electronic device 101 according to various display types. According to an embodiment, the electronic device 101 may include various form factors, such as a bar type, a plate type, a foldable type, a rollable type, a slidable type, and/or a foldable-slidable hybrid. According to an embodiment, as illustrated in FIG. 9A, FIG. 9B, and FIG. 9C, the electronic device 101 may be configured in various types, and a display (e.g., the display module 160 of FIG. 1 or the display 660 of FIG. 6) may be provided in various types depending on the configuration type of the electronic device 101.

Although the electronic device 101 according to an embodiment of the disclosure is described as an electronic device 101 with a foldable form factor (e.g., a foldable device), the electronic device 101 according to various embodiments and the operation thereof are not limited thereto. For example, the electronic device 101 may have various form factors, such as a bar type, a plate type, a rollable type, and/or a slidable type, and may operate thereby. For example, the illustrated electronic device 101 may be part of a bar-type or plate-type device, a foldable device, a rollable device, or a slidable device.

According to an embodiment, FIG. 9A, FIG. 9B, and FIG. 9C illustrate various examples of a rear display (or second display) (e.g., a cover display or a sub-display) in an unfolded state of the electronic device 101. According to an embodiment, although not shown, the electronic device 101 illustrated in FIG. 9A, FIG. 9B, and FIG. 9C may be an electronic device that is foldable in a direction such that two different areas of a front display (e.g., a first display or a main display) in the unfolded state face each other. According to an embodiment, a user may fold the first display of the electronic device 101 such that the two different areas face each other when carrying the electronic device 101. According to an embodiment, the user may unfold the first display such that the two different areas form substantially a flat plate shape when actually using the electronic device 101. According to an embodiment, the electronic device 101 may include a second display 910, 920, or 930 as illustrated in the examples of FIG. 9A, FIG. 9B, and FIG. 9C.

According to an embodiment, the electronic device 101 may include a form factor including at least two display surfaces (e.g., a first display surface and a second display surface) based on at least one folding axis. Various embodiments are not limited to the at least one folding axis, which is for illustration, and the number of folding axes that the electronic device 101 may have is not limited. According to an embodiment, the display may be folded or unfolded in various manners (e.g., in-folding, out-folding, or in/out folding) depending on the configuration type of the electronic device 101.

According to an embodiment, FIG. 9A and FIG. 9B may illustrate examples of a vertically foldable electronic device 101. According to an embodiment, FIG. 9C may illustrate an example of a horizontally foldable electronic device 101. According to an embodiment, as illustrated in FIG. 9A, FIG. 9B, and FIG. 9C, the display of the electronic device 101 may have various specifications of the display (e.g., the main display and/or the cover display) depending on the form factor of the electronic device 101.

According to an embodiment, the display of the electronic device 101 may have various display screen sizes (e.g., the diagonal length of a screen), resolutions, screen ratios (e.g., the screen ratio according to resolution), and display types (e.g., the aspect ratio), but is not limited thereto. In an embodiment, in the following description, "display size" may be used as a term encompassing at least one display specification of the foregoing examples. For example, hereinafter, "display size" may include a hardware specification (e.g., screen size) and/or a software specification (e.g., resolution, the screen ratio, or the aspect ratio) of a display. For example, "display size" may be used interchangeably with terms, such as screen size, resolution, screen ratio, and display type of a display.

According to an embodiment, when the electronic device 101 has a form factor of a foldable device as illustrated in the examples of FIG. 9A, FIG. 9B, and FIG. 9C, the electronic device 101 may include a main display (not shown) with a first display size (e.g., a first screen size and a first screen ratio) operable in a first state (e.g., the unfolded state or an open state). According to an embodiment, when the electronic device 101 has the form factor of the foldable device, the electronic device 101 may include a cover display 910, 920, or 930 with a second display size (e.g., a second screen size and a second screen ratio), which is different from the first display size, operable in a second state (e.g., a folded state or a closed state) and/or the first state.

According to an embodiment, FIG. 9A, FIG. 9B, and FIG. 9C may illustrate an example in which the cover displays 910, 920, and 930 of the electronic device 101 operate in the second state. According to an embodiment, the cover displays 910, 920, and 930 may have different display types and display sizes depending on the form factor of the electronic device 101. For example, as illustrated in FIG. 9A, FIG. 9B, and FIG. 9C, the cover displays 910, 920, and 930 of the electronic device 101 may be provided in different shapes depending on the display size (or screen resolution).

According to an embodiment, although not shown in FIG. 9A, FIG. 9B, and FIG. 9C, when the electronic device 101 has a form factor of a rollable/slidable device, the electronic device 101 may include a main display with a third display size operable in a third state (e.g., a closed state or a slide-in state). According to an embodiment, when the electronic device 101 has the form factor of the rollable/slidable device, the electronic device 101 may include an extended display with a fourth display size, which is different from the third display size, operable in a fourth state (e.g., an open state or a slide-out state)

In an embodiment, the form factor of the electronic device 101 and the type, shape, and/or size of the display (e.g., the main display, the cover display, and/or the extended display) according to the form factor are not limited to the foregoing examples, and the type, shape, and/or size of the display may be variously configured depending on the form factor of the electronic device 101. According to an embodiment, the electronic device 101 may include a form factor, such as a foldable-slidable hybrid device.

According to an embodiment, the electronic device 101 may display an image (e.g., a designated graphic element) edited (or modified) corresponding to the display size according to the form factor of the electronic device 101 (e.g., various form factors illustrated in the examples of FIG. 9A, FIG. 9B, and FIG. 9C) when operating in a designated shooting mode of the electronic device 101. According to an embodiment of the disclosure, displaying an image (e.g., a designated graphic element) in accordance with a cover display will be described with reference to the following drawings.

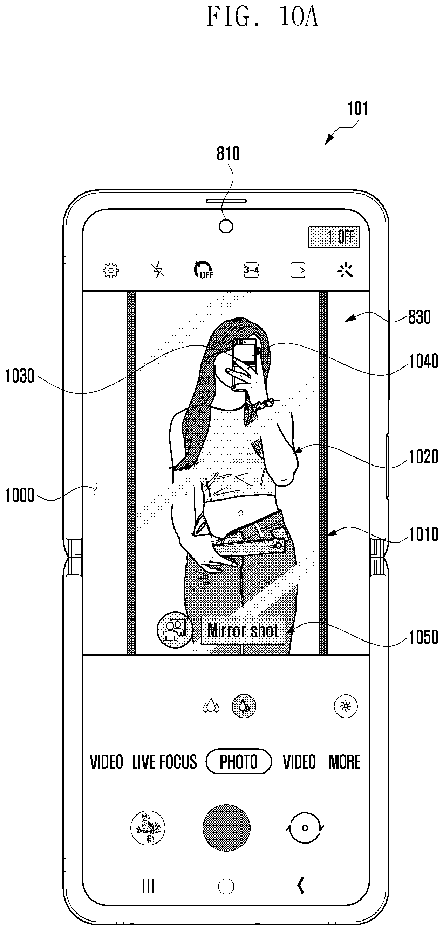

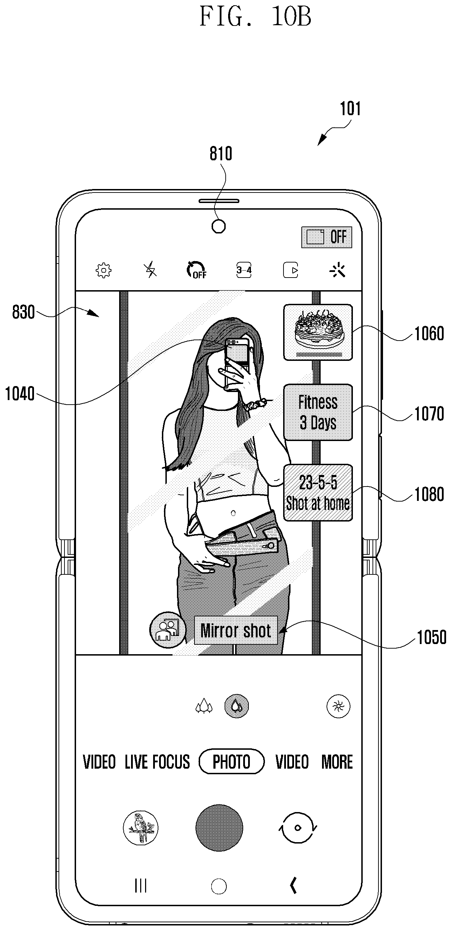

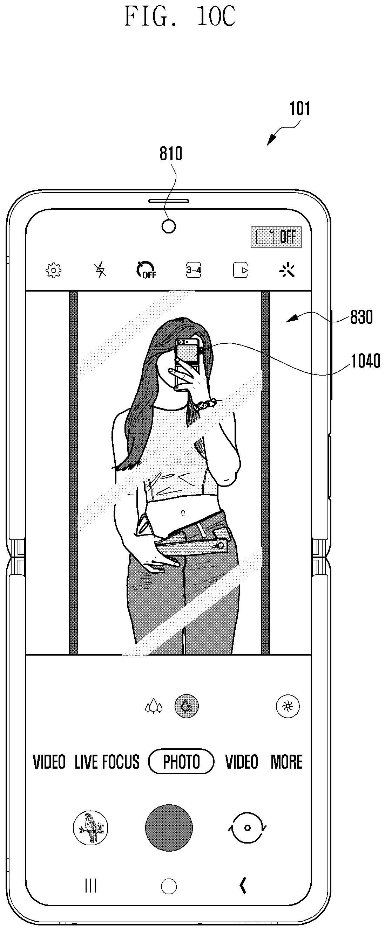

FIG. 10A, FIG. 10B, and FIG. 10C illustrate an example of an operation in which an electronic device supports capturing an image according to an embodiment of the disclosure.

According to an embodiment, FIG. 10A, FIG. 10B, and FIG. 10C may illustrate an example of the front surface of the electronic device 101 in an unfolded state. According to an embodiment, FIG. 10A, FIG. 10B, and FIG. 10C may illustrate an example in which a rear camera (e.g., the second camera 820 of FIG. 8B) of the electronic device 101 operates as a designated camera when the electronic device 101 operates in a designated shooting mode. According to an embodiment, FIG. 10A and FIG. 10B may illustrate an example of displaying a preview 1000 of an image obtained by the second camera 820 operating as the designated camera on a front display (e.g., the first display 830 of FIG. 8A) positioned on the opposite surface to the second camera 820.

In an embodiment, as illustrated in FIG. 10A, the preview 1000 may include at least one object corresponding to each of a reflector (e.g., the reflector 500 of FIG. 5) and an image (e.g., the projection 550 of FIG. 5) projected onto the reflector. For example, the at least one object may include a first object 1010 corresponding to the reflector, a second object 1020 corresponding to a user, a third object 1030 corresponding to the electronic device 101, and a fourth object 1040 corresponding to a second display (e.g., the second display 840 of FIG. 8B) positioned on the same surface as the second camera (e.g., the camera 820 of FIG. 8B) operating as the designated camera in the electronic device 101. According to an embodiment, although not shown in FIG. 10A and FIG. 10B, the at least one object may include a fifth object corresponding to the second camera 820 operating as the designated camera and a sixth object corresponding to a graphic element displayed on the second display 840. In an embodiment, the sixth object corresponding to the graphic element may be displayed based on the fourth object 1040 corresponding to the second display 820.

According to an embodiment, when operating (or entering) the designated shooting mode, the electronic device 101 may provide a guide object 1050 indicating that the shooting mode of the electronic device 101 is the designated shooting mode (e.g., a mirror shot mode) in one designated area (e.g., the bottom center of the screen) of the preview 100. In an embodiment, the guide object 1050 may include a guide icon and/or guide text (e.g., mirror shot) indicating the designated shooting mode.

In an embodiment, FIG. 10B may illustrate an example of providing an area in which a designated graphic element is displayed in the preview 1000 and at least one recommended graphic element (e.g., recommended content) displayable as the designated graphic element. In an embodiment, the area in which the designated graphic element is displayed may include, for example, an area corresponding to the fourth object 1040 (e.g., an area corresponding to the second display 840 of the electronic device 101) in the preview 1000.

According to an embodiment, as illustrated in FIG. 10B, the electronic device 101 may apply a designated effect to the area corresponding to the fourth object 1040 in which the designated graphic element is displayed in the preview 1000, thereby highlighting the area to be distinguished from other objects. For example, the designated effect may be provided based on a graphic-based affordance object for visually providing a user with an area in which a graphic element is displayed. For example, the designated effect may include at least one of a highlighting effect, a color effect, a neon effect, and/or a chroma key effect.

According to an embodiment, as illustrated in FIG. 10B, the electronic device 101 may provide at least one recommended object 1060, 1070, and 1080 (or, at least one object 1060, 1070, 1080) corresponding to the at least one recommended graphic element (or determined graphic element) in one designated area (e.g., the right side of the screen) of the preview 1000. According to an embodiment, the at least one recommended object 1060, 1070, and 1080 may be provided with the designated effect for the area corresponding to the fourth object 1040 on the preview 1000.

According to an embodiment, the at least one recommended object 1060, 1070, and 1080 may include a graphic object related to the at least one recommended graphic element to be substantially displayed on the second display 840 positioned on the same surface as the second camera 820 operating as the designated camera in the designate shooting mode. According to an embodiment, the at least one recommended object 1060, 1070, and 1080 may include a text and/or image form based on a designated format. According to an embodiment, the at least one recommended object 1060, 1070, or 1080 may include text and/or an image generated by a generative AI engine. For example, the electronic device 101 may automatically generate context, based on the generative AI. For example, the electronic device 101 may generate the most appropriate context (e.g., phrase and/or image) for a situation, based on a large language model (LLM). For example, the electronic device 101 may summarize a situation and generate a natural phrase, based on variously trained models. According to an embodiment, the electronic device 101 may generate the at least one recommended object 1060, 1070, and 1080, based on the generated context.

In an embodiment, the object generated by the generative AI is not a phrase or image predictable in advance and predefined, and may include content generated based on various input parameters (e.g., user-related information (e.g., person, place, and time-related information) and photo-related information). In an embodiment, the generated content may be configured to be appropriately displayed on the display (e.g., the cover display) designated by prompt engineering. In an embodiment, the generative AI engine may be an engine included as on-device AI in the electronic device 101, or may include an AI engine provided by an external server. In an embodiment, since an unpredictable image may be displayed on the designated display (e.g., the cover display), a guideline on displayable contents may be provided based on prompt engineering. For example, a guideline, such as not displaying personal information (e.g., a phone number or location), learning to filter out an inappropriate expression or photo, disposing an image to fit the size of the designated display (e.g., the cover display or main display), or configuring an image to match color, may be provided.

According to an embodiment, the at least one recommended object 1060, 1070, and 1080 may be provided to overlap the preview 1000 displayed on the first display 830. According to an embodiment, the at least one recommended object 1060, 1070, and 1080 may be provided in a form corresponding to the form of the display (e.g., the second display 840 of FIG. 8B) on which the graphic element is displayed.

According to an embodiment, as illustrated in FIG. 10C, the attribute and/or type of the at least one recommended object 1060, 1070, and 1080 may be changed (or adjusted) based on a user input (or touch gesture) (e.g., a flick, a swipe, a drag, or a pinch). For example, the electronic device 101 may change the displayed recommended objects 1060, 1070, and 1080 to a group of other recommended objects to provide the group of recommended objects, based on a user input (e.g., a vertically scrolling gesture based on the recommended object). For example, the electronic device 101 may change the style of a selected recommended object to provide the recommended object, based on a user input (e.g., a laterally flicking gesture based on the recommended object). For example, the electronic device 101 change the size of a selected recommended object displayed on the second display 840 to provide the recommended object, based on a user input (e.g., a pinch gesture (e.g., pinch-in (or zoom-out) or pinch-out (zoom-in)) based on the recommended object).

According to an embodiment, one of the at least one recommended object 1060, 1070, and 1080 may be selected based on a user input (or touch gesture) (e.g., a tap). According to an embodiment, the electronic device 101 may detect a user input to select a recommended object in the preview 1000. According to an embodiment, the electronic device 101 may display a graphic element corresponding to the selected recommended object on the second display 840, based on the user input.

According to an embodiment, the electronic device 101 may display the graphic element corresponding to the recommended object selected based on the user input on the second display 840. According to an embodiment, providing (e.g., displaying) the graphic element on the second display 840 of the electronic device 101 will be described with reference to the following drawings. According to an embodiment, when displaying the graphic element on the second display 840, the electronic device 101 may not display the designated effect applied to the area corresponding to the fourth object 1040 in the preview 1000 on the first display 830. According to an embodiment, an object corresponding to the graphic element displayed on the second display 840 may be displayed in the area corresponding to the fourth object 1040 in the preview 1000. For example, the object corresponding to the graphic element displayed on the second display 840 projected onto the reflector may be displayed in the area corresponding to the fourth object 1040.

According to an embodiment, as illustrated in FIG. 10C, when providing the graphic element (e.g., the object 1040), the electronic device 101 may perform post-correction on the graphic element to provide the graphic element. For example, the electronic device 101 may operate to correct the graphic element to be clearly displayed and then display the graphic element on the second display 840.

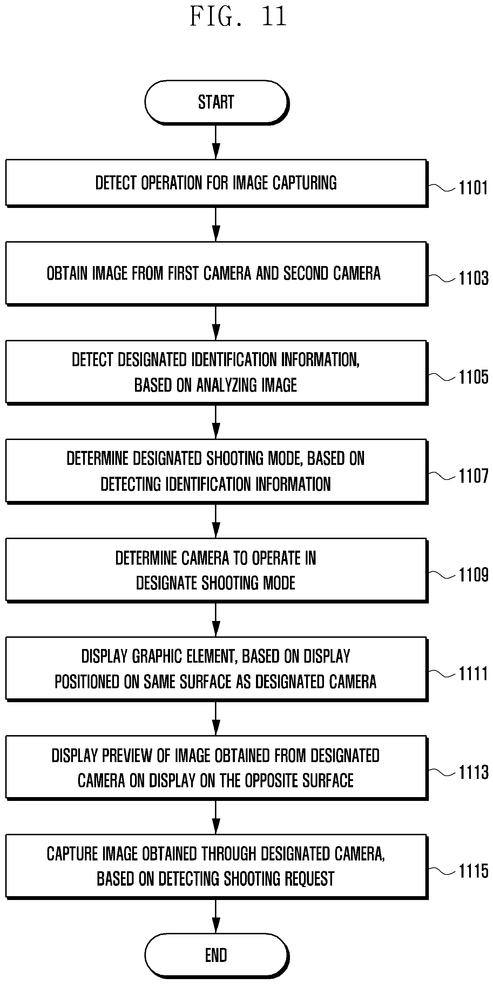

FIG. 11 is a flowchart illustrating an operating method of an electronic device according to an embodiment of the disclosure.

According to an embodiment, FIG. 11 may illustrate an example of an operation in which the electronic device 101 supports capturing an image (e.g., taking a mirror shot based on the reflector 500) according to an embodiment.

A method in which the electronic device 101 supports capturing an image according to an embodiment of the disclosure may be performed, for example, according to the flowchart illustrated in FIG. 11. The flowchart illustrated in FIG. 11 is an example of operations of the electronic device 101 according to an embodiment, in which at least some operations may be performed in a different order, in parallel, or independently, or at least some other operations may be performed complementarily to the at least operations. According to an embodiment of the disclosure, operation 1101 to operation 1115 may be performed by at least one processor (e.g., the processor 120 of FIG. 1 or FIG. 6) of the electronic device 101.

According to an embodiment, the operations illustrated in FIG. 11 may be performed heuristically, for example, in combination with the operations illustrated in FIG. 7 to FIG. 10B, may be performed heuristically by replacing at least some of the illustrated operations and by combining with at least some other operations, or may be performed heuristically as detailed operations of at least some of the illustrated operations.

As illustrated in FIG. 11, the operating method performed by the electronic device 101 according to an embodiment may include an operation 1101 of detecting an operation for image capturing, an operation 1103 of obtaining an image from a first camera and a second camera, an operation 1105 of detecting designated identification information, based on analyzing the image, an operation 1107 of determining a designated shooting mode, based on detecting the identification information, an operation 1109 of determining a designated camera to operate in the designate shooting mode, an operation 1111 of displaying a graphic element, based on a display positioned on the same surface as the designated camera, an operation 1113 of displaying a preview of an image obtained from the designated camera on a display on the opposite surface, and an operation 1115 of capturing an image obtained through the designated camera, based on detecting a shooting request.

Referring to FIG. 11, in operation 1101, the processor 120 of the electronic device 101 may perform an operation of detecting an operation for image capturing. For example, the processor 120 may receive a user input (e.g., selection of an application execution icon) to execute an application related to image capturing (e.g., a shooting application or a camera application) from a user. According to an embodiment, the processor 120 may determine to start capturing an image, based on receiving the user input. Where a feature (e.g. an operation) in Figure 11 resembles a feature (e.g. an operation) in Figure 7, it should be understood that the description of said feature given for Figure 7 may be applied to the corresponding feature of Figure 11.

In operation 1103, the processor 120 may perform an operation of obtaining an image from a camera. According to an embodiment, the processor 120 may perform an operation of obtaining an image from the first camera or the second camera executed to capture an image. According to an embodiment, the processor 120 may perform an operation of obtaining images from the first camera and the second camera.

According to an embodiment, the processor 120 may activate (e.g., turn on) the first camera (e.g., the first camera 651 of FIG. 6 or the first camera 810 of FIG. 8B)(hereinafter, "first camera 810") or the second camera (e.g., the second camera 652 of FIG. 6 or the second camera 820 of FIG. 8A) (hereinafter, "second camera 820"), based on detecting the operation for image capturing (e.g., execution of a shooting application). According to an embodiment, the activated camera may include a previously executed camera, a camera configured to be executed by a user, or a camera designated to be executed by the user when entering the shooting mode. According to an embodiment, the processor 120 may obtain (or receive) an image from the activated camera (e.g., the first camera 810 or the second camera 820).

According to an embodiment, the processor 120 may activate (e.g., turn on) the first camera 810 and the second camera 820, based on detecting the operation for image capturing (e.g., execution of the shooting application). According to an embodiment, the processor 120 may obtain (or receive) an image from each of the activated first camera 810 and second camera 820.

In operation 1105, the processor 120 may perform an operation of detecting designated identification information from the image. According to an embodiment, the processor 120 may detect the designated identification information in a manner similar to that for detecting a QR code, a barcode, and/or text. For example, an image for the designated identification information may be simplified in a black-and-white format (e.g., 0/1) or the like, and the processor 120 may detect the identification information by scanning the pattern of the image obtained from the camera and matching areas with similar patterns.

According to an embodiment, the processor 120 may operate to compare the image (e.g., a first image) from the executed camera (e.g., the first camera 810 or the second camera 820) with a preregistered reference image (e.g., the designated identification information) and to detect the preregistered reference image (e.g., the designated identification information) from the first image.

According to an embodiment, the processor 120 may operate to compare a first image including the image obtained from the first camera 810 and the image obtained from the second camera 820 with the preregistered reference image ((e.g., the designated identification information) and to detect the preregistered reference image (e.g., the designated identification information) from the first image.

In an embodiment, the designated identification information may include an image object designated in advance for determining whether a designated shooting mode is executed. In an embodiment, the designated image object may include at least one of a designated face object or a designated identifier. According to an embodiment, the processor 120 may determine whether the designated identification information is detected from the first image obtained from the first camera 810 and/or the second camera 820. According to an embodiment, the processor 120 may operate to compare the first image obtained from the first camera 810 and/or the second camera 820 with a preset reference image in a memory (e.g., the memory 130 of FIG. 1 or FIG. 6) of the electronic device 101 and to identify the designated face object or the designated identifier from the first image.

In operation 1107, the processor 120 may perform an operation of determining a designated shooting mode, based on detecting the identification information. According to an embodiment, the processor 120 may determine the designated shooting mode, based on detecting the designated identification information (e.g., the designated face object or the designated identifier) from the image of the first camera 810 and/or the second camera 820.

In operation 1109, the processor 120 may perform an operation of determining a designated camera to operate in the designated shooting mode. According to an embodiment, the processor 120 may determine the executed camera (e.g., the first camera 810 or the second camera 820 that obtains the first image) as the designated camera to operate in the designated shooting mode, based on determining the designated shooting mode. According to an embodiment, the processor 120 may determine the designated camera to operate in the designated shooting mode among the first camera 810 and the second camera 820, based on determining the designated shooting mode. According to an embodiment, the processor 120 may determine either the first camera 810 or the second camera 820 as the designated camera to operate in the designated shooting mode, based on a designated schema (or algorithm, model, network, or function) for determining the designated camera. According to an embodiment, the processor 120 may determine the designated camera, based on image analysis, at least based on the distance to a subject, the size of the face object, whether the face object is recognized, and/or whether the designated identifier is recognized based on image analysis.

According to an embodiment, when similar face objects (e.g., face objects of the user) are recognized from the image of the first camera 810 and the image of the second camera 820, the processor 120 may determine the designated camera, based on distance information about each face object. For example, the processor 120 may determine (e.g., estimate) the first distance from a first face object extracted from the image of the first camera 810, and may determine (e.g., estimate) the second distance from a second face object extracted from the image of the second camera 820. According to an embodiment, the processor 120 may determine a camera that has captured an image including a face object having a relatively long distance among the first distance and the second distance (e.g., a face object relatively distant from the electronic device 101) as the designated camera.

According to an embodiment, when the similar face objects (e.g., the face objects of the user) are recognized from the image of the first camera 810 and the image of the second camera 820, the processor 120 may determine the designated camera, based on size information about each face object. For example, the processor 120 may compare the first size of the first face object extracted from the image of the first camera 810 and the second size of the second face object extracted from the image of the second camera 820. According to an embodiment, the processor 120 may determine a camera that has captured an image including a face object having a relatively small size among the first size and the second size (e.g., a face object relatively close to the electronic device 101) as the designated camera.

According to an embodiment, when a face object (e.g., a face object of the user) is recognized from either the image of the first camera 810 or the image of the second camera 820, the processor 120 may determine a camera (e.g., a camera positioned on the opposite surface to a camera facing the user) that has captured an image not including the face object as the designated camera.

According to an embodiment, when the designated identifier is recognized from either the image of the first camera 810 or the image of the second camera 820, the processor 120 may determine a camera (e.g., a camera that photographs the designated identifier projected onto the reflector 500) that has captured an image including the designated identifier as the designated camera.

In operation 1111, the processor 120 may perform an operation of displaying a graphic element, based on a display positioned on the same surface as the designated camera. According to an embodiment, the processor 120 may operate to display a graphic element appropriate for a designated situation on the display (e.g., the first display 830 of FIG. 8A or the second display 840 of FIG. 8B) positioned on the same surface as the designated camera, based on determining the designated camera to operate in the designated shooting mode. According to an embodiment, when determining the designated camera, the electronic device 101 may determine the display positioned on the same surface as the designated camera as a target display for displaying a designated graphic element. According to an embodiment, the electronic device 101 may operate to display the designated graphic element on the target display, based on determining the target display for displaying the graphic element.

According to an embodiment, the processor 120 may perform situation awareness, based on determining the designated shooting mode. According to an embodiment, the processor 120 may determine the current position of the user, an activity of the user, and/or a situation corresponding to a recognition object, based on the situation awareness. According to an embodiment, the processor 120 may generate a graphic element corresponding to the determined situation. According to an embodiment, generating and providing the corresponding graphic element based on the situation awareness will be described with reference to the following drawings.

In operation 1113, the processor 120 may perform an operation of displaying a preview of an image obtained by the designated camera on a display on the opposite surface. According to an embodiment, the processor 120 may operate to display the preview of the image obtained by the designated camera on the display positioned on the opposite surface to the target display, based on determining the target display. According to an embodiment, the processor 120 may display the designated graphic element on the display positioned on the same surface as the designated camera in the designated shooting mode. According to an embodiment, when operating with using the first camera 810 and the second camera 820 at the start of the operation, the processor 120 may further include an operation of deactivating (e.g., turning off) a camera on the opposite surface to the designated camera operating in the designated shooting mode.

According to an embodiment, the electronic device 101 may display the preview of the image obtained by the designated camera on the display positioned on the opposite surface to the designated camera (or the opposite surface of the target display). In an embodiment, the preview may include at least one object corresponding to each of a reflector (e.g., the reflector 500 of FIG. 5) and an image (e.g., the projection 550 of FIG. 5) projected onto the reflector. For example, the at least one object may include an object corresponding to the reflector, an object corresponding to the user, an object corresponding to the electronic device 101, an object corresponding to the target display positioned on the same surface as the designated camera in the electronic device 101, an object corresponding to the designated camera, and/or an object corresponding to the graphical element displayed on the target display.

In operation 1115, the processor 120 may perform an operation of taking the image obtained through the designated camera, based on detecting a shooting request. According to an embodiment, the processor 120 may obtain the image from the designated camera to operate in the designated capturing mode; based on detecting a user input to capture an image. According to an embodiment, the processor 120 may capture an image, based on the image obtained through the designated camera. According to an embodiment, the captured image may include the reflector (e.g., the reflector 500 of FIG. 5) and the image (e.g., the projection 550 of FIG. 5) projected onto the reflector.

According to an embodiment, the processor 120 may perform an operation of providing the captured image. According to an embodiment, the processor 120 may display the captured image on the display. For example, the processor 120 may replace the preview displayed on the display displaying the preview with the captured image. According to an embodiment, the processor 120 may store the captured image in the memory (e.g., the memory 130 of FIG. 1 or FIG. 6) of the electronic device 101. According to an embodiment, the processor 120 may share (e.g., transmit) the captured image with a designated external device (e.g., a cloud, and/or another designated electronic device).

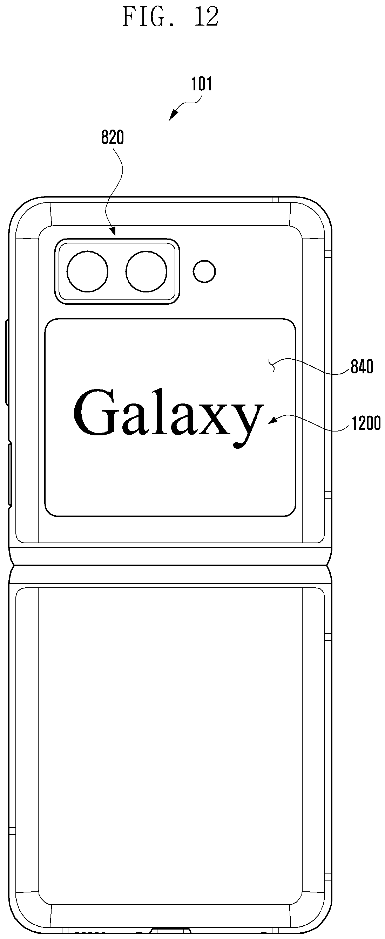

FIG. 12 illustrates an example of an operation in which an electronic device provides designated identification information according to an embodiment of the disclosure.

According to an embodiment, FIG. 12 may illustrate an example of the rear surface of the electronic device 101 in an unfolded state. According to an embodiment, FIG. 12 may illustrate an example of a designated identifier providable as the designated identification information for determining a designated shooting mode.

According to an embodiment, the designated identifier may be configured variously by a user. For example, the designated identifier may include a visual design object designated or produced by the user. For example, the visual design object may include an icon, text, and/or an image (e.g., a still image, a video, and an animation image). In an embodiment, the visual design object may include an icon and/or text corresponding to a brand identifier (or logo) indicating the electronic device 101. In an embodiment, the visual design object may be store in advance in a memory (e.g., the memory 130 of FIG. 1 or FIG. 6) of the electronic device 101, or may be produced by the user and stored in the memory 130.

According to an embodiment, the electronic device 101 may operate to display the designated identifier 1200 on a first display (e.g., the first display 830 of FIG. 8A) or a second display 840 to determine a designated shooting mode when entering a shooting mode. For example, as illustrated in FIG. 12, the electronic device 101 may display the designated identifier 1200 (e.g., "Galaxy") on the second display 840. According to an embodiment, the electronic device 101 may obtain the designated identifier 1200 projected onto (e.g. reflected by) a reflector through the second camera 820, and may analyze the same. According to an embodiment, when providing the designated identifier 1200 (e.g., "Galaxy") on the second display 840, the electronic device 101 may provide the designated identifier 1200 that is vertically reversed (or vertically symmetrized). For example, when the designated identifier 1200 is photographed through the reflector, the electronic device 101 may provide the designated identifier 1200 in a form of being flipped based on the y-axis so that the photographed designated identifier 1200 is normally displayed without being vertically reversed. A relevant example will be described below.

According to an embodiment, the designated identifier (e.g., the brand identifier) may be imprinted on the rear cover of the electronic device 101. According to an embodiment, the user may configure the brand identifier imprinted on the rear cover of the electronic device 101 as the designated identifier. According to an embodiment, the electronic device 101 may obtain the designated identifier (e.g., the designated identifier imprinted on the rear cover) projected onto the reflector through the second camera 820, and may analyze the same. For example, if the rear cover of the electronic device 101 includes a surface detail or similar which is recognizable from a reflected image that includes the rear cover (e.g. such as may be visible in a mirror reflecting the rear cover), then this surface detail may be used as the designated identifier.

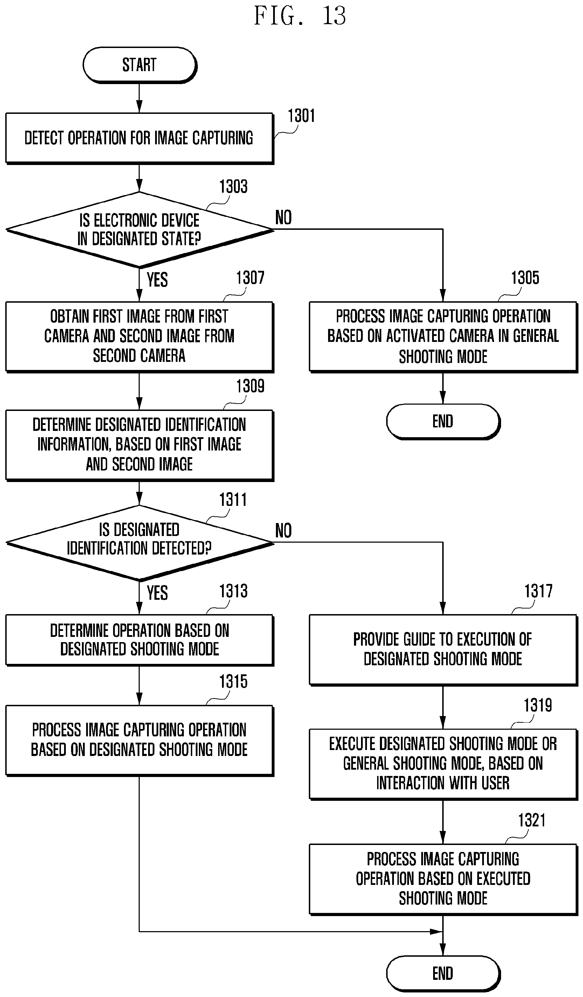

FIG. 13 is a flowchart illustrating an operating method of an electronic device according to an embodiment of the disclosure.

According to an embodiment, FIG. 13 may illustrate an example of an operation in which the electronic device 101 supports capturing an image (e.g., taking a mirror shot based on the reflector 500 of FIG. 5) according to an embodiment.

A method in which the electronic device 101 supports capturing an image according to an embodiment of the disclosure may be performed, for example, according to the flowchart illustrated in FIG. 13. The flowchart illustrated in FIG. 13 is an example of operations of the electronic device 101 according to an embodiment, in which at least some operations may be performed in a different order, in parallel, or independently, or at least some other operations may be performed complementarily to the at least operations. According to an embodiment of the disclosure, operation 1301 to operation 1321 may be performed by at least one processor (e.g., the processor 120 of FIG. 1 or FIG. 6) of the electronic device 101.

According to an embodiment, the operations illustrated in FIG. 13 may be performed heuristically, for example, in combination with the operations illustrated in FIG. 7 to FIG. 12, may be performed heuristically by replacing at least some of the illustrated operations and by combining with at least some other operations, or may be performed heuristically as detailed operations of at least some of the illustrated operations.

According to an embodiment, the electronic device 101 may perform a designated shooting mode, based on any one camera (e.g., a front camera) executed when operating. According to an embodiment, the electronic device 101 may perform the designated shooting mode, based on a first camera (e.g., the front camera) and a second camera (e.g., a rear camera), when operating. According to an embodiment, FIG. 13 may illustrate an example of an operation of performing the designated shooting mode, based on a plurality of cameras, such as the first camera and the second camera.

As illustrated in FIG. 13, the operating method performed by the electronic device 101 according to an embodiment may include an operation 1301 of detecting an operation for image capturing, an operation 1303 of determining whether the electronic device 101 is in a designated state, an operation 1305 of processing an image capturing operation based on an activated camera in a general shooting mode, based on determining that the electronic device 101 is not in the designated state, an operation 1307 of obtaining a first image from a first camera and a second image from a second camera, based on determining that the electronic device 101 is in the designated state, an operation 1309 of determining designated identification information, based on the first image and the second image, an operation 1311 of determining whether the designated identification is detected, an operation 1313 of determining an operation based on a designated shooting mode, based on detecting the designated identification, an operation 1315 of processing an image capturing operation based on the designated shooting mode, an operation 1317 of providing a guide to execution of the designated shooting mode, based on not detecting the designated identification information, an operation 1319 of executing the designated shooting mode or the general shooting mode, based on interaction with a user, and an operation 1321 of processing an image capturing operation based on the executed shooting mode.

Referring to FIG. 13, in operation 1301, the processor 120 of the electronic device 101 may perform an operation of detecting an operation for image capturing. For example, the processor 120 may receive a user input (e.g., selection of an application execution icon) to execute an application related to image capturing (e.g., a shooting application or a camera application) from a user. According to an embodiment, the processor 120 may determine to start capturing an image, based on receiving the user input.

In operation 1303, the processor 120 may perform an operation of determining whether the electronic device 101 is in a designated state. According to an embodiment, the processor 120 may determine whether the electronic device 101 is in a first state (e.g., an unfolded state) or a second state (e.g., an intermediate state or a folded state) when a shooting mode starts. In an embodiment, the designated state may refer to the first state (e.g., the unfolded state) of the electronic device 101. In an embodiment, the unfolded state may refer to an opened state, an open state, or a flat (or even) state. In an embodiment, the unfolded state may refer to a state in which the electronic device 101 is completely unfolded. For example, in the unfolded state, the angle between a first housing and a second housing is about 180 degrees, and a first surface of the first housing and a second surface of the second housing may be disposed to face substantially the same direction.

According to an embodiment, the processor 120 may measure the folding (or unfolding) angle of the electronic device 101 through a sensor circuit (e.g., the sensor circuit 670 of FIG. 6) (e.g., a state detection sensor). According to an embodiment, the processor 120 may determine whether the electronic device 101 is in the designated state (e.g., the unfolded state), based on sensor data (e.g., the folding (or unfolding) angle) measured by the sensor circuit 670.

In operation 1305, the processor 120 may perform an operation of processing an image capturing operation based on an activated camera (e.g., the first camera 810 or the second camera 820) in a general shooting mode, based on determining that the electronic device 101 is not in the designated state (e.g., determining that the electronic device 101 is in the second state) in operation 1303 (e.g., "No" in operation 1303). According to an embodiment, when determining that the electronic device 101 is in the second state, the processor 120 may determine the shooting mode as the general shooting mode, and may operate to support image capturing in the general shooting mode.

In operation 1307, the processor 120 may perform an operation of obtaining a first image from the first camera 810 and a second image from the second camera 820, based on determining that the electronic device 101 is in the designated state (e.g., determining that the electronic device 101 is in the first state) in operation 1303 (e.g., "Yes" in operation 1303). According to an embodiment, the processor 120 may activate (e.g., turn on) the first camera 810 and the second camera 820, based on detecting the first state (e.g., the unfolded state) of the electronic device 101 when entering the shooting mode. According to an embodiment, the processor 120 may obtain (or receive) the images (e.g., the first image and the second image) respectively from the activated first camera 810 and second camera 820.

In operation 1309, the processor 120 may perform an operation of determining designated identification information, based on the first image and the second image. According to an embodiment, the processor 120 may perform image analysis (e.g., object recognition and/or face recognition), based on each of the first image obtained from the first camera 810 and the second image obtained from the second camera 820. According to an embodiment, the processor 120 may detect the designated identification information, based on the result of the image analysis. In an embodiment, the designated identification information may include an image object designated in advance for determining whether the designated shooting mode is executed. In an embodiment, the designated image object may include at least one of a designated face object or a designated identifier. According to an embodiment, the processor 120 may operate to compare the first image of the first camera 810 and the second image of the second camera 820, and to identify the designated face object from the first image of the first camera 810 and the second image of the second camera 820. According to an embodiment, the processor 120 may operate to identify the designated identifier from the first image of the first camera 810 or the second image of the second camera 820.

In operation 1311, the processor 120 may perform an operation of determining whether the designated identification information is detected. According to an embodiment, the processor 120 may determine whether the designated identification information (e.g., the designated face object or the designated identifier) is detected, at least based on the first image and/or the second image.

In operation 1313, the processor 120 may perform an operation of determining an operation based on the designated shooting mode, based on detecting the designated identification information in operation 1311 (e.g., "Yes" in operation 1311). According to an embodiment, when the electronic device 101 is in the unfolded state and the designated identification information is detected from at least one image, the processor 120 may determine that the shooting mode is the designated shooting mode.

In operation 1315, the processor 120 may perform an operation of processing an image capturing operation based on the designated shooting mode. According to an embodiment, the processor 120 may operate to determine a designated camera (e.g., the first camera 810 or the second camera 820) and a target display to operate in the designated shooting mode, and to support capturing an image including a graphic element projected onto a reflector in the designated shooting mode, based on the designated camera and the target display.

In operation 1317, the processor 120 may perform an operation of providing a guide for executing the designated shooting mode, based on not detecting the designated identification information in operation 1311 (e.g., "No" in operation 1311). According to an embodiment, the processor 120 may provide a selection guide to whether to operate in the designated shooting mode or the general shooting mode on the first display 830, based on operating in the unfolded state. According to an embodiment, the user may select the designated shooting mode or the general shooting mode, based on the selection guide.

In operation 1319, the processor 120 may perform an operation of executing the designated shooting mode or the general shooting mode, based on interaction with the user. According to an embodiment, the processor 120 may execute a corresponding shooting mode (e.g., the designated shooting mode or the general shooting mode), based on a user input received through the selection guide.

In operation 1321, the processor 120 may perform an operation of processing an image capturing operation based on the executed shooting mode. According to an embodiment, in the designated shooting mode, the processor 120 may operate to supporting capturing an image including a graphic element projected into the reflector, based on the designated camera and target display. According to an embodiment, in the general shooting mode, the processor 120 may operate to support general image capturing, based on the activated camera and an activated display.

According to an embodiment, operation 1317, operation 1319, and/or operation 1321 may be optional operations. For example, at least one of operation 1317, operation 1319, and/or operation 1321 may be selectively performed or may not be performed, based on the configuration of the electronic device 101. For example, when the designated identification information is not detected, the processor 120 may operate to determine the general shooting mode, and to support image capturing in the general shooting mode.

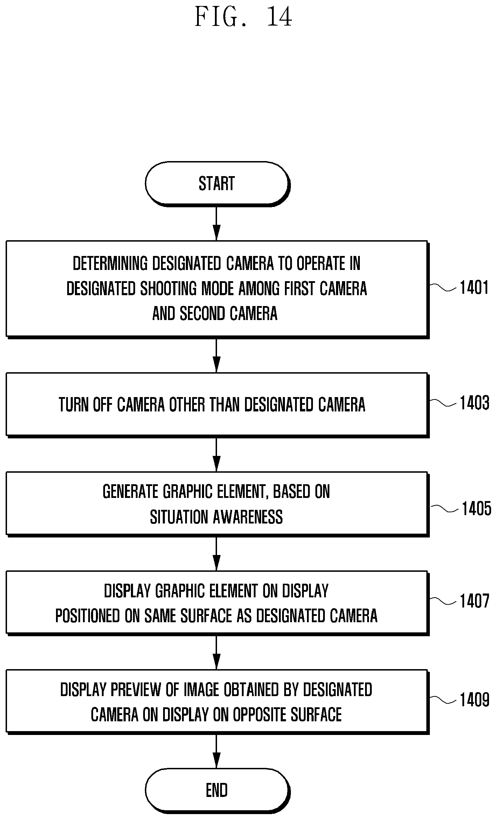

FIG. 14 is a flowchart illustrating an operating method of an electronic device according to an embodiment of the disclosure.

According to an embodiment, FIG. 14 may illustrate an example of an operation in which the electronic device 101 supports capturing an image (e.g., taking a mirror shot based on the reflector 500 of FIG. 5) according to an embodiment.

A method in which the electronic device 101 supports capturing an image according to an embodiment of the disclosure may be performed, for example, according to the flowchart illustrated in FIG. 14. The flowchart illustrated in FIG. 14 is an example of operations of the electronic device 101 according to an embodiment, in which at least some operations may be performed in a different order, in parallel, or independently, or at least some other operations may be performed complementarily to the at least operations. According to an embodiment of the disclosure, operation 1401 to operation 1409 may be performed by at least one processor (e.g., the processor 120 of FIG. 1 or FIG. 6) of the electronic device 101.

According to an embodiment, the operations illustrated in FIG. 14 may be performed heuristically, for example, in combination with the operations illustrated in FIG. 7 to FIG. 13, may be performed heuristically by replacing at least some of the illustrated operations and by combining with at least some other operations, or may be performed heuristically as detailed operations of at least some of the illustrated operations.

According to an embodiment, the electronic device 101 may perform a designated shooting mode, based on any one camera (e.g., a front camera) executed when operating. According to an embodiment, the electronic device 101 may perform the designated shooting mode, based on a first camera (e.g., the front camera) and a second camera (e.g., a rear camera), when operating. According to an embodiment, FIG. 14 may illustrate an example of an operation of performing the designated shooting mode, based on a plurality of cameras, such as the first camera and the second camera.

As illustrated in FIG. 14, the operating method performed by the electronic device 101 according to an embodiment may include an operation 1401 of determining a designated camera to operate in a designated shooting mode among the first camera 810 and the second camera 820, an operation 1403 of turning off a camera other than the designated camera, an operation 1405 of generating a graphic element, based on situation awareness, an operation 1407 of displaying the graphic element on a display positioned on the same surface as the designated camera, and an operation 1409 of displaying a preview of an image obtained by the designated camera on a display on the opposite surface.

Referring to FIG. 14, in operation 1401, the processor 120 of the electronic device 101 may perform an operation of determining a designated camera to operate in a designated shooting mode among the first camera 810 and the second camera 820. According to an embodiment, the processor 120 may determine one of the first camera 810 or the second camera 820 as the designated camera to operate in the designated shooting mode, based on a designated schema (or algorithm, model, network, or function) for determining the designated camera. According to an embodiment, the processor 120 may determine the designated camera, at least based on the distance to a subject, the size of a face object, whether the face object is recognized, and/or whether a designated identifier is recognized based on image analysis.

According to an embodiment, when similar face objects (e.g., face objects of a user) are recognized from the image of the first camera 810 and the image of the second camera 820, the processor 120 may determine the designated camera, based on distance information about each face object. For example, the processor 120 may determine (e.g., estimate) the first distance from a first face object extracted from the image of the first camera 810, and may determine (e.g., estimate) the second distance from a second face object extracted from the image of the second camera 820. According to an embodiment, the processor 120 may determine a camera that has captured an image including a face object having a relatively long distance among the first distance and the second distance (e.g., a face object relatively distant from the electronic device 101) as the designated camera.

According to an embodiment, when the similar face objects (e.g., the face objects of the user) are recognized from the image of the first camera 810 and the image of the second camera 820, the processor 120 may determine the designated camera, based on size information about each face object. For example, the processor 120 may compare the first size of the first face object extracted from the image of the first camera 810 and the second size of the second face object extracted from the image of the second camera 820. According to an embodiment, the processor 120 may determine a camera that has captured an image including a face object having a relatively small size among the first size and the second size (e.g., a face object relatively close to the electronic device 101) as the designated camera.

According to an embodiment, when a face object (e.g., a face object of the user) is recognized from either the image of the first camera 810 or the image of the second camera 820, the processor 120 may determine a camera (e.g., a camera positioned on the opposite surface to a camera facing the user) that has captured an image not including the face object as the designated camera.

According to an embodiment, when the designated identifier is recognized from either the image of the first camera 810 or the image of the second camera 820, the processor 120 may determine a camera (e.g., a camera that photographs the designated identifier projected onto the reflector 500 of FIG. 5) that has captured an image including the designated identifier as the designated camera.

According to an embodiment, when determining the designated camera, the processor 120 may perform an operation of determining a display positioned on the same surface as the designated camera as a target display for displaying a designated graphic element.

In operation 1403, the processor 120 may perform an operation of turning off a camera other than the designated camera. According to an embodiment, the processor 120 may deactivate (e.g., turn off) a camera on the opposite surface to the designated camera, based on determining the designated camera to operate in the designated shooting mode. For example, the processor 120 may control the second camera 820 to remain activated and the first camera 810 to be deactivated, based on determining that the second camera 820 as the designated camera. For example, the processor 120 may control the first camera 810 to remain activated and the second camera 820 to be deactivated, based on determining that the first camera 810 as the designated camera.

In operation 1405, the processor 120 may perform an operation of generating a graphic element, based on situation awareness. According to an embodiment, the processor 120 may perform situation awareness to determine a graphic element to be displayed based on a shooting mode operating as the designated shooting mode. According to an embodiment, the processor 120 may determine the current position of the user, an activity of the user, and/or a situation corresponding to a recognition object, based on the situation awareness. According to an embodiment, the processor 120 may generate a graphic element corresponding to the determined situation. According to an embodiment, generating and providing the corresponding graphic element based on the situation awareness will be described with reference to the following drawings.

In operation 1407, the processor 120 may perform an operation of displaying the graphic element on the display (e.g., the target display) positioned on the same surface as the designated camera. According to an embodiment, when the display (e.g., the target display) positioned on the same surface as the designated camera is deactivated (or turned off), the processor 120 may further perform an operation of activating (or turning on) the target display. According to an embodiment, the processor 120 may control the target display to display the generated graphic element. According to an embodiment, the processor 120 may operate to display the generated graphic element on a second display 840, based on determining the second display 840 as the target display for displaying the graphic element. According to an embodiment, the processor 120 may operate to display the generated graphic element on a first display 830, based on determining the first display 830 as the target display for displaying the graphic element.

In operation 1409, the processor 120 may perform an operation of displaying a preview of an image obtained by the designated camera on a display on the opposite surface. According to an embodiment, the processor 120 may determine the display positioned on the opposite surface to the target display (or the designated camera). According to an embodiment, when the display positioned on the opposite surface is deactivated (or turned off), the processor 120 may further perform an operation of activating (or turning on) the display. According to an embodiment, the processor 120 may control the display to display the preview of the image obtained by the designated camera. According to an embodiment, the processor 120 may operate to display the preview of the image obtained by the designated camera on the first display 830 positioned on the opposite surface to the second display 840, based on determining the second display 840 as the target display. According to an embodiment, the processor 120 may operate to display the preview of the image obtained by the designated camera on the second display 840 positioned on the opposite surface to the first display 830, based on determining the second display 840 as the target display.

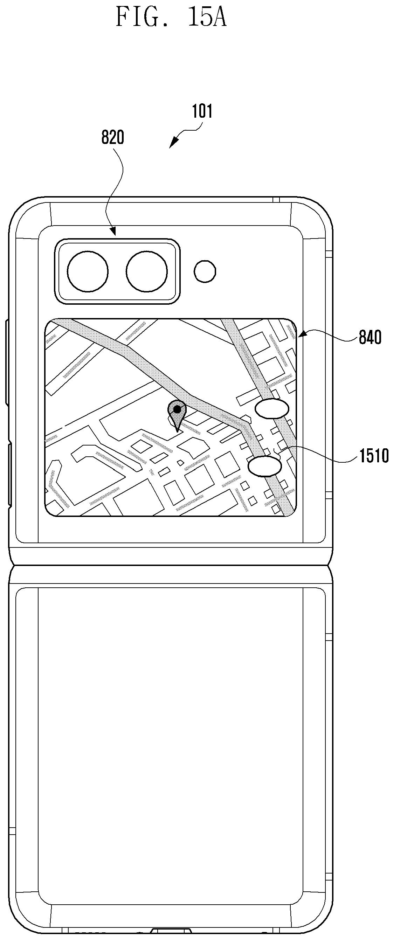

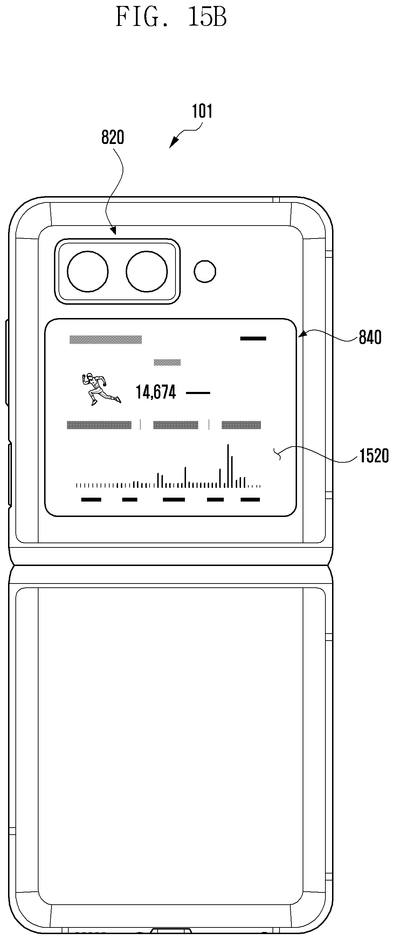

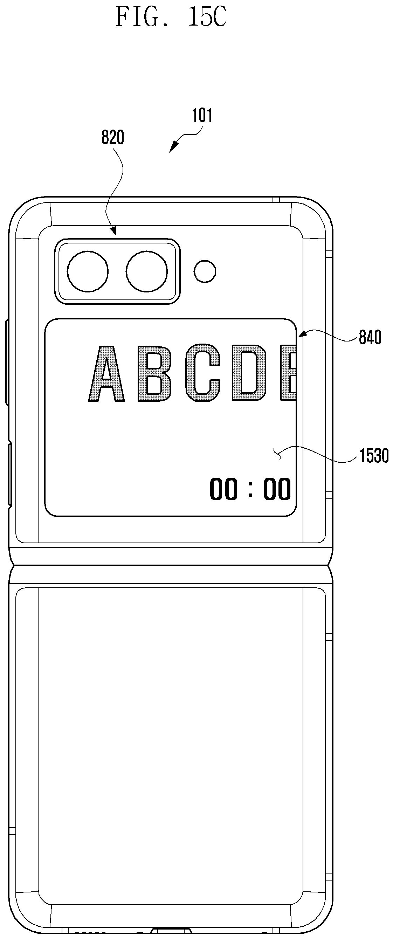

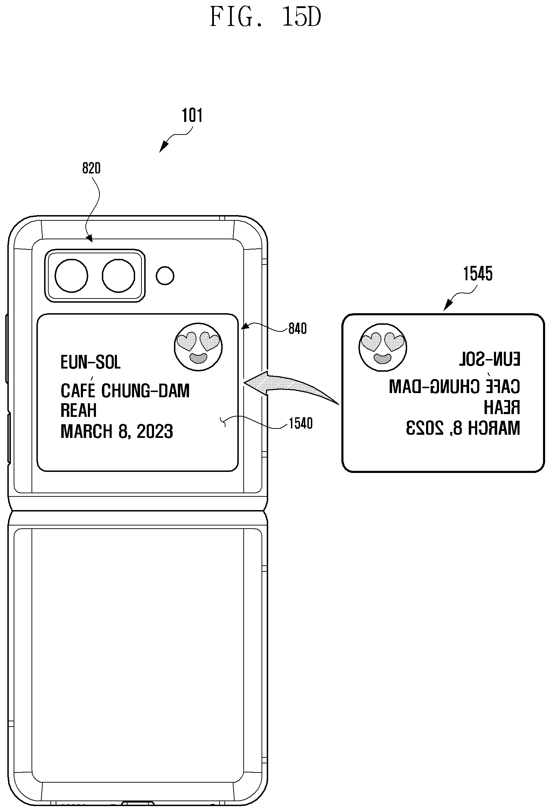

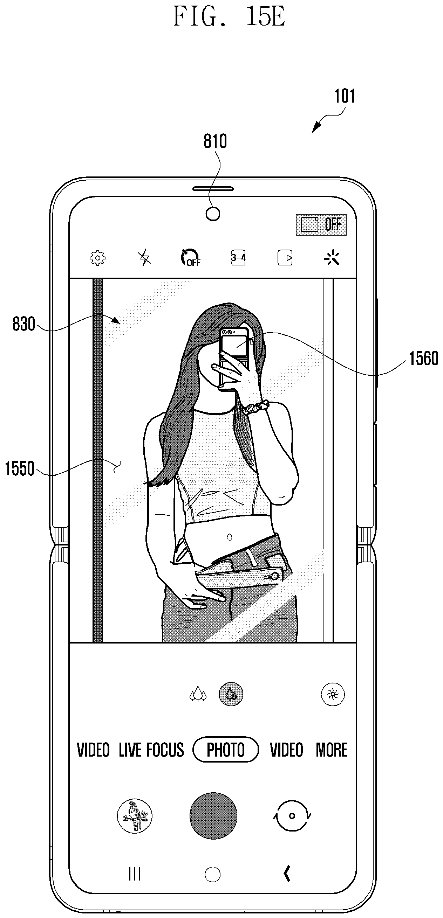

FIG. 15A, FIG. 15B, FIG. 15C, FIG. 15D, and FIG. 15E illustrate examples of an operation in which an electronic device provides a graphic element and a preview according to an embodiment of the disclosure.

According to an embodiment, FIG. 15A, FIG. 15B, FIG. 15C, and FIG. 15D may illustrate examples of the rear surface of the electronic device 101 in an unfolded state. According to an embodiment, FIG. 15E may illustrate an example of the front surface of the electronic device 101 in the unfolded state.

According to an embodiment, as illustrated in FIG. 15A, FIG. 15B, FIG. 15C, and FIG. 15D, the electronic device 101 may include a second camera 820 and a second display 840 disposed on the rear surface (e.g., a second surface) in the unfolded state. According to an embodiment, as illustrated in FIG. 15E, the electronic device 101 may include a first camera 810 and a first display 830 disposed on the front surface (e.g., a first surface) in the unfolded state. According to an embodiment, the first camera 810 and the second camera 820 may be disposed on the opposite surfaces of the electronic device 101 in the unfolded state. According to an embodiment, the first display 830 and the second display 840 may be disposed on the opposite surfaces of the electronic device 101 in the unfolded state. According to an embodiment, the first camera 810 may be disposed on the same surface (e.g., the front surface) as the first display 830, and the second camera 820 may be disposed on the same surface (e.g., the rear surface) as the second display 840.

According to an embodiment, FIG. 15A, FIG. 15B, FIG. 15C, FIG. 15D, and FIG. 15E may illustrate an example in which the second camera 820 operates as a designated camera in a designated shooting mode, and the second display 840 operates as a target display displaying a graphic element, and the first display 830 operates as a display displaying a preview of an image. For example, a case may be assumed in which the first camera 810 and the first display 830 on the front surface of the electronic device 101 face a user and the second camera 820 and the second display 840 on the rear surface of the electronic device 101 face a reflector (e.g., the reflector 500 of FIG. 5).

As illustrated in FIG. 15A, FIG. 15B, FIG. 15C, and FIG. 15D, FIG. 15A, FIG. 15B, FIG. 15C, and FIG. 15D may illustrate various examples of displaying various graphic elements providable in the designated shooting mode on the second display 840. According to an embodiment, when providing a graphic element on the second display 840, the electronic device 101 may provide the graphic element that is vertically reversed (or vertically symmetrized). For example, when the graphic element is photographed through the reflector, the electronic device 101 may provide the graphic element displayed on the second display 840 in a form of being flipped based on the y-axis so that the photographed graphic element is normally displayed on the first display 830 without being vertically reversed, an example of which is illustrated in FIG. 15D.

According to an embodiment, the electronic device 101 may perform situation awareness, based on the designated shooting mode. According to an embodiment, the electronic device 101 may determine the current position of the user, an activity of the user, and/or a situation corresponding to a recognition object, based on the situation awareness. For example, the electronic device 101 provides user-oriented content (e.g., a graphic element), based on context information (e.g., information reflecting the situation-intention of the user) recognized based on various situation awareness technologies, thereby providing information more appropriate for the situation of the user. For example, the electronic device 101 may provide more customized recommended content (e.g., a recommended graphic element reflecting the situation-intention of the user) for the user, based on the situation awareness (e.g., by reflecting the situation-intention of the user).

According to an embodiment, the electronic device 101 may include a cognitive sensor circuit (not shown) for situation awareness. It will be appreciated that the cognitive sensor circuit is an example of a component for implementing the disclosed situation awareness and, at least one processor (e.g. executing appropriate instructions) may be used for implementing the disclosed situation awareness. In an embodiment, the electronic device 101 may recognize various situations related to the user using the electronic device 101 by using the cognitive sensor circuit. According to an embodiment, the electronic device 101 may detect various situations in which the user uses content through the electronic device 101 by using the cognitive sensor circuit for a user-oriented intelligent service. According to an embodiment, the cognitive sensor circuit may include various components, such as at least one sensor circuit (e.g., the sensor module 176 of FIG. 1 or the sensor circuit 670 of FIG. 6) to detect the situation of the user, at least one camera (e.g., the camera module 180 of FIG. 1 or the camera 650 of FIG. 6), a touch sensor, a position tracking circuit (e.g., a GNSS module), and/or a time calculation circuit (e.g., a timer). According to an embodiment, the cognitive sensor circuit is not limited to the listed components, and may include various components available for situation awareness technology for detecting the situation of the user.

In an embodiment, the electronic device 101 may generate context information (e.g., a situation awareness result), based on various sensing data based on the situation awareness.

In an embodiment, the context information (or context data) may include various sensing data (e.g., acceleration sensing data, gyro sensing data, barometric pressure sensing data, touch sensing data, position sensing data, time sensing data, application operation sensing data, content sensing data, and camera image data) obtained from the cognitive sensor circuit.

In an embodiment, the context information (or context data) may include TPOAM information. For example, the context information may include at least one element (or information) of time (T), place (P), occasion (or frequency) (O), application (A), and momentum (M). In an embodiment, TPOAM may refer to the time (T), place (P), occasion (O), application (A), and/or momentum (M) where a log is generated, for example, as the user's usage of the electronic device 101 occurs. In an embodiment, application (A) may refer to an application used by the user. In an embodiment, momentum (M) may refer to an index value obtained by normalizing whether the user's recent content-TPOA increases or decreases. According to an embodiment, at least part of the context information may be obtained from an external device that is communicatively connected to the electronic device 101. In an embodiment, the external device may include a wearable device, such as a ring device (e.g., a smart ring), a watch device, a glasses device, and/or an earbud device, and other electronic devices (e.g., a smartphone).

In an embodiment, the context information (or context data) may include various learning data (or content (e.g., a graphic element) inference data) obtained based on the user's learning through interaction between the electronic device 101 and the user. In an embodiment, the context information may be obtained through various schemas (or algorithms or functions) for inferring final recommended content (e.g., a graphic element) corresponding to situation awareness according to the user's usability.

According to an embodiment, the electronic device 101 may generate a graphic element (or content) corresponding to the context information (e.g., a situation awareness result). According to an embodiment, the graphic element may be graphically generated using at least one data according to the context information. According to an embodiment, the electronic device 101 may display the generated graphic element on the second display 840, thereby providing the same for the user, examples of which are illustrated in FIG. 15A, FIG. 15B, FIG. 15C, and FIG. 15D. According to an embodiment, when providing the graphic element on the second display 840, the electronic device 101 may provide the graphic element that is vertically reversed (or vertically symmetrized, or reversed from left to right, or flipped horizontally). For example, when the graphic element is photographed through the reflector, the electronic device 101 may provide the graphic element displayed on the second display 840 in a form of being flipped based on a vertical axis (e.g., the y-axis) so that the photographed graphic element is normally displayed on the first display 830 without being vertically reversed, an example of which is illustrated in FIG. 15D.

According to an embodiment, as illustrated in FIG. 15A, the electronic device 101 may generate a graphic element 1510 (e.g., content including map data provided through a map application) related to the current position (e.g., an image capturing position) of the user based on current position information according to the situation awareness result, and may display the graphic element 1510 (e.g., a map content screen) on the second display 840.

According to an embodiment, as illustrated in FIG. 15B, the electronic device 101 may generate a graphic element 1520 (e.g., content including exercise data provided through a health application and/or a communicatively connected external device) related to activity information (e.g., exercise information or health information) about the user according to the situation awareness, and may display the graphic element 1520 (e.g., an exercise content screen) on the second display 840.

According to an embodiment, as illustrated in FIG. 15C, the electronic device 101 may recognize that the electronic device 101 is taking a video using the designated camera (e.g., the second camera 820) according to the situation awareness result. According to an embodiment, the electronic device 101 may generate a graphic elements 1530 (e.g., content including user data (e.g., contact information) provided through an account application) related to a recognized object based on object recognition (e.g., face recognition) as moving content (e.g., video content or GIF content), and may display the graphic element 1530 on the second display 840.

In an embodiment, the graphic element 1530 related to the moving content may be provided as a variety of related graphical elements by using at least one data (e.g., user data, photo data, fashion data, place data, and/or date data) related to a person, an animal, a plant, and/or an object corresponding to object recognition. In an embodiment, the moving content may include content previously stored in the electronic device 101 (e.g., the memory 130 of FIG. 1 or FIG. 6). In an embodiment, the moving content may include content (e.g., flowing letters) produced based on the situation awareness during an operation in the designated shooting mode. According to an embodiment, when generating the graphic element as the moving content, the electronic device 101 may generate the graphic element, based on whether the type of video taking is static or dynamic. For example, the electronic device 101 may determine the type of video taking, and may operate to generate text-oriented moving content (e.g., flowing letters) when the type of video taking is static. For example, the electronic device 101 may determine the type of video taking, and may operate to generate motion graphic-oriented moving content (e.g., a GIF image) when the type of video taking is dynamic.

According to an embodiment, as illustrated in FIG. 15D, the electronic device 101 may generate a graphic element 1540 related to the current situation of the user, based on user data related to a recognized object (e.g., a face object), place data related to position information, and date data related to a date according to the situation awareness result, and may display the graphic element 1540 on the second display 840. For example, the electronic device 101 may generate a graphic element including complex data, based on a complex situation awareness result.

According to an embodiment, the graphic element 1540 may include a text and/or image form based on a designated format. According to an embodiment, the graphic element 1540 may include text and/or an image generated by a generative AI engine. For example, the electronic device 101 may automatically generate context, based on the generative AI. For example, the electronic device 101 may generate the most appropriate context (e.g., phrase and/or image) for a situation, based on a large language model (LLM). For example, the electronic device 101 may summarize a situation and generate a natural phrase, based on variously trained models. According to an embodiment, the electronic device 101 may generate the graphic element 1540, based on the generated context.

In an embodiment, the graphic element 1540 generated by the generative AI is not a phrase or image predictable in advance and predetermined, and may include content generated based on various input parameters (e.g., user-related information (e.g., person, place, and time-related information) and photo-related information). In an embodiment, the generated content may be configured to be appropriately displayed on the display (e.g., the cover display) designated by prompt engineering. In an embodiment, the generative AI engine may be an engine included as on-device AI in the electronic device 101, or may include an AI engine provided by an external server. In an embodiment, since an unpredictable image may be displayed on the designated display (e.g., the cover display), a guideline on displayable contents may be provided based on prompt engineering. For example, a guideline, such as not displaying personal information (e.g., a phone number or location), learning to filter out an inappropriate expression or photo, disposing an image to fit the size of the designated display (e.g., the cover display or main display), or configuring an image to match color, may be provided.

According to an embodiment, when displaying the graphic element 1540 on the second display 840, the electronic device 101 may vertically reverse the graphic element 1540, thereby displaying a vertically reversed graphic element 1545. For example, when the graphic element 1540 is photographed through the reflector, the electronic device 101 may provide the graphic element 1545 that is the graphic element 1540 being flipped based on the y-axis so that the photographed graphic element is normally displayed on the first display 830 without being vertically reversed.

According to an embodiment, the graphic element is not limited to the above examples, and may vary. According to an embodiment, the electronic device 101 may generate a graphic element (e.g., content including user data (e.g., contact information) provided through an account application) related to a recognized object based on object recognition (e.g., face recognition and clothes recognition (or fashion recognition) according to the situation awareness result, and may display the graphic element on the second display 840. In an embodiment, the graphic element related to the recognized object may be provided as a variety of related graphical elements by using at least one data (e.g., user data, photo data, fashion data, place data, and/or date data) related to a person, an animal, a plant, and/or an object corresponding to object recognition. In an embodiment, data related to the recognized object may be obtained and provided from the electronic device 101 (e.g., the data stored in the memory 130) or from an external device (e.g., an account-based cloud or a web server).

As illustrated in FIG. 15E, FIG. 15E may illustrate an example in which a preview 1550 of an image obtained by the designated camera (e.g., the second camera 820) in the designated shooting mode is displayed on the first display 830. According to an embodiment, as a graphic element is displayed on the second display 840, the preview 1550 may be displayed including an object 1560 corresponding to the graphic element in an area corresponding to the first display 830 in the preview 1550. For example, the object 1560 corresponding to the graphic element displayed on the second display 840 may be displayed in the area of the second display 840 in the preview 1550. For example, the object 1560 corresponding to the graphic element may refer to an object corresponding to the graphic element displayed on the second display 840 projected onto the reflector. According to an embodiment, when providing the preview 1550, the electronic device 101 may provide the object 1560 corresponding to the graphic element via correction so that the graphic element is seen more clearly in the preview 1550. According to an embodiment, when providing the preview 1550, the electronic device 101 may provide the graphic element displayed on the second display 840 via correction so that the graphic element is seen more clearly in the preview 1550.

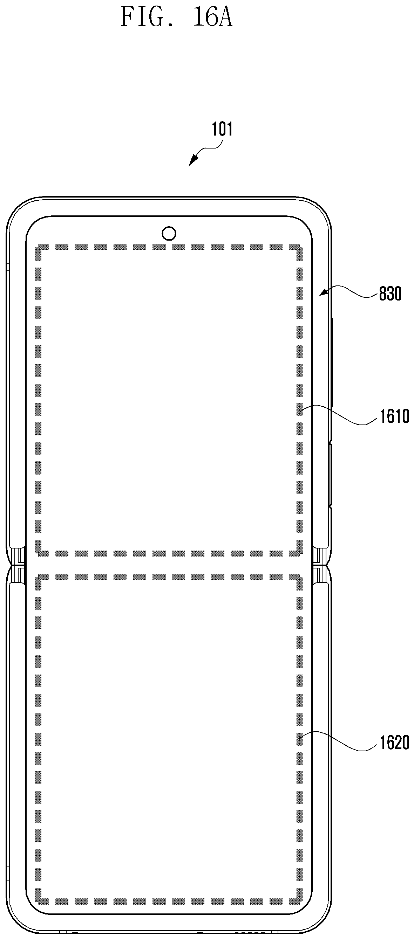

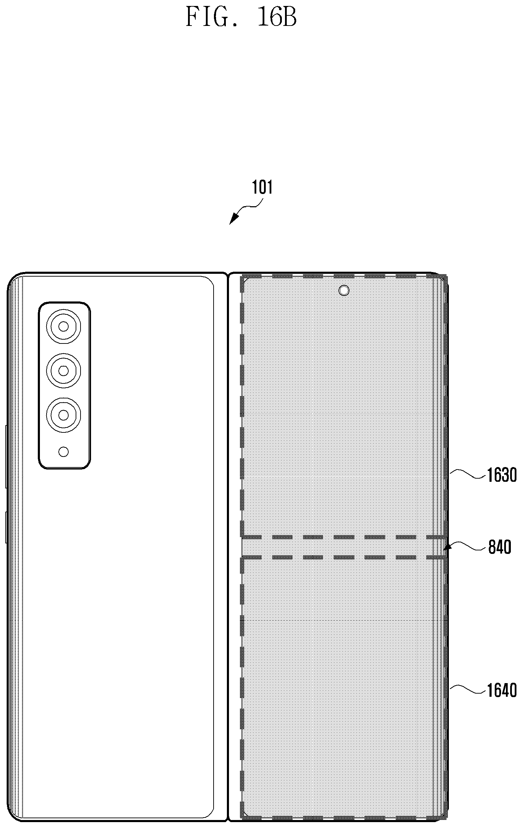

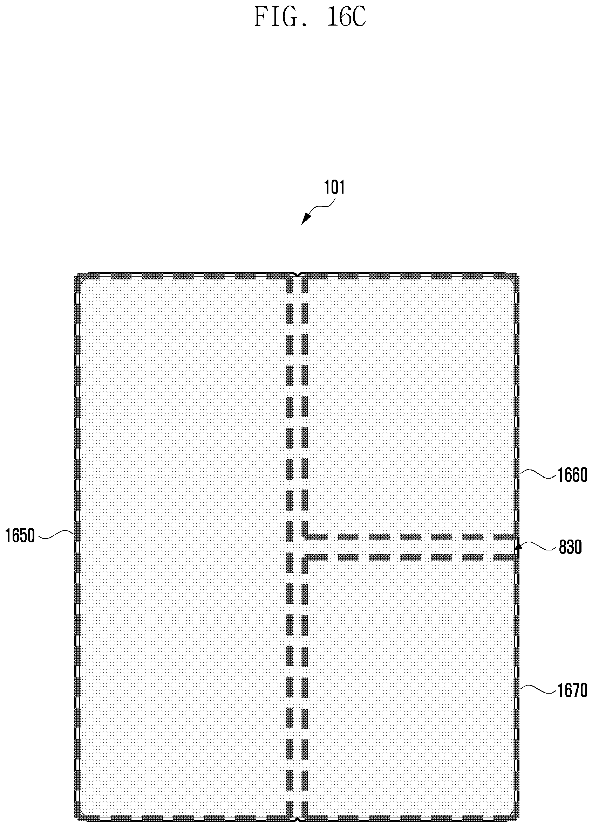

FIG. 16A, FIG. 16B, and FIG. 16C illustrate examples of an operation in which an electronic device provides a graphic element according to an embodiment of the disclosure.

According to an embodiment, FIG. 16A, FIG. 16B, and FIG. 16C may illustrate examples in which the electronic device 101 provides a graphic element based on division of the area of a target display designated to display the graphic element.

According to an embodiment, as illustrated in FIG. 16A, FIG. 16B, and FIG. 16C, when providing a graphic element, the electronic device 101 may provide a plurality of graphic elements on the target display, based on the division of the area.

According to an embodiment, the electronic device 101 may divide the target device into various areas, based on the shape or ratio of the target display, and may provide an independent graphic element in each divided area.

According to an embodiment, FIG. 16A may illustrate an example in which a first display 830 on the front surface of the electronic device 101 operates as a target display that displays a graphic element in the electronic device 101 (e.g., a vertically foldable electronic device) in an unfolded state. According to an embodiment, when operating in a designated shooting mode, the electronic device 101 may divide the first display 830 on the front surface into a first area 1610 and a second area 1620, and may provide a first graphic element and a second graphic element including different pieces of visual information respectively in the first area 1610 and the second area 1620.

According to an embodiment, FIG. 16B may illustrate an example in which a second display 840 (e.g., a second display 930 of FIG. 9C) on the rear surface of the electronic device 101 operates as a target display that displays a graphic element in the electronic device 101 (e.g., a horizontally foldable electronic device) in the unfolded state. According to an embodiment, when operating in the designated shooting mode, the electronic device 101 may divide the second display 840 on the rear surface into a third area 1630 and a fourth area 1640, and may provide a third graphic element and a fourth graphic element including different pieces of visual information respectively in the third area 1630 and the fourth area 1640.

According to an embodiment, FIG. 16C may illustrate an example in which a first display 830 on the front surface of the electronic device 101 operates as a target display that displays a graphic element in the electronic device 101 (e.g., a horizontally foldable electronic device) in the unfolded state. According to an embodiment, when operating in the designated shooting mode, the electronic device 101 may divide the first display 830 on the front surface into a fifth area 1650, a sixth area 1660, and a seventh area 1670, and may provide a fifth graphic element, a sixth graphic element, and a seventh graphic element including different pieces of visual information respectively in the first fifth area 1650, the sixth area 1660, and the seventh area 1670.

According to an embodiment, the electronic device 101 may generate a graphic element, based on a different piece of visual information for each divided area. According to an embodiment, the visual information for each divided area may include different types of visual information based on the same attribute or different attributes. For example, the electronic device 101 may generate different pieces of visual information (e.g., content (e.g., map content) indicating a map-based position and content (e.g., place content) indicating information related to a place corresponding to the position) corresponding to the respective divided areas, based on one designated application (e.g., a map application), and may control the target display to independently display to the different pieces of visual information in the divided areas.

According to an embodiment, the electronic device 101 may simultaneously output a plurality of graphic elements, based on the division of the area of the target display. According to an embodiment, when dividing the area, the electronic device 101 may divide the area of the target display considering a grip area in which the user holds the electronic device 101.

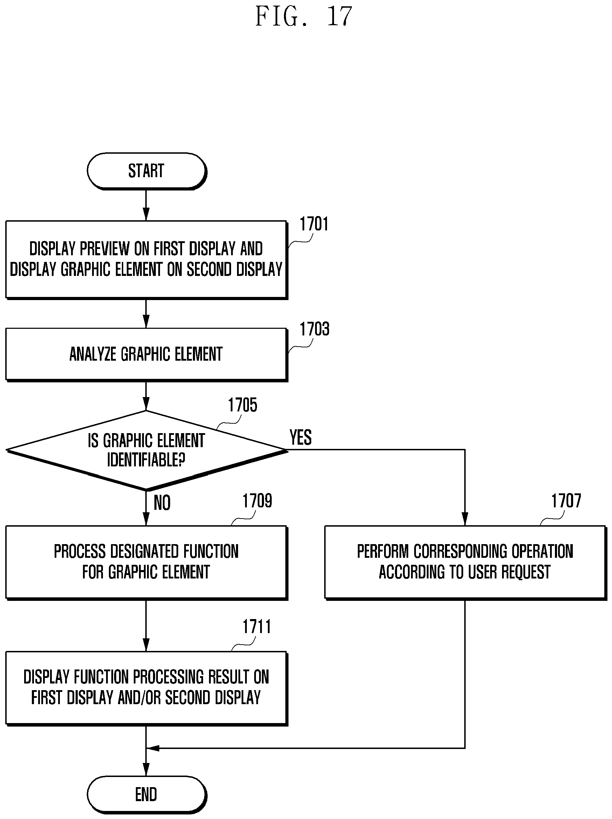

FIG. 17 is a flowchart illustrating an operating method of an electronic device according to an embodiment of the disclosure.

According to an embodiment, FIG. 17 may illustrate an example of an operation in which the electronic device 101 supports capturing an image (e.g., taking a mirror shot based on the reflector 500 of FIG. 5) according to an embodiment.

A method in which the electronic device 101 supports capturing an image according to an embodiment of the disclosure may be performed, for example, according to the flowchart illustrated in FIG. 17. The flowchart illustrated in FIG. 17 is an example of operations of the electronic device 101 according to an embodiment, in which at least some operations may be performed in a different order, in parallel, or independently, or at least some other operations may be performed complementarily to the at least operations. According to an embodiment of the disclosure, operation 1701 to operation 1711 may be performed by at least one processor (e.g., the processor 120 of FIG. 1 or FIG. 6) of the electronic device 101.

According to an embodiment, the operations illustrated in FIG. 17 may be performed heuristically, for example, in combination with the operations illustrated in FIG. 7 to FIG. 16, may be performed heuristically by replacing at least some of the illustrated operations and by combining with at least some other operations, or may be performed heuristically as detailed operations of at least some of the illustrated operations.

As illustrated in FIG. 17, the operating method performed by the electronic device 101 according to an embodiment may include an operation 1701 of displaying a preview on a first display 830 and displaying a graphic element on a second display 840, an operation 1703 of analyzing the graphic element, an operation 1705 of determining whether the graphic element is identifiable, an operation 1707 of performing a corresponding operation according to a user request, based on the graphic element being identifiable, an operation 1709 of processing a designated function for the graphic element, based on the graphic element not being identifiable, and an operation 1711 of displaying a function processing result on the first display 830 and/or the second display 840.

Referring to FIG. 17, in operation 1701, the processor 120 of the electronic device 101 may perform an operation of displaying a preview on the first display 830 and displaying a graphic element on the second display 840. For example, in the example of FIG. 17, a second camera 820 may operate as a designated camera in a designated shooting mode, the second display 840 may operate as a target display that displays a graphic element, and the first display 830 may operate as a display that displays a preview of an image. For example, a case may be assumed in which a first camera 810 and the first display 830 on the front surface of the electronic device 101 face a user and the second camera 820 and the second display 840 on the rear surface of the electronic device 101 face a reflector (e.g., the reflector 500 of FIG. 5).

In operation 1703, the processor 120 may perform an operation of analyzing the graphic element. According to an embodiment, the processor 120 may identify a graphic object (or area) corresponding to the graphic element in the preview displayed on the first display 830. According to an embodiment, the processor 120 may perform image analysis to determine whether the graphic object is visually identifiable, based on the identified graphic object. According to an embodiment, the processor 120 may perform the image analysis to identify at least one designated condition (e.g., the size of the graphic object (or target display in the preview), the resolution of the graphic object, and/or the distance from a subject). For example, the processor 120 may determine whether the graphic element (e.g., the graphic object corresponding to the graphic element or the target display) corresponds to a condition of not being seen, being small, and/or being blurred in the preview on the first display 830, and may perform post-correction on the graphic element and/or the graphic object according to a result.

In operation 1705, the processor 120 may perform an operation of determining whether the graphic element is identifiable. According to an embodiment, the processor 120 may determine whether the graphic object corresponding to the graphic element is visually identifiable, based on an analysis result.

According to an embodiment, when the size (or area) of an object corresponding to the second display 840 to be displayed in the preview is a predetermined reference size or less, the processor 120 may determine that the graphic object is not identifiable (e.g., a target object is smaller than a designated size and is thus not identifiable). For example, the processor 120 may extract (or define) an area where the second display 840 is displayed in the preview through image recognition, and may determine that the graphic object is not identifiable when the pixel size of the extracted area is a predetermined reference pixel size (e.g., about 400 x 300) or less.

According to an embodiment, the processor 120 may determine whether the graphic object is identifiable, based on the estimated distance between the electronic device 101 and a subject in the designated shooting mode and a predetermined threshold. For example, when the estimated distance is greater than the predetermined threshold (e.g., the distance between the reflector and the electronic device 101 is longer than the distance at which the graphical element is identifiable through the preview and is longer than a designated distance), the processor 120 may determine that the graphic object is not identifiable (e.g., the subject is distant and is thus not identifiable).

According to an embodiment, when the aspect ratio (e.g., the ratio of the longest side to the shortest side in a two-dimensional model) of the object (e.g., the area (or object) where the second display 840 is displayed in the preview) corresponding to the second display 840 displayed in the preview does not substantially match the actual aspect ratio of the second display 840, the processor 120 may determine that the graphic object is not identifiable (e.g., is not identifiable since the viewing angle is not secured).

In operation 1707, the processor 120 may perform a corresponding operation according to a user request in operation 1707, based on the graphic element being identifiable in operation 1705 (e.g., "Yes" in operation 1705). According to an embodiment, the processor 120 may perform an operation of capturing an image, based on a user input. According to an embodiment, the processor 120 may perform an operation of adjusting a shooting option, based on a user input. According to an embodiment, the processor 120 may perform an operation of processing a preview and/or a related function for the graphic element, based on a user input.

In operation 1709, the processor 120 may perform an operation of processing a designated function for the graphic element in operation 1709, based on the graphic element not being identifiable in operation 1705 (e.g., "No" in operation 1705). According to an embodiment, when the graphic element is not identifiable, the processor 120 may perform correction related to the designated function on the graphic element, and may provide the corrected graphic element. According to an embodiment, the correction related to the designated function may be automatically performed by the processor 120, and/or may be adaptively performed by the processor 120 according to a user input. According to an embodiment, the correction related to the designated function may include correction performed based on a camera function in the preview on the first display 830, correction performed based on an object corresponding to the graphic element displayed in the preview, and/or correction of the graphic element displayed on the second display 840.

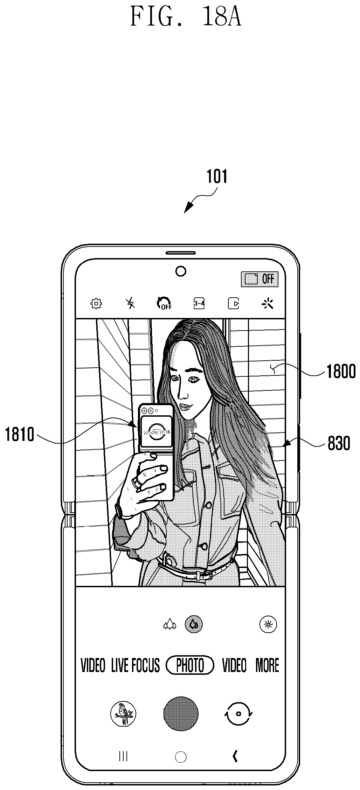

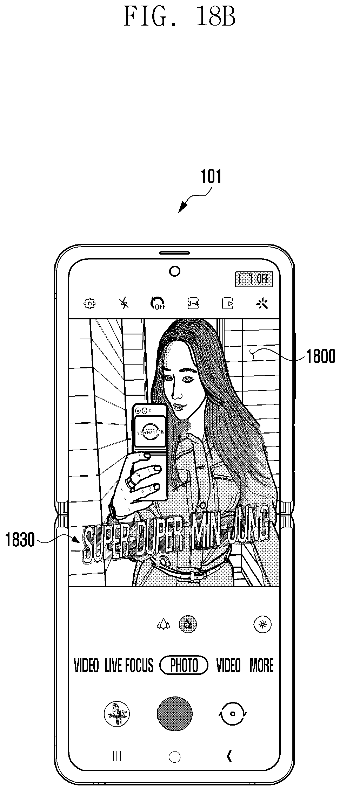

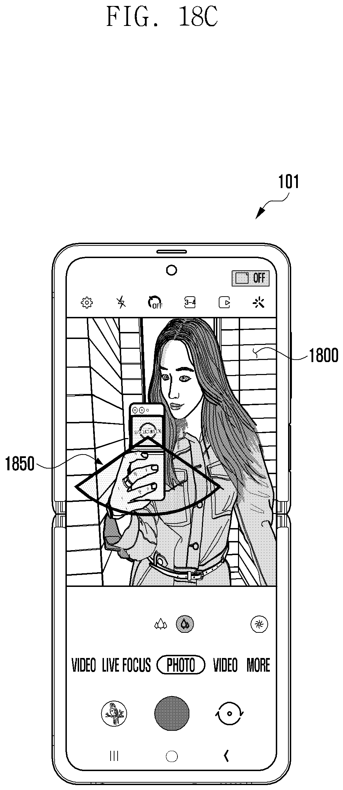

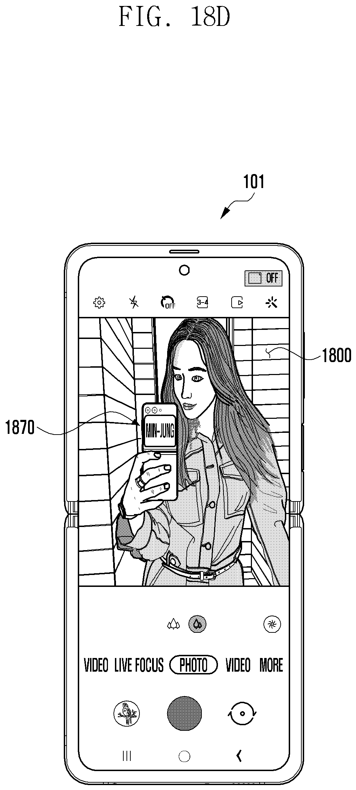

In operation 1711, the processor 120 may perform an operation of displaying a function processing result on the first display 830 and/or the second display 840. According to an embodiment, the processor 120 may display a correction result of adjusting the preview according to the function processing result on the first display 830, may display a correction result based on the graphic element in the preview on the first display 830, and/or may display a correction result of changing the graphic element on the second display 840, examples of which are described with reference to FIG. 18A, FIG. 18B, FIG. 18C, and FIG. 18D.

FIG. 18A, FIG. 18B, FIG. 18C, and FIG. 18D illustrate examples of an operation in which an electronic device provides a preview according to an embodiment of the disclosure.

According to an embodiment, FIG. 18A, FIG. 18B, FIG. 18C, and FIG. 18D may illustrate examples of the front surface of the electronic device 101 in an unfolded state.

According to an embodiment, FIG. 18A, FIG. 18B, FIG. 18C, and FIG. 18D may illustrate an example which a second camera 820 operates as a designated camera in a designated shooting mode, a second display 840 may operate as a target display that displays a graphic element, and a first display 830 operates as a display that displays a preview of an image. For example, a case may be assumed in which a first camera 810 and the first display 830 on the front surface of the electronic device 101 face a user and the second camera 820 and the second display 840 on the rear surface of the electronic device 101 face a reflector (e.g., the reflector 500 of FIG. 5).

As illustrated in FIG. 18A, FIG. 18A may illustrate an example in which a preview 1800 of an image obtained by the designated camera (e.g., the second camera 820) in the designated shooting mode is displayed on the first display 830. According to an embodiment, the electronic device 101 may perform an operation of displaying the preview 1800 on the first display 830 and displaying a graphic element on the second display 840, based on the designated shooting mode. For example, in the example of FIG. 18A, the second camera 820 may operate as the designated camera in the designated shooting mode, the second display 840 may operate as the target display that displays the graphic element, and the first display 830 operates as the display that displays the preview of the image 1800. For example, a case may be assumed in which the first camera 810 and the first display 830 on the front surface of the electronic device 101 face the user and the second camera 820 and the second display 840 on the rear surface of the electronic device 101 face the reflector (e.g., the reflector 500 of FIG. 5).

According to an embodiment, the electronic device 101 may identify a graphic object (or area) 1810 corresponding to the graphic element in the preview 1800 displayed on the first display 830. According to an embodiment, the electronic device 101 may determine whether the graphic object 1810 is visually identifiable, based on image analysis of the identified graphic object 1810. According to an embodiment, the electronic device 101 may perform the image analysis to identify at least one designated condition (e.g., the size of the graphic object 1810 (or target display in the preview 1800), the resolution of the graphic object 1810, and/or the distance from a subject). For example, the processor 120 may determine whether the graphic element (e.g., the graphic object 1810 corresponding to the graphic element) corresponds to a condition of not being seen, being small, and/or being blurred in the preview 1800 on the first display 830, and may perform post-correction on the graphic element and/or the graphic object 1810 according to a result.

According to an embodiment, when determining that the graphic object 1810 is not visually identifiable, the electronic device 101 may perform post-correction, based on the graphic element and/or the graphic object 1810. According to an embodiment, when the size (or area) of an object corresponding to the second display 840 to be displayed in the preview 1800 is a predetermined reference size or less, the electronic device 101 may determine that the graphic object 1810 is not identifiable (e.g., a target object is smaller than a designated size and is thus not identifiable). According to an embodiment, when the estimated distance between the electronic device 101 and the subject in the designated shooting mode is greater than a predetermined threshold (e.g., the distance between the reflector and the electronic device 101 is longer than the distance at which the graphical element is identifiable through the preview 1800 and is longer than a designated distance), the electronic device 101 may determine that the graphic object 1810 is not identifiable (e.g., the subject is distant and is thus not identifiable). According to an embodiment, when the aspect ratio (e.g., the ratio of the longest side to the shortest side in a two-dimensional model) of the object (e.g., the area (or object) where the second display 840 is displayed in the preview 1800) corresponding to the second display 840 displayed in the preview 1800 does not substantially match the actual aspect ratio of the second display 840, the electronic device 101 may determine that the graphic object 1810 is not identifiable (e.g., is not identifiable since the viewing angle is not secured).

According to an embodiment, the electronic device 101 may display the processing result of the post-correction on the first display 830 and/or the second display 840, examples of which are illustrated in FIG. 18B, FIG. 18C, and FIG. 18D.

According to an embodiment, FIG. 18B, FIG. 18C, and FIG. 18D may illustrate examples of providing a related designated effect to highlight the graphic element, based on the graphic object 1810 corresponding to the graphic element in the preview 1800 displayed on the first display 830.

According to an embodiment, as illustrated in FIG. 18B, the electronic device 101 may increase feature information (e.g., text and/or an image) corresponding to the graphic element displayed on the second display 810 in the preview 1800 to be displayed with a marker 1830 in the preview 1800 on the first display 830.

According to an embodiment, as illustrated in FIG. 18C, the electronic device 101 may automatically zoom (e.g., enlarge) the preview 1800 by using a camera function (e.g., a zooming function) to display the graphic object 1810 zoomed (e.g., enlarged) to be at an identifiable distance. According to an embodiment, as illustrated in FIG. 18C, the electronic device 101 may display a guide object 1850 that guides (or induces) the electronic device 101 to change the direction, based on the graphic element 1810, to facilitate identification of the graphic object 1810 by securing a viewing angle. For example, the electronic device 101 may display the guide object 1850 in the preview 1800 on the first display 830 to secure a viewing angle (e.g., about -60 degrees to about +60 degrees).

According to an embodiment, as illustrated in FIG. 18D, the electronic device 101 may provide the graphic element displayed on the second display 840 by changing the graphic element into another form identifiable in the preview 1800 on the first display 830. For example, the electronic device 101 may change the graphic element displayed on the second display 840 into another graphic element or highlight (e.g., enlarge) at least part (e.g., feature information) of the graphic element, thereby displaying the graphic element on the second display 840. According to an embodiment, the electronic device 101 may display a changed (or processed) graphic object 1870 corresponding to the changed graphic element in the preview 1800, based on changing the graphic element displayed on the second display 840.

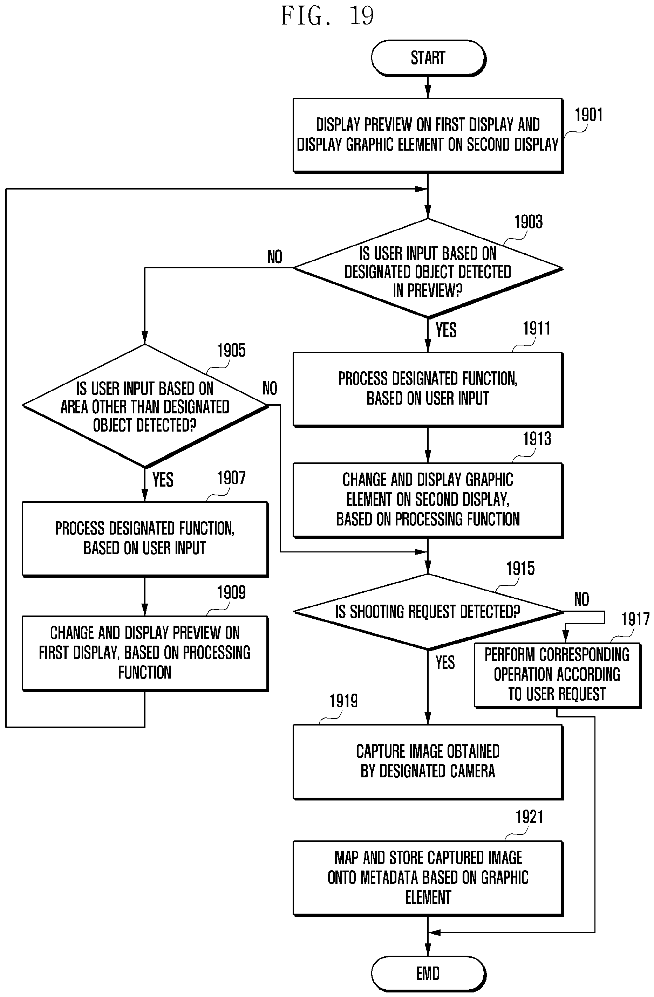

FIG. 19 is a flowchart illustrating an operating method of an electronic device according to an embodiment of the disclosure.

According to an embodiment, FIG. 19 may illustrate an example of an operation in which the electronic device 101 supports capturing an image (e.g., taking a mirror shot based on the reflector 500 of FIG. 5) according to an embodiment.

A method in which the electronic device 101 supports capturing an image according to an embodiment of the disclosure may be performed, for example, according to the flowchart illustrated in FIG. 19. The flowchart illustrated in FIG. 19 is an example of operations of the electronic device 101 according to an embodiment, in which at least some operations may be performed in a different order, in parallel, or independently, or at least some other operations may be performed complementarily to the at least operations. According to an embodiment of the disclosure, operation 1901 to operation 1921 may be performed by at least one processor (e.g., the processor 120 of FIG. 1 or FIG. 6) of the electronic device 101.

According to an embodiment, the operations illustrated in FIG. 19 may be performed heuristically, for example, in combination with the operations illustrated in FIG. 7 to FIG. 18, may be performed heuristically by replacing at least some of the illustrated operations and by combining with at least some other operations, or may be performed heuristically as detailed operations of at least some of the illustrated operations.

As illustrated in FIG. 19, the operating method performed by the electronic device 101 according to an embodiment may include an operation 1901 of displaying a preview on a first display 830 and displaying a graphic element on a second display 840, an operation 1903 of determining whether a user input based on a designated object is detected in the preview, an operation 1905 of determining whether a user input based on an area other than the designated object is detected when the user input based on the designated object is not detected, an operation 1907 of proceeding to operation 1915 and performing subsequent operations when the user input based on the other area is not detected, and processing a designated function, based on the user input based on the other area, when the user input based on the other area is detected, an operation 1909 of changing and displaying a preview on a first display 830, based on processing the function, an operation 1911 of processing a designated function, based on the user input based on the designated object, when the user input based on the designated object is detected, an operation 1913 of changing and displaying a graphic element on a second display 840, based on processing the function, an operation 1915 of determining whether a shooting request is detected, an operation 1917 of processing a corresponding operation according to a user request when the shooting request is not detected, an operation 1919 of capturing an image obtained by a designated camera when the shooting request is detected, and an operation 1921 of mapping and storing the captured image onto metadata based on the graphic element.

Referring to FIG. 19, in operation 1901, the processor 120 of the electronic device 101 may perform an operation of displaying a preview on the first display 830 and displaying a graphic element on the second display 840. For example, in the example of FIG. 19, a second camera 820 may operate as a designated camera in a designated shooting mode, the second display 840 may operate as a target display that displays a graphic element, and the first display 830 may operate as a display that displays a preview of an image. For example, a case may be assumed in which a first camera 810 and the first display 830 on the front surface of the electronic device 101 face a user and the second camera 820 and the second display 840 on the rear surface of the electronic device 101 face a reflector (e.g., the reflector 500 of FIG. 5).

In operation 1903, the processor 120 may perform an operation of determining whether a user input based on a designated object is detected in the preview. According to an embodiment, the processor 120 may determine whether the user input is detected in a graphic object corresponding to the graphic element displayed on the second display 940 (or an area corresponding to the second display 840) in the preview displayed on the first display 830.

When the user input based on the designated object is not detected in operation 1903 (e.g., "No" in operation 1903), the processor 120 may perform an operation of determining whether a user input based on an area other than the designated object is detected in operation 1905. According to an embodiment, the processor 120 may determine whether the user input is detected in an area other than the graphic object corresponding to the graphic element displayed on the second display 840 (or the area corresponding to the second display 840) in the preview displayed on the first display 830.

When the user input based on the other area is not detected in operation 1905 (e.g., "No" in operation 1905), the processor 120 may proceed to operation 1915, and may perform operation 1915 and subsequent operations.

When the user input based on the other area is detected in operation 1905 (e.g., "Yes" in operation 1905), the processor 120 may perform an operation of processing a designated function, based on the user input in operation 1907. According to an embodiment, the processor 120 may control an operation related to a camera function (e.g., zooming, a shooting effect setting, and a shooting option (e.g., a change of photo or video shooting mode) in the preview, based on the user input on the other area.

In operation 1909, the processor 120 may perform an operation of changing and displaying the preview on the first display 830, based on processing the function. According to an embodiment, the processor 120 may display a result screen related to the function processed based on the user input through the preview on the first display 830.

When the user input based on the designated object is detected in operation 1903 (e.g., "Yes" in operation 1903), the processor 120 may perform an operation of processing a designated function, based on the user input in operation 1911. According to an embodiment, the processor 120 may control an operation related to changing (or processing) the graphic element displayed on the second display 840, based on the user input on the designated object (e.g., the graphic object or the area corresponding to the second display 840). For example, the processor 120 may control a first function (e.g., zooming) for the graphic element displayed on the second display 840, based on the user input (e.g., a pinch gesture) based on the designated object. For example, the processor 120 may control a second function (e.g., a switch to another graphic element) for the graphic element displayed on the second display 840, based on the user input (e.g., a flick gesture).

In operation 1913, the processor 120 may perform an operation of changing and displaying the graphic element on the second display 840, based on processing the function. According to an embodiment, the processor 120 may display a result screen related to the function processed based on the user input on the second display 840. According to an embodiment, the graphic object corresponding to the graphic element in the preview may also be changed and provided for the user in response to the changed graphic element displayed on the second display 840.

In operation 1915, the processor 120 may perform an operation of determining whether a shooting request is detected. According to an embodiment, the processor 120 may detect the shooting request from the user, based on recognizing a software button (e.g., a shooting button or a floating button) on the preview, a hardware button (or a physical button) provided on the electronic device 101, a voice command to shoot, or a designated object (e.g., the user's palm).

When the shooting request is not detected in operation 1915 (e.g., "No" in operation 1915), the processor 120 may perform an operation of performing a corresponding operation according to a user request in operation 1917. According to an embodiment, the processor 120 may continue an image capturing operation in the designated capture mode or end image capturing, based on a user input.

When the shooting request is detected in operation 1915 (e.g., "Yes" in operation 1915), the processor 120 may perform an operation of capturing an image obtained by the designated camera in operation 1919. According to an embodiment, the processor 120 may obtain an image from the camera designated to operate in the designated shooting mode, based on detecting a user input to capture an image. According to an embodiment, the processor 120 may perform image capturing, based on the image obtained by the designated camera.

In operation 1921, the processor 120 may perform an operation of mapping and storing the captured image onto metadata based on the graphic element. According to an embodiment, when storing the captured image, the processor 120 may perform an operation of mapping and storing the captured image onto the metadata related to the graphic element. For example, the processor 120 may map and store metadata (e.g., a tag, a link, application information, and service information) related to the graphic element extracted from the image captured using the designated camera onto the image (e.g., the graphic element in the image). For example, when displaying a graphic element based on health data, the processor 120 may map metadata enabling an immediate move to an application (e.g., a health application) for executing the graphic element (e.g., the health data) and/or the location of the health data onto the captured image.

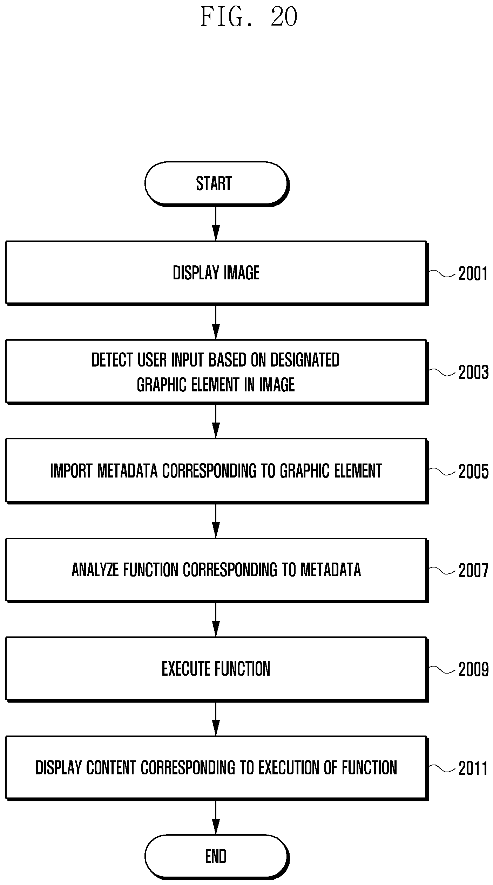

FIG. 20 is a flowchart illustrating an operating method of an electronic device according to an embodiment of the disclosure.

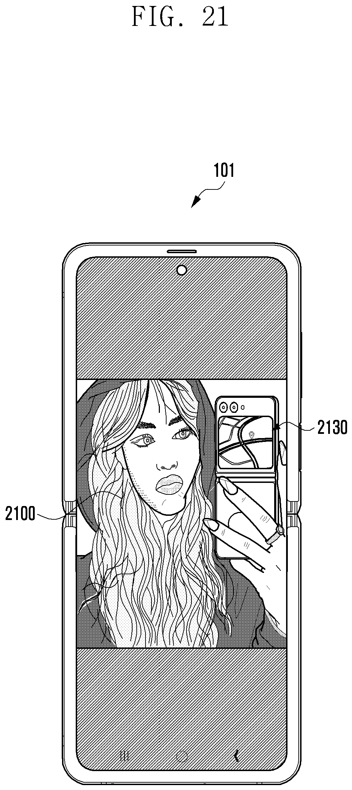

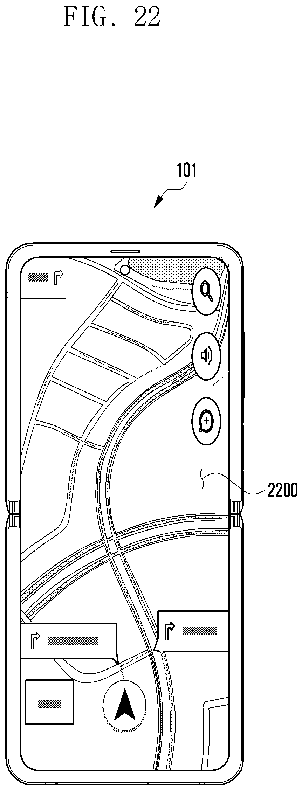

FIG. 21 and FIG. 22 illustrate examples of an operation in which the electronic device executes a function, based on a graphic element according to an embodiment of the disclosure.

According to an embodiment, FIG. 20 may illustrate an example of an operation in which the electronic device 101 supports capturing an image (e.g., taking a mirror shot based on the reflector 500 of FIG. 5) according to an embodiment.

A method in which the electronic device 101 supports capturing an image according to an embodiment of the disclosure may be performed, for example, according to the flowchart illustrated in FIG. 20. The flowchart illustrated in FIG. 20 is an example of operations of the electronic device 101 according to an embodiment, in which at least some operations may be performed in a different order, in parallel, or independently, or at least some other operations may be performed complementarily to the at least operations. According to an embodiment of the disclosure, operation 2001 to operation 2011 may be performed by at least one processor (e.g., the processor 120 of FIG. 1 or FIG. 6) of the electronic device 101.

According to an embodiment, the operations illustrated in FIG. 20 may be performed heuristically, for example, in combination with the operations illustrated in FIG. 7 to FIG. 19, may be performed heuristically by replacing at least some of the illustrated operations and by combining with at least some other operations, or may be performed heuristically as detailed operations of at least some of the illustrated operations.

As illustrated in FIG. 20, the operating method performed by the electronic device 101 according to an embodiment may include an operation 2001 of displaying an image, an operation 2003 of detecting a user input based on a designated graphic element in the image, an operation 2005 of importing metadata corresponding to the graphic element, an operation 2007 of analyzing a function corresponding to the metadata, an operation 2009 of executing the function, and an operation 2011 of displaying content corresponding to execution of the function.

Referring to FIG. 20, in operation 2001, the processor 120 of the electronic device 101 may perform an operation of displaying an image. According to an embodiment, the processor 120 may receive a user input to select an image on an execution screen of a designated application (e.g., a gallery application). According to an embodiment, the processor 120 may control a display to display the selected image, based on the user input, an example of which is illustrated in FIG. 21.

As illustrated in FIG. 21, the processor 120 may display an image screen 2100 of the image selected by a user on the execution screen (e.g., a gallery screen) of the application on a first display 830 that is operating. According to an embodiment, the selected image may be an image captured in a designated shooting mode. According to an embodiment, the image screen 2100 may include a graphic element 2130 corresponding to a graphic element displayed on a target display (e.g., a first display 830 or a second display 840) and photographed by a designated camera (e.g., a first camera 810 or a second camera 820). In an embodiment, the graphic object 2130 may include metadata mapped onto the graphic element.

In operation 2003, the processor 120 may perform an operation of detecting a user input based on a designated graphic element in the image. According to an embodiment, the processor 120 may receive a user input (e.g., a tab) based on the graphic object 2130 (or an area corresponding to the graphic object 2130) on the image screen 2100.

In operation 2005, the processor 120 may perform an operation of importing metadata corresponding to the graphic element. According to an embodiment, the processor 120 may import (or collect) the metadata mapped onto the graphic object 2130 of the image from a memory (e.g., the memory 130 of FIG. 1 or FIG. 6), based on detecting the user input through the graphic object 2130.

In operation 2007, the processor 120 may perform an operation of analyzing a function corresponding to the metadata. According to an embodiment, the processor 120 may determine at least one of executable application information, service information, a tag, and/or a connection link (e.g., a data location), based on the imported metadata.

In operation 2009, the processor 120 may perform an operation of executing the function. According to an embodiment, the processor 120 may execute the application analyzed based on the metadata. According to an embodiment, when executing the application, the processor 120 may identify the location of data (e.g., health data, map data, and user data) related to the graphic element, and may provide a function of directly moving to the location of the related data.

In operation 2011, the processor 120 may perform an operation of displaying content corresponding to execution of the function. According to an embodiment, the processor 120 may control the display to display content including the graphic element corresponding to the graphic object 2130, based on the executed application, an example of which is illustrated in FIG. 22.

As illustrated in FIG. 22, when the graphic object 2130 corresponds to a graphic element based on map data, the processor 120 may execute an application (e.g., a map application) to execute the map data. According to an embodiment, when executing the application, the processor 120 may display content 2200 (e.g., a map screen) including the map data corresponding to the graphic element.

An operating method performed by an electronic device 101 according to an embodiment of the disclosure may include an operation of obtaining a first image from a first camera and a second camera, based on executing an application. According to an embodiment, the operating method may include an operation of analyzing the first image. According to an embodiment, the operating method may include an operation of determining a designated shooting mode, based on analyzing the first image. According to an embodiment, the operating method may include an operation of displaying a graphic element on the display, based on determining the designated shooting mode. According to an embodiment, the operating method may include an operation of determining a designated camera to operate in the designated shooting mode, based on a user input to capture an image. According to an embodiment, the operating method may include an operation of taking a second image by using the designated camera.

According to an embodiment, the operating method may include an operation of detecting designated identification information, based on analyzing the first image. According to an embodiment, the operating method may include an operation of determining the designated shooting mode, based on detecting the designated identification information.

According to an embodiment, the designated identification information may include an image object designated in advance to determine whether the designated shooting mode is executed. According to an embodiment, the designated image object may include at least one of a designated face object or a designated identifier.

According to an embodiment, the first image may include an image of the first camera and an image of the second camera. According to an embodiment, the operating method may include an operation of comparing the image of the first camera and the image of the second camera. According to an embodiment, the operating method may include an operation of determining the designated shooting mode, based on identifying the designated face object from the image of the first camera and the image of the second camera.

According to an embodiment, the operating method may include an operation of determining the designated shooting mode, based on identifying the designated identifier from an image obtained by the designated camera positioned on the same surface as the display that displays the graphic element.

According to an embodiment, the operating method may include an operation of determining the designated camera to operate in the designated shooting mode among the first camera and the second camera, based on determining the designated shooting mode.

According to an embodiment, the operating method may include an operation of deactivating a camera positioned on an opposite surface to the designated camera, based on determining the designated camera to operate in the designated shooting mode.

According to an embodiment, the electronic device 101 may include a first display and a second display. According to an embodiment, the operating method may include an operation of displaying the graphic element, based on a display positioned on the same surface as the designated camera among the first display and the second display. According to an embodiment, the operating method may include an operation of displaying a preview of an image obtained by the designated camera, based on a display positioned on an opposite surface to the designated camera.

According to an embodiment, the preview may include a reflector and an image projected onto the reflector. According to an embodiment, the image projected onto the reflector may include an object corresponding to the electronic device including the designated camera, the display positioned on the same surface as the designated camera, and the graphic element displayed on the display.

According to an embodiment, the operating method may include an operation of analyzing whether the graphic element is included in a designated condition. According to an embodiment, the operating method may include an operation of processing a designated function related to the graphic element displayed on the display positioned on the same surface as the designated camera, based on the graphic element being included in the designated condition. According to an embodiment, the operating method may include an operation of displaying a result of processing the function, based on the first display and/or the second display.

According to an embodiment, the operating method may include an operation of detecting a user input, based on an object corresponding to the graphic element in the preview. According to an embodiment, the operating method may include an operation of processing a designated function related to the graphic element displayed on the display positioned on the same surface as the designated camera, based on the user input. According to an embodiment, the operating method may include an operation of displaying a result of processing the function, based on the first display and/or the second display.

According to an embodiment, the operating method may include an operation of performing situation awareness, based on determining the designated shooting mode. According to an embodiment, the operating method may include an operation of generating a graphic element to be displayed on the display, based on the situation awareness. According to an embodiment, the operating method may include an operation of controlling the display to display the generated graphic element.

According to an embodiment, the operating method may include an operation of activating the first camera and the second camera, based on detecting execution of the application.

According to an embodiment, the operating method may include an operation of determining whether the electronic device is in a designated state, based on detecting the execution of the application. According to an embodiment, the operating method may include an operation of simultaneously activating the first camera and the second camera, based on determining that the electronic device is in the designated state.

According to an embodiment, the operating method may include an operation of mapping and storing metadata related to the graphic element onto the captured second image.

According to an embodiment, the operating method may include an operation of displaying the second image on a designated display. According to an embodiment, the operating method may include an operation of detecting a user input based on a designated graphic element in the image. According to an embodiment, the operating method may include an operation of importing metadata corresponding to the designated graphic element, based on the user input. According to an embodiment, the operating method may include an operation of executing a function corresponding to the metadata. According to an embodiment, the operating method may include an operation of displaying content corresponding to execution of the function on the display.

According to an embodiment, the first image may include a plurality of images respectively obtained from the first camera and the second camera. According to an embodiment, the first image may include an image not displayed on the display but used by the at least one processor to determine the shooting mode in a background.

According to an embodiment, the second image may be obtained from a camera operating as the designated camera among the first camera and the second camera. According to an embodiment, the second image may include an image displayed on a display different from the display that displays the graphic element.

According to an embodiment, the designated camera may include a camera positioned on the same surface as the display that displays the graphic element.

Various embodiments of the disclosure disclosed in the specification and drawings are provided as specific examples to easily explain the technical content of the disclosure and to facilitate understanding of the disclosure, and are not intended to limit the scope of the disclosure. Accordingly, the scope of the disclosure should be construed as including all changes or modifications derived based on the technical idea of the disclosure in addition to the embodiments disclosed herein.

The following numbered paragraphs provide additional examples of the present disclosure:
Paragraph 1. An electronic device comprising: a first camera; a second camera disposed on an opposite surface to the first camera; a first display; at least one processor comprising a processing circuit; and a memory, wherein the memory is configured to store instructions that, when executed by the at least one processor, cause the electronic device to: obtain at least one first image from at least one of the first camera and the second camera, based on executing an application; analyze the at least one first image; determine a designated shooting mode, based on analyzing the at least one first image; display a graphic element on the first display, based on determining the designated shooting mode; and capture a second image by using a designated camera, the designated camera being one of the first camera or the second camera. Optionally, the at least one first image is obtained based on executing an application. Optionally, when executed by the at least one processor, the instructions cause the electronic device to: determine the designated camera to operate in the designated shooting mode, based on a user input to capture an image.
Paragraph 2. The electronic device of Paragraph 1, wherein, when executed by the at least one processor, the instructions cause the electronic device to: detect identification information in the at least one first image, based on analyzing the at least one first image; and determine the designated shooting mode based on detecting the identification information.
Paragraph 3. The electronic device of Paragraph 2, wherein the identification information comprises an image object designated in advance to determine whether the designated shooting mode is executed, and wherein the designated image object comprises at least one of a designated face object or a designated identifier.
Paragraph 4. The electronic device of Paragraph 3, wherein the at least one first image comprises an image of the first camera and/or an image of the second camera, and wherein, when executed by the at least one processor, the instructions cause the electronic device to: compare each of the at least one first image with a preset image; and determine the designated shooting mode based on identifying the designated face object from the at least one first image.
Paragraph 5. The electronic device of Paragraph 3, wherein, when executed by the at least one processor, the instructions cause the electronic device to: determine the designated shooting mode based on identifying the designated identifier is included in an image obtained by the designated camera positioned on the same surface as the first display.
Paragraph 6. The electronic device of any of Paragraphs 1 to 3, wherein, when executed by the at least one processor, the instructions cause the electronic device to: determine the designated camera from among the first camera and the second camera (652, 820) based on determining the designated shooting mode.
Paragraph 7. The electronic device of any previous Paragraph (e.g. Paragraphs 1 to 3 or 6), wherein, when executed by the at least one processor, the instructions cause the electronic device to: deactivate a camera positioned on an opposite surface to the designated camera based on determining the designated camera to operate in the designated shooting mode; and wherein the deactivated camera is the other one of the first camera (651, 810) and the second camera.
Paragraph 8. The electronic device of any previous Paragraph (e.g. Paragraphs 1 to 3 or 6 to 7), comprising: a second display, wherein the first display is positioned on the same surface of the electronic device as the designated camera; wherein, when executed by the at least one processor, the instructions cause the electronic device to: display a preview of an image obtained by the designated camera on the second display; and wherein the second display is positioned on an opposite surface to the designated camera.
Paragraph 9. The electronic device of Paragraph 8, wherein the preview of an image obtained by the designated camera comprises a reflector and an image reflected by the reflector, and wherein the image reflected by the reflector comprises one or more objects corresponding to the electronic device, the first display, and the graphic element displayed on the first display.
Paragraph 10. The electronic device of Paragraph 8 or Paragraph 9, wherein, when executed by the at least one processor, the instructions cause the electronic device to: analyze whether the graphic element is included in a designated condition; process a designated function related to the graphic element displayed on the first display, based on the graphic element being included in the designated condition; and display a result of processing the function, based on the first display and/or the second display.
Paragraph 11. The electronic device of any of Paragraphs 8 to 10, wherein, when executed by the at least one processor, the instructions cause the electronic device to: detect a user input, based on an object corresponding to the graphic element in the preview; process a designated function related to the graphic element displayed on the first display, based on the user input; and display a result of processing the function, based on the first display and/or the second display.
Paragraph 12. The electronic device of any previous Paragraph, wherein, when executed by the at least one processor, the instructions cause the electronic device to: perform situation awareness based on determining the designated shooting mode; generate the graphic element based on the situation awareness; and control the first display to display the generated graphic element.
Paragraph 13. The electronic device of any previous Paragraph, wherein, when executed by the at least one processor, the instructions cause the electronic device to: map and store metadata related to the graphic element onto the captured second image.
Paragraph 14. The electronic device of any previous Paragraph, wherein, when executed by the at least one processor, the instructions cause the electronic device to: display the second image on a designated display of the electronic device; detect a user input based on a designated graphic element in the second image; import metadata corresponding to the designated graphic element, based on the user input; execute a function corresponding to the metadata; and display content corresponding to execution of the function on the first display.
Paragraph 15. The electronic device of any previous Paragraph, wherein the at least one first image comprises a plurality of images respectively obtained from the first camera and the second camera and is used by the at least one processor to determine the designated shooting mode without the plurality of images being displayed, and wherein the second image is obtained from the designated camera and is an image displayed on a display different from the first display that displays the graphic element.
Paragraph 16. The electronic device of any previous Paragraph, wherein, when executed by the at least one processor, the instructions cause the electronic device to activate the first camera and the second camera, based on detecting execution of the application.
Paragraph 17. The electronic device of Paragraph 16, wherein, when executed by the at least one processor, the instructions cause the electronic device to: determine whether the electronic device is in a designated state, based on detecting the execution of the application; and simultaneously activate the first camera and the second camera, based on determining that the electronic device is in the designated state.
Paragraph 18. The electronic device of any previous Paragraph, wherein the designated camera is a camera positioned on the same surface as the first display that displays the graphic element.
Paragraph 19. An operating method of an electronic device, the method comprising: obtaining at least one first image from at least one camera among a first camera of the electronic device and a second camera of the electronic device; analyzing the at least one first image; determining a designated shooting mode, based on analyzing the at least one first image; displaying a graphic element on a first display of the electronic device, based on determining the designated shooting mode; and capturing a second image by using a designated camera, the designated camera being one of the first camera or the second camera. Optionally, the at least one first image is obtained based on executing an application.
Paragraph 20. A non-transitory computer-readable medium storing instructions that, when executed by a processor of an electronic device, cause the processor to perform operations comprising: an operation of obtaining at least one first image from at least one camera among a first camera of the electronic device and a second camera of the electronic device; an operation of analyzing the at least one first image; an operation of determining a designated shooting mode, based on analyzing the at least one first image; an operation of displaying a graphic element on a first display of the electronic device, based on determining the designated shooting mode; and an operation of capturing a second image by using a designated camera, the designated camera being one of the first camera or the second camera. Optionally, the at least one first image is obtained based on executing an application.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first camera (651, 810);
a second camera (652, 820) disposed on an opposite surface to the first camera (651, 810);
a first display (660, 830, 840);
at least one processor (120) comprising a processing circuit; and
memory (130),
wherein the memory (130) storing instructions that, when executed by the at least one processor (120), cause the electronic device (101) to:
obtain at least one first image from at least one of the first camera (651, 810) and the second camera (652, 820);
analyze the at least one first image;
determine a designated shooting mode, based on analyzing the at least one first image;
display a graphic element on the first display (660, 830, 840), based on determining the designated shooting mode; and
capture a second image by using a designated camera, the designated camera being one of the first camera (651, 810) or the second camera (652, 820).

2. The electronic device of claim 1, wherein the instructions, when executed by the at least one processor (120), cause the electronic device to:
detect identification information in the at least one first image, based on analyzing the at least one first image; and
determine the designated shooting mode based on detecting the identification information.

3. The electronic device of claim 2, wherein the identification information comprises an image object designated in advance to determine whether the designated shooting mode is executed, and
wherein the designated image object comprises at least one of a designated face object or a designated identifier.

4. The electronic device of claim 3, wherein the at least one first image comprises an image of the first camera (651, 810) and/or an image of the second camera (652, 820), and
wherein the instructions, when executed by the at least one processor (120), cause the electronic device to:
compare each of the at least one first image with a preset image; and
determine the designated shooting mode based on identifying the designated face object from the at least one first image.

5. The electronic device of claim 3, wherein the instructions, when executed by the at least one processor (120), cause the electronic device to:
determine the designated shooting mode based on identifying the designated identifier is included in an image obtained by the designated camera positioned on the same surface as the first display.

6. The electronic device of claim 2, wherein the instructions, when executed by the at least one processor (120), cause the electronic device to:
determine the designated camera from among the first camera (651, 810) and the second camera (652, 820) based on determining the designated shooting mode.

7. The electronic device of claim 6, wherein the instructions, when executed by the at least one processor (120), cause the electronic device to:
deactivate a camera positioned on an opposite surface to the designated camera based on determining the designated camera to operate in the designated shooting mode; and
wherein the deactivated camera is the other one of the first camera (651, 810) and the second camera (652, 820).

8. The electronic device of claim 6, comprising:
a second display,
wherein the first display is positioned on the same surface as the designated camera;
wherein the instructions, when executed by the at least one processor (120), cause the electronic device to:
display a preview of an image obtained by the designated camera on the second display; and
wherein the second display is positioned on an opposite surface to the designated camera.

9. The electronic device of claim 8, wherein the preview of an image obtained by the designated camera comprises a reflector and an image reflected by the reflector, and
wherein the image reflected by the reflector comprises one or more objects corresponding to the electronic device, the first display, and the graphic element displayed on the first display.

10. The electronic device of claim 9, wherein the instructions, when executed by the at least one processor (120), cause the electronic device to:
analyze whether the graphic element is included in a designated condition;
process a designated function related to the graphic element displayed on the first display, based on the graphic element being included in the designated condition; and
display a result of processing the function, based on the first display and/or the second display.

11. The electronic device of claim 8, wherein the instructions, when executed by the at least one processor (120), cause the electronic device to:
detect a user input, based on an object corresponding to the graphic element in the preview;
process a designated function related to the graphic element displayed on the first display, based on the user input; and
display a result of processing the function, based on the first display and/or the second display.

12. The electronic device of claim 1, wherein the instructions, when executed by the at least one processor (120), cause the electronic device to:
perform situation awareness based on determining the designated shooting mode;
generate the graphic element based on the situation awareness; and
control the first display to display the generated graphic element.

13. The electronic device of claim 1, wherein the instructions, when executed by the at least one processor (120), cause the electronic device to:
map and store metadata related to the graphic element onto the captured second image.

14. The electronic device of claim 1, wherein the instructions, when executed by the at least one processor (120), cause the electronic device to:
display the second image on a designated display of the electronic device;
detect a user input based on a designated graphic element in the second image;
import metadata corresponding to the designated graphic element, based on the user input;
execute a function corresponding to the metadata; and
display content corresponding to execution of the function on the first display.

15. An operating method of an electronic device (101), the method comprising:
obtaining at least one first image from at least one camera among a first camera (651, 810) of the electronic device and a second camera (652, 820) of the electronic device;
analyzing the at least one first image;
determining a designated shooting mode, based on analyzing the at least one first image;
displaying a graphic element on a first display (660, 830, 840) of the electronic device, based on determining the designated shooting mode; and
capturing a second image by using a designated camera, the designated camera being one of the first camera (651, 810) or the second camera (652, 820).
